(19) Europäisches Patentamt
European Patent Office
Office européen des brevets

(11) EP 1 858 944 B1

(12) EUROPEAN PATENT SPECIFICATION

(45) Date of publication and mention of the grant of the patent:
**20.07.2011 Bulletin 2011/29**

(21) Application number: **06738469.3**

(22) Date of filing: **15.03.2006**

(51) Int Cl.:
***C08F 297/08*** (2006.01) ***C08F 4/659*** (2006.01)
***C08F 2/38*** (2006.01) ***C08F 10/02*** (2006.01)
***C08F 210/16*** (2006.01) ***D04H 3/03*** (2006.01)
***D04H 3/05*** (2006.01) ***D04H 3/14*** (2006.01)

(86) International application number:
**PCT/US2006/009407**

(87) International publication number:
**WO 2006/101929 (28.09.2006 Gazette 2006/39)**

(54) **THREE-DIMENSIONAL RANDOM LOOPED STRUCTURES MADE FROM INTERPOLYMERS OF ETHYLENE/ALPHA-OLEFINS AND USES THEREOF**

Aus Ethylen/alpha-Olefin-Interpolymeren hergestellte dreidimensionale Strukturen mit zufälligen Schlingen und Verwendungen dafür

Structures à boucles aléatoires tridimensinelles en interpolymères d'éthylene / alpha oléfines et leurs utilisations

(84) Designated Contracting States:
**AT BE BG CH CY CZ DE DK EE ES FI FR GB GR HU IE IS IT LI LT LU LV MC NL PL PT RO SE SI SK TR**

(30) Priority: **17.03.2005 PCT/US2005/008917**
**16.09.2005 US 718130 P**

(43) Date of publication of application:
**28.11.2007 Bulletin 2007/48**

(73) Proprietor: **Dow Global Technologies LLC**
**Midland, MI 48647 (US)**

(72) Inventor: **PATEL, Rajen, M.**
**Lake Jackson, Texas 77566 (US)**

(74) Representative: **Hatzmann, Martin et al**
**Vereenigde**
**Johan de Wittlaan 7**
**2517 JR Den Haag (NL)**

(56) References cited:
**EP-A- 0 875 609** **WO-A-03/040442**
**WO-A-2005/090425** **WO-A-2005/090426**
**WO-A-2005/090427** **US-B1- 6 230 901**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 858 944 B1

## Description

### FIELD OF THE INVENTION

The invention relates to random looped cushioning net structures made from an ethylene/α-olefin interpolymer, having desirable durability and cushioning property necessary for furniture, beds, vehicle seats, seacraft seats, methods of making the net structures and products made therefrom.

### BACKGROUND OF THE INVENTION

Thermoplastic elastomers, foamed urethane, non-elastic crimped fiber battings, resin-bonded or hardened fabric made of non-elastic crimped fibers etc. are currently used as cushioning materials for furniture, beds, trains, automobiles and so on.

A foamed-crosslinked urethane has, on the one hand, superior durability as a cushioning material but has, on the other hand, poor moisture and water permeability and accumulates heat to cause stuffiness. In addition, since it is not thermoplastic, recycling of the material is difficult and waste urethane is generally incinerated. However, incineration of urethane gives great damage to incinerator as well as necessitates removal of toxic gases, thus causing great expenses. For these reasons, waste urethane is often buried in the ground. This also poses different problems in that stabilization of the ground is difficult, with the result that burying site is limited to specific places as necessary costs rise. Moreover, although urethane exhibits excellent processability, chemicals used for its production may cause environmental pollution.

While there have been proposed net structures made from vinyl chloride for use for entrance mat, etc., they are not suitable as cushioning materials in view of the fact that plastic deformation easily occurs and toxic hydrogen halide is generated upon incineration.

Thermoplastic elastomers have a combination of good elasticity and high heat resistance; but they are typically relatively expensive.

Accordingly, there are needs to provide a cushioning net structure having good heat resistance, durability and cushioning function, and which is cost effective, and a method for the production thereof.

### SUMMARY

The aforementioned needs are met by various aspects of the invention. Provided herein is a cushioning net structure comprising a plurality of random loops, each of the random loop melt-bonded to at least one additional loop, wherein the random loops comprise a continuous fiber, and wherein the fiber comprises an ethylene/α-olefin interpolymer being a block interpolymer comprising at least 50 mole percent ethylene. In one embodiment, the ethylene/α-olefin interpolymer has a Mw/Mn from 1.7 to 3.5, at least one melting point, Tm, in degrees Celsius, and a density, d, in grams/cubio centimeter, wherein the numerical values of Tm and d correspond to the relationship:

$$T_m \geq 858.91 - 1825.3(d) + 1112.8(d)^2.$$

In another embodiment, the ethylene/α-olefin interpolymer has a Mw/Mn from 1.7 to 3.5, and is characterized by a heat of fusion, ΔH in J/g, and a delta quantity, ΔT, in degrees Celsius defined as the temperature difference between the tallest DSC peak and the tallest CRYSTAF peak, wherein the numerical values of ΔT and ΔH have the following relationships:

$$\Delta T > -0.1299(\Delta H) + 62.81 \text{ for } \Delta H \text{ greater than zero and up to 130 J/g,}$$

$$\Delta T \geq 48^\circ C \text{ for } \Delta H \text{ greater than 130 J/g ,}$$

wherein the CRYSTAF peak is determined using at least 5 percent of the cumulative polymer, and if less than 5 percent of the polymer has an identifiable CRYSTAF peak, then the CRYSTAF temperature is 30°C.

In one embodiment, the ethylene/α-olefin interpolymer is characterized by an elastic recovery, Re, in percent at 300 percent strain and 1 cycle measured with a compression-molded film of the ethylene/α-olefin interpolymer, and

has a density, d, in grams/cubic centimeter, wherein the numerical values of Re and d satisfy the following relationship when the ethylene/α-olefin interpolymer is substantially free of a cross-linked phase:

$$Re > 1481 - 1629(d).$$

In another embodiment, the ethylene/α-olefin interpolymer has a comonomer fraction of the fraction which elutes between 40°C and 130°C when fractionated using TREF, greater than or equal to the quantity C-0.20135T+21.07. where T is the TREF peak elution temperature, measured in °C.

In one embodiment, the ethylene/α-olefin interpolymer is characterized by a storage modulus at 25°C, G'(25°C), and a storage modulus at 100°C, G'(100°C), wherein the ratio of G'(25°C) to G'(100°C) is from 1:1 to 10:1.

In another embodiment, the ethylene/α-olefin interpolymer has at least one molecular fraction which elutes between 40°C and 130°C when fractionated using TREF, characterized in that the fraction has a block index of at least 0.5 and up to 1 and a molecular weight distribution, Mw/Mn, greater than 1.3. In another embodiment, the ethylene/α-olefin interpolymer has an average block index from 0.1 up to 1.0 and a molecular weight distribution, Mw/Mn, greater than 1.3.

In one embodiment, the α-olefin in the ethylene/α-olefin interpolymer is propylene,1-butene, 1-pentene,1-hexene, 1-octene or a combination thereof.

In some embodiments, the ethylene/α-olefin interpolymer has a melt index in a range from 0.1 to 2000 g/10 minutes, 1 to 1500 g/10 minutes, 2 to 1000 g/10 minutes, 5 to 500 g/10 minutes, 0.5 to 50 g/10 minutes or 1 to 30 g/10 minutes measured according to ASTM D-1238, Condition 190°C/2.16 kg. In some embodiments, the ethylene/α-olefin interpolymer has a melt index of 3 g/10 minutes or 5 g/10 minutes measured according to ASTM D-1238, Condition 190°C/2.16 kg.

In some embodiments, the cushioning net structure has a residual strain permanent set at 70°C of not more than 35%, 20 %, 15% or 10%. In one embodiment, the cushioning net structure has an apparent density in a range from 0.005 g/cm$^3$ to 0.30 g/cm$^3$, from 0.005 g/cm$^3$ to 0.20 g/cm$^3$, from 0.01 g/cm$^3$ to 0.10 g/cm$^3$ or from 0.01 g/cm$^3$ to 0.05 g/cm$^3$.

In another embodiment, the continuous fiber in the cushioning net structure has a fineness from 100 denier to 100000 denier, 200 denier to 100000 denier, 300 denier to 100000 denier, 400 denier to 100000 denier or 500 denier to 50000 denier.

In some embodiments, the random loop in the cushioning net structure has an average diameter that is not more than 100mm. In one embodiment, the average diameter of the random loop is in a range from 1mm to 50 mm, 2 mm to 40 mm or 2mm to 30 mm. In some embodiments, the cushioning net structure has a thickness not less than 5 mm, 3 mm or 2 mm.

In some embodiments, the fiber in the cushioning net structure comprises at least one other polymer, such as a thermoplastic elastomer, a non-elastic polymer or a combination thereof. In some embodiments, the fiber further comprises at least an additive, such as an antioxidant, a UV stabilizer, a pigment, a flame retardant, an antistatic agent or a combination thereof.

Also provided herein is a cushioning material, a vehicle seat or a furniture comprising the cushioning net structure described above and elsewhere herein.

Further provided are methods for producing a cushioning net structure comprising the steps of melting a starting material comprising an ethylene/α-olefin interpolymer, discharging the molten interpolymer to the downward direction from plural orifices to obtain loops of continuous fibers in a molten state, allowing respective loops to come into contact with one another and to be heat-bonded whereby to form a random loop structure as the loops are held between take-off units, and cooling the structure. The ethylene/α-olefin interpolymer used in the methods is described above and elsewhere herein.

Additional aspects of the invention and characteristics and properties of various embodiments of the invention become apparent with the following description.

## BRIEF DESCRIPTION OF THE DRAWINGS

Figure 1 shows the melting point/density relationship for the inventive polymers (represented by diamonds) as compared to traditional random copolymers (represented by circles) and Ziegler-Natta copolymers (represented by triangles).

Figure 2 shows plots of delta DSC-CRYSTAF as a function of DSC Melt Enthalpy for various polymers. The diamonds represent random ethylene/octene copolymers; the squares represent polymer examples 1-4; the triangles represent polymer examples 5-9; and the circles represent polymer examples 10-19. The "X" symbols represent polymer examples A*-F*.

Figure 3 shows the effect of density on elastic recovery for unoriented films made from inventive interpolymers (represented by the squares and circles) and traditional copolymers (represented by the triangles which are Dow AFFINITY® polymers). The squares represent inventive ethylene/butene copolymers; and the circles represent inventive ethylene/octene copolymers.

Figure 4 is a plot of octene content of TREF fractionated ethylene/1-octene copolymer fractions versus TREF elution temperature of the fraction for the polymer of Example 5 (represented by the circles) and comparative polymers E and F (represented by the "X" symbols). The diamonds represent traditional random ethylene/octene copolymers.

Figure 5 is a plot of octene content of TREF fractionated ethylene/1-octene copolymer fractions versus TREF elution temperature of the fraction for the polymer of Example 5 (curve 1) and for comparative F (curve 2). The squares represent Example F*; and the triangles represent Example 5.

Figure 6 is a graph of natural log storage modulus as a function of temperature for comparative ethylene/1-octene copolymer (curve 2) and ethylene/propylene - copolymer (curve 3) and for two ethylene/1-octene block copolymers of the invention made with differing quantities of chain shuttling agent (curves 1).

Figure 7 shows a plot of TMA (1mm) versus flex modulus for some inventive polymers (represented by the diamonds), as compared to some known polymers. The triangles represent Dow VERSIFY® polymers; the circles represent random ethylene/styrene copolymers; and the squares represent Dow AFFINITY® polymers.

Figure 8 shows one embodiment of the cushioning net structure provided herein.

Figure 9 shows an exemplary production process for the cushioning net structure.

Figure 10 is a plot of stress relaxation curves at 37 °C for exemplary polymers. Curve1 represents inventive interpolymer 19A (density: 0.878 g/cc; $I_2$: 0.9); curve 2 a Dow ENGAGE® 8100 polymer (density: 0.870 g/cc; $I_2$: 1.0).

Figure 11 shows a plot of one cycle 300% hysteresis data for exemplary polymers. Curve1 represents inventive interpolymer 19A; curve 2 represents a Dow ENGAGE® 8100 polymer.

## DETAILED DESCRIPTION OF THE INVENTION

### General Definitions

"Polymer" means a polymeric compound prepared by polymerizing monomers, whether of the same or a different type. The generic term "polymer" embraces the terms "homopolymer," "copolymer," "terpolymer" as well as "interpolymer."

"Interpolymer" means a polymer prepared by the polymerization of at least two different types of monomers. The generic term "interpolymer" includes the term "copolymer" (which is usually employed to refer to a polymer prepared from two different monomers) as well as the term "terpolymer" (which is usually employed to refer to a polymer prepared from three different types of monomers). It also encompasses polymers made by polymerizing four or more types of monomers.

The term "crystalline" if employed, refers to a polymer that possesses a first order transition or crystalline melting point (Tm) as determined by differential scanning calorimetry (DSC) or equivalent technique. The term may be used interchangeably with the term "semicrystalline". The term "amorphous" refers to a polymer lacking a crystalline melting point as determined by differential scanning calorimetry (DSC) or equivalent technique.

The term "ethylene/α-olefin interpolymer" generally refers to polymers comprising ethylene and an α -olefin having 3 or more carbon atoms. Ethylene comprises the majority mole fraction of the whole polymer, i.e., ethylene comprises at least 50 mole percent of the whole polymer. More preferably ethylene comprises at least 60 mole percent, at least 70 mole percent, or at least 80 mole percent, with the substantial remainder of the whole polymer comprising at least one other comonomer that is preferably an α-olefin having 3 or more carbon atoms. For many ethylene/octene copolymers, the preferred composition comprises an ethylene content greater than 80 mole percent of the whole polymer and an octene content of from 10 to 15, preferably from 15 to 20 mole percent of the whole polymer. In some embodiments, the ethylene/α-olefin interpolymers do not include those produced in low yields or in a minor amount or as a by-product of a chemical process. While the ethylene/α-olefin interpolymers can be blended with one or more polymers, the as-produced ethylene/α-olefin interpolymers are substantially pure and often comprise a major component of the reaction product of a polymerization process.

The ethylene/α-olefin interpolymers comprise ethylene and one or more copolymerizable α-olefin comonomers in polymerized form, characterized by multiple blocks or segments of two or more polymerized monomer units differing in chemical or physical properties. That is, the ethylene/α-olefin interpolymers are block interpolymers, preferably multi-block interpolymers or copolymers. The terms "interpolymer" and copolymer" are used interchangeably herein. In some embodiments, the multi-block copolymer can be represented by the following formula:

$$(AB)_n$$

where n is at least 1, preferably an integer greater than 1, such as 2, 3, 4, 5, 10, 15, 20, 30, 40, 50, 60, 70, 80, 90, 100, or higher, "A" represents a hard block or segment and "B" represents a soft block or segment. Preferably, As and Bs are linked in a substantially linear fashion, as opposed to a substantially branched or substantially star-shaped fashion. In other embodiments, A blocks and B blocks are randomly distributed along the polymer chain. In other words, the block copolymers usually do not have a structure as follows.

AAA-AA-BBB-BB

In still other embodiments, the block copolymers do not usually have a third type of block, which comprises different comonomer(s). In yet other embodiments, each of block A and block B has monomers or comonomers substantially randomly distributed within the block. In other words, neither block A nor block B comprises two or more sub-segments (or sub-blocks) of distinct composition, such as a tip segment, which has a substantially different composition than the rest of the block.

The multi-block polymers typically comprise various amounts of "hard" and "soft" segments. "Hard" segments refer to blocks of polymerized units in which ethylene is present in an amount greater than 95 weight percent, and preferably greater than 98 weight percent based on the weight of the polymer. In other words, the comonomer content (content of monomers other than ethylene) in the hard segments is less than 5 weight percent, and preferably less than 2 weight percent based on the weight of the polymer. In some embodiments, the hard segments comprises all or substantially all ethylene. "Soft" segments, on the other hand, refer to blocks of polymerized units in which the comonomer content (content of monomers other than ethylene) is greater than 5 weight percent, preferably greater than 8 weight percent, greater than 10 weight percent, or greater than 15 weight percent based on the weight of the polymer. In some embodiments, the comonomer content in the soft segments can be greater than 20 weight percent, greater than 25 weight percent, greater than 30 weight percent, greater than 35 weight percent, greater than 40 weight percent, greater than 45 weight percent, greater than 50 weight percent, or greater than 60 weight percent.

The soft segments can often be present in a block interpolymer from 1 weight percent to 99 weight percent of the total weight of the block interpolymer, preferably from 5 weight percent to 95 weight percent, from 10 weight percent to 90 weight percent, from 15 weight percent to 85 weight percent, from 20 weight percent to 80 weight percent, from 25 weight percent to 75 weight percent, from 30 weight percent to 70 weight percent, from 35 weight percent to 65 weight percent, from 40 weight percent to 60 weight percent, or from 45 weight percent to 55 weight percent of the total weight of the block interpolymer. Conversely, the hard segments can be present in similar ranges. The soft segment weight percentage and the hard segment weight percentage can be calculated based on data obtained from DSC or NMR. Such methods and calculations are disclosed in a concurrently filed U.S. Patent Application Serial No. 2006 0376835, in the name of Colin L.P. Shan, Lonnie Hazlitt, et. al. and assigned to Dow Global Technologies Inc.

The term "multi-block copolymer" or "segmented copolymer" refers to a polymer containing two or more chemically distinct regions or segments (referred to as "blocks") preferably joined in a linear manner, that is, a polymer having chemically differentiated units which are joined end-to-end with respect to polymerized ethylenic functionality, rather than in pendent or grafted fashion. In a preferred embodiment, the blocks differ in the amount or type of comonomer incorporated therein, the density, the amount of crystallinity, the crystallite size attributable to a polymer of such composition, the type or degree of tacticity (isotactic or syndiotactic), regio-regularity or regio-irregularity, the amount of branching, including long chain branching or hyper-branching, the homogeneity, or any other chemical or physical property. The multi-block copolymers are characterized by unique distributions of both polydispersity index (PDI or Mw/Mn), block length distribution, and/or block number distribution due to the unique process making of the copolymers. More specifically, when produced in a continuous process, the polymers desirably possess PDI from 1.7 to 2.9, preferably from 1.8 to 2.5, more preferably from 1.8 to 2.2, and most preferably from 1.8 to 2.1. When produced in a batch or semi-batch process, the polymers possess PDI from 1.0 to 2.9, preferably from 1.3 to 2.5, more preferably from 1.4 to 2.0, and most preferably from 1.4 to 1.8.

## Random Looped Structures

Provided herein are cushioning net structures containing, in some embodiments, three dimensional, loops made from continuous fibers that contain an ethylene/α-olefin interpolymer. The random looped structures, in some embodiments, three dimensional looped structures, are bonded with one another, wherein the loops are formed by allowing continuous fibers to bend to come in contact with one another in a molten state and be heat-bonded at most contact points. The random looped structures, such as three dimensional looped structures are useful in cushioning applications.

The net structures provided herein impart improved heat resistant durability and high elasticity in the cushioning applications. In certain embodiments, the heat resistant durability, measured, for example, in terms of residual strain permanent set at 70°C (described in detail in the following) of not more than 40%; in certain embodiments, not more

than 35%, 30%, 25%, 20%, 15%, 10% or 5%.

As used herein, the 70°C residual strain permanent set means a value in percent expressing a ratio of (the thickness of a specimen before treatment-the thickness of the specimen after treatment) to that before the treatment, as measured after (i) cutting out the specimen in a 15 cm × 15 cm size, (ii) compressing same to 50% thereof in the thickness direction, (iii) leaving the specimen in heat dry at 70°C for 22 hours, (iv) cooling the specimen to remove the strain caused by the compression and (v) leaving the specimen for a day.

The three dimensional cushioning net structure made from extruded fibers comprising the multiblock ethylene/α-olefin interpolymer disclosed here exhibits lower residual strain permanent set measured at 70°C compared to random ethylene/α-olefin interpolymer of similar density and melt index and having same type of comonomer. By "similar density and melt index" it meant that the density and melt index of each polymer are within 10%. Lower residual strain permanent set measured at 70°C is a desirable property in a cushioning applications which is currently typically fulfilled by relatively expensive polymers such as co-polyester elastomers (e.g. Hytrel® from DuPont).

Ethylene/α-Olefin Interpolymers

The ethylene/α-olefin interpolymers used in embodiments of the invention (also referred to as "inventive interpolymer" or "inventive polymer") comprise ethylene and one or more copolymerizable α-olefin comonomers in polymerized form, characterized by multiple blocks or segments of two or more polymerized monomer units differing in chemical or physical properties (block interpolymer), preferably a multi-block copolymer. The ethylene/ α-olefin interpolymers are characterized by one or more of the aspects described as follows.

In one aspect, the ethylene/α-olefin interpolymers used in embodiments of the invention have a $M_w/M_n$ from 1.7 to 3.5 and at least one melting point, $T_m$, in degrees Celsius and density, d, in grams/cubic centimeter, wherein the numerical values of the variables correspond to the relationship:

$$T_m > -2002.9 + 4538.5(d) - 2422.2(d)^2,$$

and preferably

$$T_m \geq -6288.1 + 13141(d) - 6720.3(d)^2,$$

and more preferably

$$T_m \geq 858.91 - 1825.3(d) + 1112.8(d)^2.$$

Such melting point/density relationship is illustrated in Figure 1. Unlike the traditional random copolymers of ethylene/α-olefins whose melting points decrease with decreasing densities, the inventive interpolymers (represented by diamonds) exhibit melting points substantially independent of the density, particularly when density is between 0.87 g/cc to 0.95 g/cc. For example, the melting point of such polymers are in the range of 110°C to 130°C when density ranges from 0.875 g/cc to 0.945 g/cc. In some embodiments, the melting point of such polymers are in the range of 115 °C to 125°C when density ranges from 0.875 g/cc to 0.945 g/cc.

In another aspect, the ethylene/α-olefin interpolymers comprise, in polymerized form, ethylene and one or more α-olefins and are characterized by a ΔT, in degree Celsius, defined as the temperature for the tallest Differential Scanning Calorimetry ("DSC") peak minus the temperature for the tallest Crystallization Analysis Fractionation ("CRYSTAF") peak and a heat of fusion in J/g, ΔH, and ΔT and ΔH satisfy the following relationships:

$$\Delta T > -0.1299(\Delta H) + 62.81,$$

and preferably

$$\Delta T \geq -0.1299(\Delta H) + 64.38,$$

and more preferably

$$\Delta T \geq -0.1299(\Delta H) + 65.95,$$

for ΔH up to 130 J/g. Moreover, ΔT is equal to or greater than 48°C for ΔH greater than 130 J/g. The CRYSTAF peak is determined using at least 5 percent of the cumulative polymer (that is, the peak must represent at least 5 percent of the cumulative polymer), and if less than 5 percent of the polymer has an identifiable CRYSTAF peak, then the CRYSTAF temperature is 30°C, and AH is the numerical value of the heat of fusion in J/g. More preferably, the highest CRYSTAF peak contains at least 10 percent of the cumulative polymer. Figure 2 shows plotted data for inventive polymers as well as comparative examples. Integrated peak areas and peak temperatures are calculated by the computerized drawing program supplied by the instrument maker. The diagonal line shown for the random ethylene octene comparative polymers corresponds to the equation ΔT = -0.1299 (ΔH) + 62.81.

In yet another aspect, the ethylene/α-olefin interpolymers have a molecular fraction which elutes between 40°C and 130°C when fractionated using Temperature Rising Elution Fractionation ("TREF"), characterized in that said fraction has a molar comonomer content higher, preferably at least 5 percent higher, more preferably at least 10 percent higher, than that of a comparable random ethylene interpolymer fraction eluting between the same temperatures, wherein the comparable random ethylene interpolymer contains the same comonomer(s), and has a melt index, density, and molar comonomer content (based on the whole polymer) within 10 percent of that of the block interpolymer. Preferably, the Mw/Mn of the comparable interpolymer is also within 10 percent of that of the block interpolymer and/or the comparable interpolymer has a total comonomer content within 10 weight percent of that of the block interpolymer.

In still another aspect, the ethylene/α-olefin interpolymers are characterized by an elastic recovery, Re, in percent at 300 percent strain and 1 cycle measured on a compression-molded film of an ethylene/α-olefin interpolymer, and has a density, d, in grams/cubic centimeter, wherein the numerical values of Re and d satisfy the following relationship when ethylene/α-olefin interpolymer is substantially free of a cross-linked phase:

$$Re > 1481 - 1629(d);$$

$$Re \geq 1491 - 1629(d);$$

and more preferably

$$Re \geq 1501 - 1629(d);$$

and even more preferably

$$Re \geq 1511 - 1629(d).$$

Figure 3 shows the effect of density on elastic recovery for unoriented films made from certain inventive interpolymers and traditional random copolymers. For the same density, the inventive interpolymers have substantially higher elastic recoveries.

In some embodiments, the ethylene/α-olefin interpolymers have a tensile strength above 10 MPa, preferably a tensile strength ≥ 11 MPa, more preferably a tensile strength ≥ 13MPa and/or an elongation at break of at least 600 percent, more preferably at least 700 percent, highly preferably at least 800 percent, and most highly preferably at least 900 percent at a crosshead separation rate of 11 cm/minute.

In other embodiments, the ethylene/α-olefin interpolymers have (1) a storage modulus ratio, G'(25°C)/G'(100°C), of from 1 to 50, preferably from 1 to 20, more preferably from 1 to 10; and/or (2) a 70°C compression set of less than 80 percent, preferably less than 70 percent, especially less than 60 percent, less than 50 percent, or less than 40 percent, down to a compression set of 0 percent.

In still other embodiments, the ethylene/α-olefin interpolymers have a 70°C compression set of less than 80 percent, less than 70 percent, less than 60 percent, or less than 50 percent. Preferably, the 70°C compression set of the interpolymers is less than 40 percent, less than 30 percent, less than 20 percent, and may go down to 0 percent.

In some embodiments, the ethylene/α-olefin interpolymers have a heat of fusion of less than 85 J/g and/or a

pellet blocking strength of equal to or less than 100 pounds/foot$^2$ (4800 Pa), preferably equal to or less than 50 lbs/ft$^2$ (2400 Pa), especially equal to or less than 5 lbs/ft$^2$ (240 Pa), and as low as 0 lbs/ft$^2$ (0 Pa).

In other embodiments, the ethylene/α-olefin interpolymers comprise, in polymerized form, at least 50 mole percent ethylene and have a 70°C compression set of less than 80 percent, preferably less than 70 percent or less than 60 percent, most preferably less than 40 to 50 percent and down to close zero percent.

In some embodiments, the multi-block copolymers possess a PDI fitting a Schultz-Flory distribution rather than a Poisson distribution. The copolymers are further characterized as having both a polydisperse block distribution and a polydisperse distribution of block sizes and possessing a most probable distribution of block lengths. Preferred multi-block copolymers are those containing 4 or more blocks or segments including terminal blocks. More preferably, the copolymers include at least 5, 10 or 20 blocks or segments including terminal blocks.

Comonomer content may be measured using any suitable technique, with techniques based on nuclear magnetic resonance ("NMR") spectroscopy preferred. Moreover, for polymers or blends of polymers having relatively broad TREF curves, the polymer desirably is first fractionated using TREF into fractions each having an eluted temperature range of 10°C or less. That is, each eluted fraction has a collection temperature window of 10°C or less. Using this technique, said block interpolymers have at least one such fraction having a higher molar comonomer content than a corresponding fraction of the comparable interpolymer.

In another aspect, the inventive polymer is an olefin interpolymer, preferably comprising ethylene and one or more copolymerizable comonomers in polymerized form, characterized by multiple blocks (i.e., at least two blocks) or segments of two or more polymerized monomer units differing in chemical or physical properties (blocked interpolymer), most preferably a multi-block copolymer, said block interpolymer having a peak (but not just a molecular fraction) which elutes between 40°C and 130°C (but without collecting and/or isolating individual fractions), characterized in that said peak, has a comonomer content estimated by infra-red spectroscopy when expanded using a full width/half maximum (FWHM) area calculation, has an average molar comonomer content higher, preferably at least 5 percent higher, more preferably at least 10 percent higher, than that of a comparable random ethylene interpolymer peak at the same elution temperature and expanded using a full width/half maximum (FWHM) area calculation, wherein said comparable random ethylene interpolymer has the same comonomer(s) and has a melt index, density, and molar comonomer content (based on the whole polymer) within 10 percent of that of the blocked interpolymer. Preferably, the Mw/Mn of the comparable interpolymer is also within 10 percent of that of the blocked interpolymer and/or the comparable interpolymer has a total comonomer content within 10 weight percent of that of the blocked interpolymer. The full width/half maximum (FWHM) calculation is based on the ratio of methyl to methylene response area [$CH_3/CH_2$] from the ATREF infra-red detector, wherein the tallest (highest) peak is identified from the base line, and then the PWHM area is determined. For a distribution measured using an ATREF peak, the FWHM area is defined as the area under the curve between $T_1$ and $T_2$, where $T_1$ and $T_2$ are points determined, to the left and right of the ATREF peak, by dividing the peak height by two, and then drawing a line horizontal to the base line, that intersects the left and right portions of the ATREF curve. A calibration curve for comonomer content is made using random ethylene/α-olefin copolymers, plotting comonomer content from NMR versus FWHM area ratio of the TREF peak. For this infra-red method, the calibration curve is generated for the same comonomer type of interest. The comonomer content of TREF peak of the inventive polymer can be determined by reverencing this calibration curve using its FWHM methyl: methylene area ratio [$CH_3/CH_2$] of the TREF peak.

Comonomer content may be measured using any suitable technique, with techniques based on nuclear magnetic resonance (NMR) spectroscopy preferred. Using this technique, said blocked interpolymers has higher molar comonomer content than a corresponding comparable interpolymer.

Preferably, for interpolymers of ethylene and 1-octene, the block interpolymer has a comonomer content of the TREF fraction eluting between 40 and 130°C greater than or equal to the quantity (- 0.2013) T + 20.07, more preferably greater than or equal to the quantity (-0.2013) T+ 21.07, where T is the numerical value of the peak elution temperature of the TREF fraction being compared, measured in °C.

Figure 4 graphically depicts an embodiment of the block interpolymers of ethylene and 1-octene where a plot of the comonomer content versus TREF elution temperature for several comparable ethylene/1-octene interpolymers (random copolymers) are fit to a line representing (-0.2013) T + 20.07 (solid line). The line for the equation (- 0.2013) T + 21.07 is depicted by a dotted line. Also depicted are the comonomer contents for fractions of several block ethylene/1-octene interpolymers of the invention (multi-block copolymers). All of the block interpolymer fractions have significantly higher 1-octene content than either line at equivalent elution temperatures. This result is characteristic of the inventive interpolymer and is believed to be due to the presence of differentiated blocks within the polymer chains, having both crystalline and amorphous nature.

Figure 5 graphically displays the TREF curve and comonomer contents of polymer fractions for Example 5 and comparative F to be discussed below. The peak eluting from 40 to 130°C, preferably from 60°C to 95°C for both polymers is fractionated into three parts, each part eluting over a temperature range of less than 10°C. Actual data for Example 5 is represented by triangles. The skilled artisan can appreciate that an appropriate calibration curve may be constructed for interpolymers containing different comonomers and a line used as a comparison fitted to the TREF values obtained

from comparative interpolymers of the same monomers, preferably random copolymers made using a metallocene or other homogeneous catalyst composition. Inventive interpolymers are characterized by a molar comonomer content greater than the value determined from the calibration curve at the same TREF elation temperature, preferably at least 5 percent greater, more preferably at least 10 percent greater.

In addition to the above aspects and properties described herein, the inventive polymers can be characterized by one or more additional characteristics. In one aspect, the inventive polymer is an olefin interpolymer, preferably comprising ethylene and one or more copolymerizable comonomer in polymerized form, characterized by multiple blocks or segments of two or more polymerized monomer units differing in chemical or physical properties (blocked interpolymer), most preferably a multi-block copolymer, said block interpolymer having a molecular fraction which elutes between 40°C and 130°C, when fractionated using TREF increments, characterized in that said fraction has a molar comonomers content higher, preferably at least 5 percent higher, more preferably at least 10, 15, 20 or 25 percent higher, than that of a comparable random ethylene interpolymer fraction eluting between the same temperatures, wherein said comparable random ethylene interpolymer comprises the same comonomer(s), preferably it is the same comonomer(s), and a melt index, density, and molar comonomer content (based on the whole polymer) within 10 percent of that of the blocked interpolymer. Preferably, the Mw/Mu of the comparable interpolymer is also within 10 percent of that of the blocked interpolymer and/or the comparable interpolymer has a total comonomer content within 10 weight percent of that of the blocked interpolymer.

Preferably, the above interpolymers are interpolymers of ethylene and at least one α-olefin, especially those interpolymers having a whole polymer density from 0.855 to 0.935 g/cm$^3$, and more especially for polymers having more than 1 mole percent comonomer, the blocked interpolymer has a comonomer content of the TREF fraction eluting between 40 and 130°C greater than or equal to the quantity (- 0.1356) T + 13.89, more preferably greater than or equal to the quantity (-0.1356) T+ 14.93, and most preferably greater than or equal to the quantity (-0.2013)T + 21.07, where T is the numerical value of the peak ATREF elution temperature of the TREF fraction being compared, measured in °C.

Preferably, for the above interpolymers of ethylene and at least one alpha-olefin especially those interpolymers having a whole polymer density from 0.855 0.935 g/cm$^3$, and more especially for polymers having more than 1 mole percent comonomer, the blocked interpolymer has a comonomer content of the TREF fraction eluting between 40 and 130°C greater than or equal to the quantity (- 0.2013) T + 20.07, more preferably greater than or equal to the quantity (-0.2013) T+ 21.07, where T is the numerical value of the peak elution temperature of the TREF fraction being compared, measured in °C.

In still another aspect, the inventive polymer is an olefin interpolymer, preferably comprising ethylene and one or more copolymerizable comonomers in polymerized form, characterized by multiple blocks or segments of two or more polymerized monomer units differing in chemical or physical properties (blocked interpolymers), most preferably a multi-block copolymer, said block interpolymer having a molecular fraction which elutes between 40°C and 130°C, when fractionated using TREF increments, characterized in that every fraction having a comonomer content of at least about 6 mole percent, has a melting point greater than about 100°C. For those fractions having a comonomer content from 3 mole percent to 6 mole percent, every fraction has a DSC melting point of 110°C or higher. More preferably, said polymer fractions, having at least 1 mol percent comonomer, has a DSC melting point that corresponds to the equation::

$$\text{Tm} \geq (-5.5926)(\text{mol percent comonomer in the fraction}) + 135.90.$$

In yet another aspect, the inventive polymer is an olefin interpolymer, preferably comprising ethylene and one or more copolymerizable comonomers in polymerized form, characterized by multiple blocks or segments of two or more polymerized monomer units differing in chemical or physical properties (blocked interpolymer), most preferably a multi-block copolymer, said block interpolymer having a molecular fraction which elutes between 40°C and 130°C, when fractionated using ATREF increments, characterized in that every fraction that has an ATREF elution temperature greater than or equal to 76°C, has a melt enthalpy (heat of fusion) as measured by DSC, corresponding to the equation:

$$\text{Heat of fusion (J/gm)} \leq (3.1718)(\text{ATREF elution temperature in Celsius}) - 136.58,$$

The inventive block interpolymers have a molecular fraction which elutes between 40C and 134°C, when fractionated using TREF increments, characterized in that every fraction that has an ATREF elution temperature between 40°C and less than 76°C, has a melt enthalpy (heat of fusion) as measured by DSC, corresponding to the equation:

$$\text{Heat of fusion (J/gm)} \leq (1.1312)(\text{ATREF elution temperature in Celsius}) + 22.97.$$

**ATREF Peak Comonomer Composition Measurement by Infra-Red Detector**

The comonomer composition of the TREF peak can be measured using an IR4 infrared detector available from Polymer Char, Valencia, Spain (http://www.polymerchar.com/).

The "composition mode" of the detector is equipped with a measurement sensor ($CH_2$) and composition sensor ($CH_3$) that are fixed narrow band infra-red filters in the region of 280ml-3000 $cm^{-1}$. The measurement sensor detects the methylene ($CH_2$) carbons on the polymer (which directly relates to the polymer concentration in solution) While the composition sensor detects the methyl ($CH_3$) groups of the polymer. The mathematical ratio of the composition signal ($CH_3$) divided by the measurement signal ($CH_2$) is sensitive to the comonomer content of the measured polymer in solution and its response is calibrated with known ethylene alpha-olefin copolymer standards.

The detector when used with an ATREF instrument provides both a concentration ($CH_2$) and composition ($CH_3$) signal response of the eluted polymer during the TREF process. A polymer specific calibration can be created by measuring the area ratio of the $CH_3$ to $CH_2$ for polymers with known comonomer content (preferably measured by NMR). The comonomer content of an ATREF peak of a polymer can be estimated by applying a the reference calibration of the ratio of the areas for the individual $CH_3$ and $CH_2$ response (i.e. area ratio $CH_3/CH_2$ versus comonomer content).

The area of the peaks can be calculated using a full width/half maximum (FWHM) calculation after applying the appropriate baselines to integrate the individual signal responses from the TREF chromatogram. The full width/half maximum calculations is based on the ratio of methyl to methylene response area [$CH_3$/CH2] from the ATREF infra-red detector, wherein the tallest (highest) peak is identified from the base line, and then the FWHM area is determined. For a distribution measured using an ATREF peak, the FWHM area is defined as the area under the curve between T1 and T2, where T1 and T2 are points determined, to the left and right of the ATREF peak, by dividing the peak height by two, and then drawing a line horizontal to the base line, that intersects the left and right portions of the ATREF curve.

The application of infra-red spectroscopy to measure the comonomer content of polymers in this ATREF-infra-red method is, in principle, similar to that of GPC/FTIR systems as described in the following references: Markovich, Ronald P.; Hazlitt, Lonnie G.; Smith, Linley; "Development of gel-permeation chromatography-Fourier transform infrared spectroscopy for characterization of ethylene-based polyolefin copolymers". Polymeric Materials Science and Engineering (1991), 63,98-100.; and Deslauriers, P.J.; Rohlfing, D.C.; Shieh, E.T.; "Quantifying short chain branching microstructures in ethylene-1-olefin copolymers using size exclusion chromatography and Fourier transform infrared spectroscopy (SEC-FTIR)", Polymer (2002), 43,59-170.

In other embodiments, the inventive ethylene/α-olefin interpolymer is characterized by an average block index, ABI, which is from 0.1 up to 1.0 and a molecular weight distribution, $M_w/M_n$, greater than 1.3. The average block index, ABI, is the weight average of the block index ("BI") for each of the polymer fractions obtained in preparative TREF from 20°C and 110°C, with an increment of 5°C :

$$ABI = \sum(w_i BI_i)$$

where $BI_i$ is the block index for the ith fraction of the inventive ethylene/α-olefin interpolymer obtained in preparative TREF, and $w_i$ is the weight percentage of the ith fraction

For each polymer friction, BI is defined by one of the two following equations (both of which give the same BI value):

$$BI = \frac{1/T_X - 1/T_{XO}}{1/T_A - 1/T_{AB}} \text{ or } BI = -\frac{LnP_X - LnP_{XO}}{LnP_A - LnP_{AB}}$$

where $T_x$ is the preparative ATREF elution temperature for the ith fraction (preferably expressed in Kelvin), Px is the ethylene mole fraction for the ith fraction, which can be measured by NMR or IR as described above. $P_{AB}$ is the ethylene mole fraction of the whole ethylene/α-olefin interpolymer (before fractionation), which also can be measured by NMR or IR. $T_A$ and $P_A$ are the ATREF elution temperature and the ethylene mole fraction for pure "hard segments" (which refer to the crystalline segments of the interpolymer). As a first order approximation, the $T_A$ and $P_A$ values are set to those for high density polyethylene homopolymer, if the actual values for the "hard segments" are not available. For

calculations performed herein, $T_A$ is 372°K, $P_A$ is 1.

$T_{AB}$ is the ATREF temperature for a random copolymer of the same composition and having an ethylene mole fraction of $P_{AB}$. $T_{AB}$ can be calculated from the following equation:

$$\ln P_{AB} = \alpha/T_{AB} + \beta$$

where α and β are two constants which can be determined by calibration using a number of known random ethylene copolymers. It should be noted that α and β may vary from instrument to instrument. Moreover, one would need to create their own calibration curve with the polymer composition of interest and also in a similar molecular weight range as the fractious. There is a slight molecular weight effect. If the calibration curve is obtained from similar molecular weight ranges, such effect would be essentially negligible. In some embodiments, random ethylene copolymers satisfy the following relationship:

$$\ln P = -237.83/T_{ATREF} + 0.639$$

Txo is the ATREF temperature for a random copolymer of the same composition and having an ethylene mole fraction of Px. Txo can be calculated from $\ln P_x = \alpha/Txo + \beta$. Conversely, $P_{xo}$ is the methylene mole fraction for a random copolymers of the same composition and having an ATREF temperature of $T_x$, which can be calculated from $\ln P_{xo} = \alpha/T_x+\beta$.

Once the block index (BI) for each preparative TREF fraction is obtained, the weight average block index, ABI, for the whole polymer can be calculated. In some embodiments, ABI is from 0.1 but less than 0.3 or from 0.1 to 0.3. In other embodiments, ABI is greater than 0.3 and up to 1.0. Preferably, ABI should be in the range of from 0.4 to 0.7, from 0.5 to 0.7, or from 0.6 to 0.9. In some embodiments, ABI is in the range of from 0.3 to 0.9, from 0.3 to 0.8, or from 0.3 to 0.7, from 0.3 to 0.6, from 0.3 to 0.5, or from 0.3 to 0.4. In other embodiments, ABI is in the range of from 0.4 to 1.0, from 0.5 to 1.0, or from 0.6 to 1.0, from 0.7 to 1.0, from 0.8 to 1.0, or from 0.9 to 1.0.

Another characteristic of the inventive ethylcne/α-olefin interpolymer is that the inventive ethylene/α-olefin interpolymer comprises at least one polymer fraction which can be obtained by preparative TREF, wherein the fraction has a block index greater than 0.1 and up to 1.0 and a molecular weight distribution, $M_w/M_n$, greater than 1.3. In some embodiments, the polymer fraction has a block index greater than 0.6 and up to 1.0, greater than 0.7 and up to 1.0, greater than 0.8 and up to 1.0, or greater than 0.9 and up to 1.0. In other embodiments, the polymer fraction has a block index greater than 0.1 and up to 1.0, greater than 0.2 and up to 1.0, greater than 0.3 and up to 1.0, or greater than 0.4 and up to 1.0. In still other embodiments, the polymer fraction has a block index greater than 0.1 and up to 0.5, greater than 0.2 and up to 0.5, greater than 0.3 and up to 0.5, or greater than 0.4 and up to 0.5. In yet other embodiments, the polymer traction has a block index greater than 0.2 and up to 0.9, greater than 0.3 and up to 0.8, greater than 0.4 and up to 0.7, or greater than 0.5 and up to 0.6.

For copolymers of ethylene and an α-olefin, the inventive polymers preferably possess (1) a PDI of at least 1.3, more preferably at least 1.5, at least 1.7, or at least 2.0, and most preferably at least 2.6, up to a maximum value of 5.0, more preferably up to a maximum of 3.5, and especially up to a maximum of 2.7; (2) a heat of fusion of 80 J/g or less; (3) an ethylene content of at least 50 weight percent; (4) a glass transition temperature, $T_g$, of less than -25°C, more preferably less than -30°C, and/or (5) one and only one $T_m$.

Further, the inventive polymers can have, alone or in combination with any other properties disclosed herein, a storage modulus, G', such that log (G') is greater than or equal to 400 kPa, preferably greater than or equal to 1.0 MPa, at a temperature of 100°C. Moreover, the inventive polymers possess a relatively flat storage modulus as a function of temperature in the range from 0 to 100°C (illustrated in Figure 6) that is characteristic of block copolymers, and heretofore unknown for an olefin copolymer, especially a copolymer of ethylene and one or more $C_{3-8}$ aliphatic α-olefins. (By the term "relatively flat" in this context is meant that log G' (in Pascals) decreases by less than one order of magnitude between 50 and 100°C, preferably between 0 and 100°C).

The inventive interpolymers may be further characterized by a thermomechanical analysis penetration depth of 1 mm at a temperature of at least 90°C as well as a flexural modulus of from 3 kpsi (20 MPa) to 13 kpsi (90 MPa). Alternatively, the inventive interpolymers can have a thermomechanical analysis penetration depth of 1 mm at a temperature of at least 104°C as well as a flexural modulus of at least 3 kpsi (20 MPa). They may be characterized as having an abrasion resistance (or volume loss) of less than 90 $mm^3$. Figure 7 shows the TMA (1 mm) versus flex modulus for the inventive polymers, as compared to other known polymers. The inventive polymers have significantly better flexibility-heat resistance balance than the other polymers.

Additionally, the ethylene/ α-olefin interpolymers can have a melt index $I_2$, from 0.01 to 2000 g/10 minutes,

preferably from 0.01 to 1000 g/10 minutes, more preferably from 0.01 to 500 g/10 minutes, and especially from 0.01 to 100 g/10 minutes. In certain embodiments, the ethylene/α-olefin interpolymers have a melt index, $I_2$, from 0.01 to 10 g/10 minutes, from 0.5 to 50 g/10 minutes, from 1 to 30 g/10 minutes, from l to 6 g/10 minutes or from 0.3 to 10 g/10 minutes. In certain embodiments, the melt index for the ethylene/α-olefin polymers is 1g/10 minutes, 3 g/10 minutes or 5 g/10 minutes.

The polymers can have molecular weights, $M_w$, from 1,000 g/mole to 5,000,000 g/mole, preferably from 1000 g/mole to 1,000,000, more preferably from 10,000 g/mole to 500,000 g/mole, and especially from 10,000 g/mole to 300,000 g/mole. The density of the inventive polymers can be from 0.80 to 0.99 g/$cm^3$ and preferably for ethylene containing polymers from 0.85 g/$cm^3$ to 0.97 g/$cm^3$. In certain embodiments, the density of the ethylene/α-olefin polymers ranges from 0.860 to 0.925 g/$cm^3$ or 0.867 to 0.910 gl$cm^3$.

The process of making the polymers has been disclosed in the following patent applications: U.S. Provisional Application No. 60/553,906, filed March 17, 2004; U.S. Provisional Application No. 60/662,937, filed March 17, 2005; U.S. Provisional Application No. 60/662,939, filed March 17, 2005; U.S. Provisional Application No. 60/5662938, filed March 17, 2005; PCT Application No. PCT/US2005/008916, filed March 17, 2005; PCT Application No. PCT/(US2005/008915, filed March 17, 2005; and PCT Application No. PCT/US2005/008917, filed March 17, 2005. For example, one such method comprises contacting ethylene and optionally one or more addition polymerizable monomers other than ethylene under addition polymerization conditions with a catalyst composition comprising:

the admixture or reaction product resulting from combining:

(A) a first olefin polymerization catalyst having a high comonomer incorporation index,
(B) a second olefin polymerization catalyst having a comonomer incorporation index less than 90 percent, preferably less than 50 percent, most preferably less than 5 percent of the comonomer incorporation index of catalyst (A), and
(C) a chain shuttling agent.

Representative catalysts and chain shuttling agent are as follows.
**Catalyst (A1)** is [N-(2,6-di(1-methylethyl)phenyl)amido)(2-isopropylphenyl)(α-naphthalen-2-diyl(6-pyridin-2-diyl)methane)]hafnium dimethyl, prepared according to the teachings of WO 03/40195, 2003US0204017, USSN 10/429,024, filed May 2, 2003, and WO 04/24740.

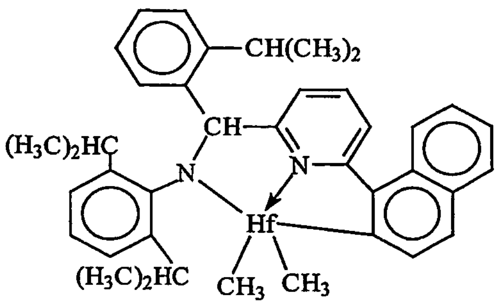

**Catalyst (A2)** is [N-(2,6-di(1-methylethyl)phenyl)amido)(2-methylphenyl)(1,2-phenylene-(6-pyridin-2-diyl) methane)]hafnium dimethyl, prepared according to the teachings of WO 03/40195, 2003US0204017, USSN 10/429,024, filed May 2, 2003, and WO 04/24740.

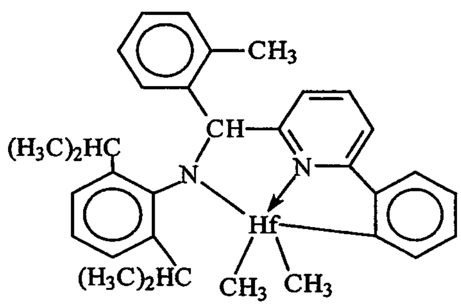

**Catalyst (A3)** is bis[N,N'''-(2,4,6-tri(methylphenyl)amido)ethylenediamine]hafnium dibenzyl.

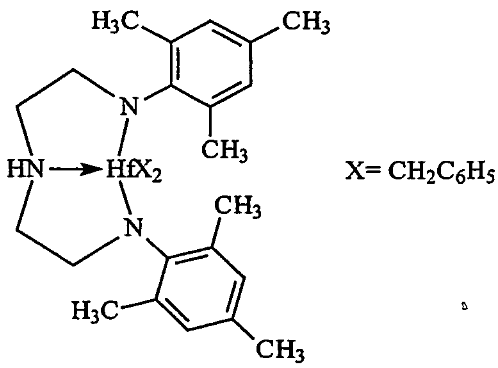

**Catalyst (A4)** is bis((2-oxoyl-3-(dibenzo-1H-pyrrole-1-yl)-5-(methyl)phenyl)-2-phenoxymethyl)cyclohexane-1,2-diyl zirconium (IV) dibenzyl, prepared substantially according to the teachings of US-A-2004/0010103.

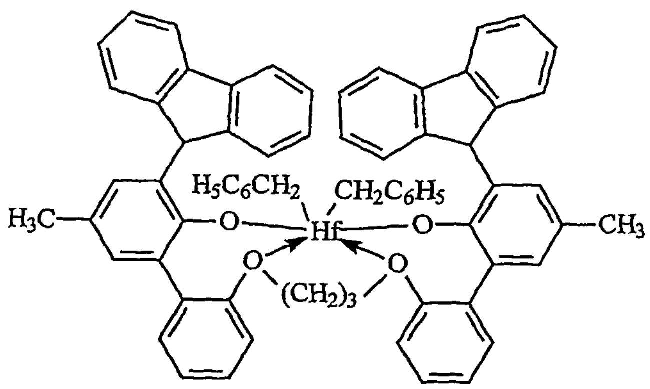

**Catalyst (B1)** is 1,2-bis-(3,5-di-t-butylphenylene)(1-(N-(1-methylethyl)immino)methyl)(2-oxoyl) zirconium dibenzyl

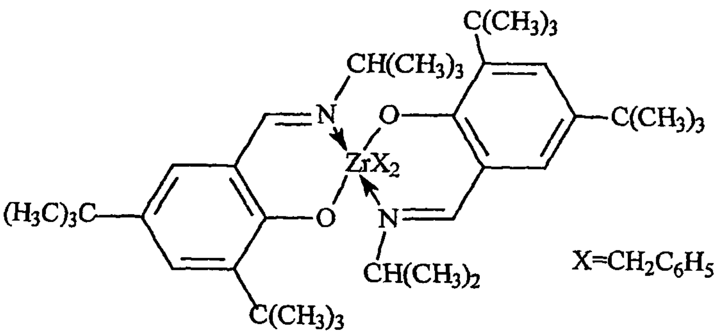

**Catalyst (B2)** is 1,2-bis-(3,5-di-t-butylphenylene)(1-(N(2-methylcyclohexyl)-immino)methyl)(2-oxoyl) zirconium dibenzyl

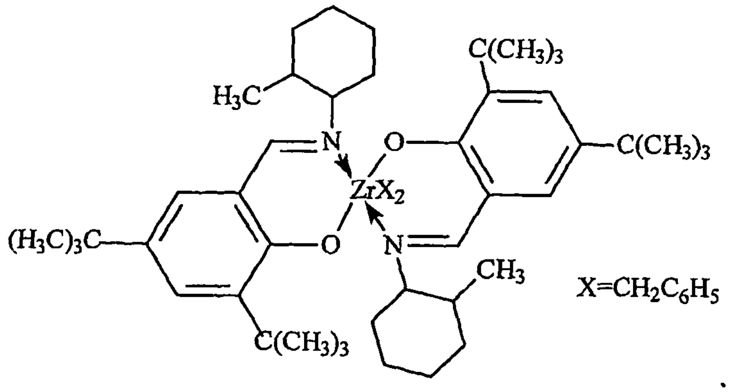

**Catalyst (C1)** is (t-butylarnido)dimethyl(3-N-pyrrolyl-1,2,3,3a,7a-η-inden-1-yl)silanetitanium dimethyl prepared substantially according to the techniques of USP 6,268,444:

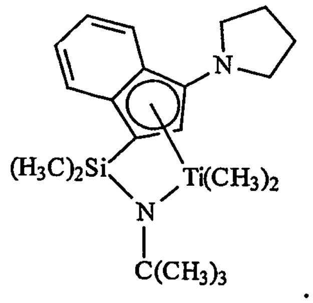

**Catalyst (C2)** is (t-butylamido)di(4-methylphenyl)(2-methyl-1,2,3,3a,7a-η-inden-1-yl)silanetitanium dimethyl prepared substantially according to the teachings of US-A-2003/004286:

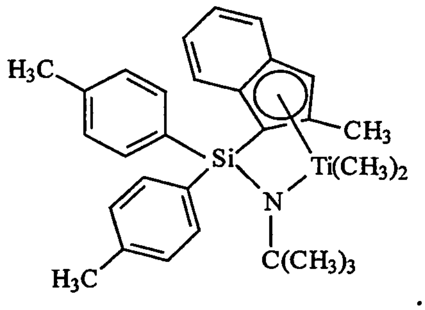

**Catalyst (C3)** is (t-butylamido)di(4-methylphenyl)(2-methyl-l,2,3,3a,8a-n-s-indacen-1-yl)silanetitanium dimethyl prepared substantially according to the teachings of US-A-2003/004286:

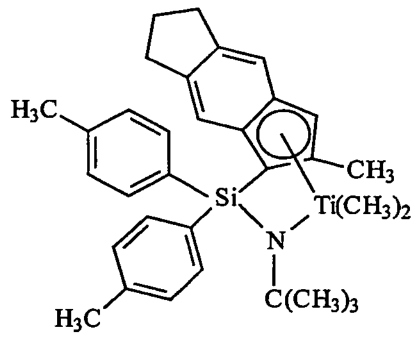

**Catalyst (D1)** is bis(dimethyldisiloxane)(indene-1-yl)zirconium dichloride available from Sigma-Aldrich:

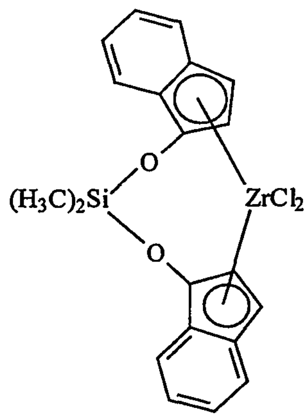

**Shuttling Agents** The shuttling agents employed include diethylzinc, di(i-butyl)zinc, di(n-hexyl)zinc, triethylaluminum, trioctylaluminum, triethylgallium, i-butylaluminum bis(dimethyl(t-butyl)siloxane), i-butylaluminum bis(di(trimethylsilyl)amide), n-octylaluminum di(pyridine-2-methoxide), bis(n-octadecyl)i-butylaluminum, i-butylaluminum bis(di(n-pentyl)amide), n-octylaluminum bis(2,6-di-t-butylphenoxide, n-octylaluminum di(ethyl(1-naphthyl)amide), ethylaluminum bis(t-butyldimethylsiloxide), ethylaluminum di(bis(trimethylsilyl)amide), ethylaluminum bis(2,3,6,7-dibenzo-1-azacycloheptaneamide), n-octylaluminum bis(2,3,6,7-dibenzo-1-azacycloheptaneamide), n-octylaluminum bis(dimethyl(t-butyl)siloxide, ethylzinc (2,6-diphenylphenoxide), and ethylzinc (t-butoxide).

Preferably, the foregoing process takes the form of a continuous solution process for forming block copolymers, especially multi-block copolymers, preferably linear multi-block copolymers of two or more monomers, more especially ethylene and a $C_{3-20}$ olefin or cycloolefin, and most especially ethylene and a $C_{4-20}$ $\alpha$-olefin, using multiple catalysts that are incapable of interconversion. That is, the catalysts are chemically distinct. Under continuous solution polymerization conditions, the process is ideally suited for polymerization of mixtures of monomers at high monomer conversions. Under these polymerization conditions, shuttling from the chain shuttling agent to the catalyst becomes advantaged compared to chain growth, and multi-block copolymers, especially linear multi-block copolymers are formed in high efficiency.

The inventive interpolymers may be differentiated from conventional, random copolymers, physical blends of polymers, and block copolymers prepared via sequential monomer addition, fluxional catalysts, anionic or cationic living polymerization techniques. In particular, compared to a random copolymer of the same monomers and monomer content at equivalent crystallinity or modulus, the inventive interpolymers have better (higher) heat resistance as measured by melting point, higher TMA penetration temperature, higher high-temperature tensile strength, and/or higher high-temperature torsion storage modulus as determined by dynamic mechanical analysis. Compared to a random copolymer containing the same monomers and monomer content, the inventive interpolymers have lower compression set, particularly at elevated temperatures, lower stress relaxation, higher creep resistance, higher tear strength, higher blocking resistance, faster setup due to higher crystallization (solidification) temperature, higher recovery (particularly at elevated temperatures), better abrasion resistance, higher retractive force, and better oil and filler acceptance.

The inventive interpolymers also exhibit a unique crystallization and branching distribution relationship. That is, the inventive interpolymers have a relatively large difference between the tallest peak temperature measured using

CRYSTAF and DSC as a function of heat of fusion, especially as compared to random copolymers containing the same monomers and monomer level or physical blends of polymers, such as a blend of a high density polymer and a lower density copolymer, at equivalent overall density. It is believed that this unique feature of the inventive interpolymers is due to the unique distribution of the comonomer in blocks within the polymer backbone. In particular, the inventive interpolymers may comprise alternating blocks of differing comonomer content (including homopolymer blocks). The inventive interpolymers may also comprise a distribution in number and/or block size of polymer blocks of differing density or comonomer content, which is a Schultz-Flory type of distribution. In addition, the inventive interpolymers also have a unique peak melting point and crystallization temperature profile that is substantially independent of polymer density, modulus, and morphology. In a preferred embodiment, the microcrystalline order of the polymers demonstrates characteristic spherulites and lamellae that are distinguishable from random or block copolymers, even at PDI values that are less than 1.7, or even less than 1.5, down to less than 1.3.

Moreover, the inventive interpolymers may be prepared using techniques to influence the degree or level of blockiness. That is the amount of comonomer and length of each polymer block or segment can be altered by controlling the ratio and type of catalysts and shuttling agent as well as the temperature of the polymerization, and other polymerization variables. A surprising benefit of this phenomenon is the discovery that as the degree of blockiness is increased, the optical properties, tear strength, and high temperature recovery properties of the resulting polymer are improved. In particular, haze decreases while clarity, tear strength, and high temperature recovery properties increase as the average number of blocks in the polymer increases. By selecting shuttling agents and catalyst combinations having the desired chain transferring ability (high rates of shuttling with low levels of chain termination) other forms of polymer termination are effectively suppressed. Accordingly, little if any β-hydride elimination is observed in the polymerization of ethylene/α-olefin comonomer mixtures according to embodiments of the invention, and the resulting crystalline blocks are highly, or substantially completely, linear, possessing little or no long chain branching.

Polymers with highly crystalline chain ends can be selectively prepared in accordance with embodiments of the invention. In elastomer applications, reducing the relative quantity of polymer that terminates with an amorphous block reduces the intermolecular dilutive effect on crystalline regions. This result can be obtained by choosing chain shuttling agents and catalysts having an appropriate response to hydrogen or other chain terminating agents. Specifically, if the catalyst which produces highly crystalline polymer is more susceptible to chain termination (such as by use of hydrogen) than the catalyst responsible for producing the less crystalline polymer segment (such as through higher comonomer incorporation, regio-error, or atactic polymer formation), then the highly crystalline polymer segments will preferentially populate the terminal portions of the polymer. Not only are the resulting terminated groups crystalline, but upon termination, the highly crystalline polymer forming catalyst site is once again available for reinitiation of polymer formation. The initially formed polymer is therefore another highly crystalline polymer segment. Accordingly, both ends of the resulting multi-block copolymer are preferentially highly crystalline.

The ethylene α-olefin interpolymers used in the embodiments of the invention are preferably interpolymers of ethylene with at least one $C_3$-$C_{20}$ α-olefin. Copolymers of ethylene and a $C_3$-$C_{20}$ α-olefin are especially preferred. The interpolymers may further comprise $C_4$-$C_{18}$ diolefin and/or alkenylbenzene. Suitable unsaturated comonomers useful for polymerizing with ethylene include, for example, ethylenically unsaturated monomers, conjugated or nonconjugated dienes, polyenes, alkenylbenzenes, etc. Examples of such comonomers include $C_3$-$C_{20}$ α -olefins such as propylene, isobutylene, 1-butene, 1-hexene, 1-pentene, 4-methyl-1-pentene, 1-heptene, 1-octene, 1-nonene, 1-decene, and the like. 1-Butene and 1-octene are especially preferred. Other suitable monomers include styrene, halo- or alkyl-substituted styrenes, vinylbenzocyclobutane, 1,4-hexadiene, 1,7-octadiene, and naphthenics (e.g., cyclopentene, cyclohexene and cyclooctene).

While ethylene/α-olefin interpolymers are preferred polymers, other ethylene/olefin polymers may also be used. Olefins as used herein refer to a family of unsaturated hydrocarbon-based compounds with at least one carbon-carbon double bond. Depending on the selection of catalysts, any olefin may be used in embodiments of the invention. Preferably, suitable olefins are $C_3$-$C_{20}$ aliphatic and aromatic compounds containing vinylic unsaturation, as well as cyclic compounds, such as cyclobutene, cyclopentene, dicyclopentadiene, and norbornene, including but not limited to, norbornene substituted in the 5 and 6 position with $C_1$-$C_{20}$ hydrocarbyl or cyclohydrocarbyl groups. Also included are mixtures of such olefins as well as mixtures of such olefins with $C_4$-$C_{40}$ diolefin compounds.

Examples of olefin monomers include, but are not limited to propylene, isobutylene, 1-butene, 1-pentene, 1-hexene, 1-heptene, 1-octene, 1-nonene, 1-decene, and 1-dodecene, 1-tetradecene, 1-hexadecene, 1-octadecene, 1-eicosene, 3-methyl-1-butene, 3-methyl-1-pentene, 4-methyl-1-pentene, 4,6-dimethyl-1-heptene, 4-vinylcyclohexene, vinylcyclohexane, norbomadiene, ethylidene norbornene, cyclopentene, cyclohexene, dicyclopentadiene, cyclooctene, $C_4$-$C_{40}$ dienes, including but not limited to 1,3-butadiene, 1,3-pentadiene, 1,4-hexadiene, 1,5-hexadiene, 1,7-octadiene, 1,9-decadiene, other $C_4$-$C_{40}$ α-olefins, and the like. In certain embodiments, the α-olefin is propylene, 1-butene, 1-pentene, 1-hexene, 1-octane or a combination thereof. Although any hydrocarbon containing a vinyl group potentially may be used in embodiments of the invention, practical issues such as monomer availability, cost, and the ability to conveniently remove unreacted monomer from the resulting polymer may become more problematic as the molecular

weight of the monomer becomes too high.

The polymerization processes described herein are well suited for the production of olefin polymers comprising monovinylidene aromatic monomers including styrene, o-methyl styrene, p-methyl styrene, t-butylstyrene, and the like. In particular, interpolymers comprising ethylene and styrene can be prepared by following the teachings herein. Optionally, copolymers comprising ethylene, styrene and a $C_3$-$C_{20}$ alpha olefin, optionally comprising a $C_4$-$C_{20}$ diene, having improved properties can be prepared.

Suitable non-conjugated diene monomers can be a straight chain, branched chain or cyclic hydrocarbon diene having from 6 to 15 carbon atoms. Examples of suitable non-conjugated dienes include, but are not limited to, straight chain acyclic dienes, such as 1,4-hexadiene, 1,6-octadiene, 1,7-octadiene, 1,9-decadiene, branched chain acyclic dienes, such as 5-methyl-1,4-hexadiene; 3,7-dimethyl-1,6-octadiene; 3,7-dimethyl-1,7-octadiene and mixed isomers of dihydromyricene and dihydroocinene, single ring alicyclic dienes, such as 1,3-cyclopentadiene; 1,4-cyclohexadiene; 1,5-cyclooctadiene and 1,5-cyclododecadiene, and multi-ring alicyclic fused and bridged ring dienes, such as tetrahydroindene, methyl tetrahydroindene, dicyclopentadiene, bicyclo-(2,2,1)-hepta-2,5-diene; alkenyl, alkylidene, cycloalkenyl and cycloalkylidene norbornenes, such as 5-methylene-2-norbomene (MNB); 5-propenyl-2-norbornene, 5-isopropylidene-2-norbornene, 5-(4-cyclopentenyl)-2-norbornene, 5-cyclohexylidene-2-norbomene, 5-vinyl-2-norbomene, and norbomadiene. Of the dienes typically used to prepare EPDMs, the particularly preferred dienes are 1,4-hexadiene (HD), 5-ethylidene-2-norbomene (ENB), 5-vinylidene-2-norbomene (VNB), 5-methylene-2-norbornene (MNB), and dicyclopentadiene (DCPD). The especially preferred dienes are 5-ethylidene-2-norbomene (ENB) and 1,4-hexadiene (HD).

One class of desirable polymers that can be made in accordance with embodiments of the invention are elastomeric interpolymers of ethylene, a $C_3$-$C_{20}$ α-olefin, especially propylene, and optionally one or more diene monomers. Preferred α-olefins for use in this embodiment of the present invention are designated by the formula $CH_2$=CHR*, where R* is a linear or branched alkyl group of from 1 to 12 carbon atoms. Examples of suitable α-olefins include, but are not limited to, propylene, isobutylene, 1-butene, 1-pentene, 1-hexene, 4-methyl-1-pentene, and 1-octene. A particularly preferred α-olefin is propylene. The propylene based polymers are generally referred to in the art as EP or EPDM polymers. Suitable dienes for use in preparing such polymers, especially multi-block EPDM type polymers include conjugated or non-conjugated, straight or branched chain-, cyclic- or polycyclic- dienes comprising from 4 to 20 carbons. Preferred dienes include 1,4-pentadiene, 1,4-hexadiene, 5-ethylidene-2-norbomene, dicyclopentadiene, cyclohexadiene, and 5-butylidene-2-norbomene. A particularly preferred diene is 5-ethylidene-2-norbomene.

Because the diene containing polymers comprise alternating segments or blocks containing greater or lesser quantities of the diene (including none) and α-olefin (including none), the total quantity of diene and α-olefin may be reduced without loss of subsequent polymer properties. That is, because the diene and α-olefin monomers are preferentially incorporated into one type of block of the polymer rather than uniformly or randomly throughout the polymer, they are more efficiently utilized and subsequently the crosslink density of the polymer can be better controlled. Such crosslinkable elastomers and the cured products have advantaged properties, including higher tensile strength and better elastic recovery.

In some embodiments, the inventive interpolymers made with two catalysts incorporating differing quantities of comonomer have a weight ratio of blocks formed thereby from 95:5 to 5:95. The elastomeric polymers desirably have an ethylene content of from 20 to 90 percent, a diene content of from 0.1 to 10 percent, and an α-olefin content of from 10 to 80 percent, based on the total weight of the polymer. Further preferably, the multi-block elastomeric polymers have an ethylene content of from 60 to 90 percent, a diene content of from 0.1 to 10 percent, and an α-olefin content of from 10 to 40 percent, based on the total weight of the polymer. Preferred polymers are high molecular weight polymers, having a weight average molecular weight (Mw) from 10,000 to 2,500,000, preferably from 20,000 to 500,000, more preferably from 20,000 to 350,000, and a polydispersity less than 3.5, more preferably less than 3.0, and a Mooney viscosity (ML (1+4) 125°C.) from 1 to 250. More preferably, such polymers have an ethylene content from 65 to 75 percent, a diene content from 0 to 6 percent, and an α-olefin content from 20 to 35 percent.

The ethylone/α-olefin interpolymers can be functionalized by incorporating at least one functional group in its polymer structure. Exemplary functional groups may include, for example, ethylenically unsaturated mono- and di-functional carboxylic acids, ethylenically unsaturated mono- and di-functional carboxylic acid anhydrides, salts thereof and esters thereof. Such functional groups may be grafted to an ethylene/ α -olefin interpolymer, or it may be copolymerized with ethylene and an optional additional comonomer to form an interpolymer of ethylene, the functional comonomer and optionally other comonomer(s). Means for grafting functional groups onto polyethylene are described for example in U.S. Patents Nos. 4,762,890, 4,927,888, and 4,950,541. One particularly useful functional group is malic anhydride.

The amount of the functional group present in the functional interpolymer can vary. The functional group can typically be present in a copolymer-type functionalized interpolymer in an amount of at least 1.0 weight percent, preferably at least 5 weight percent, and more preferably at least 7 weight percent. The functional group will typically be present in a copolymer-type functionalized interpolymer in an amount less than 40 weight percent, preferably less than 30 weight percent, and more preferably less than 25 weight percent.

## Fibers

In the embodiments of the invention, continuous fibers made from ethylene/α-olefin interpolymers with unique properties are provided. Methods of making various fibers of the ethylenel/α-olefin interpolymers are disclosed in U.S. Provisional Patent Application Serial No. 60/718,917, filed September 16, 2005. The overall density of the block copolymers for use herein is less than 0.93 g/cc, less than 0.91 g/cc or less than 0.90 g/cc.

In certain embodiments, the continuous fibers are made from a blend of an ethylene/ α-olefin interpolymer and at least one other polymer. The other polymer can be a thermoplastic elastomer, a thermoplastic non-elastic polymer or a combination thereof (polymer blend). In certain embodiments, the continuous fiber is a composite fiber of an ethylene/ α-olefin interpolymer and a thermoplastic elastomer, a composite fiber of an ethylene/α-olefin interpolymer, and a thermoplastic non-elastomer or a composite fiber of an ethylene/α-olefin interpolymer, a thermoplastic elastomer and a thermoplastic non-elastic polymer. The composite fiber includes, for example, sheath-core structure fiber, side-by-side structure fiber, eccentric sheath-core structure fiber and so on. In some embodiments, the three dimensional net structure may be composed of fibers made from an ethylene/α-olefin interpolymer, and at least one of: 1. fibers made from a thermoplastic elastomer, 2. fibers made from a thermoplastic non-elastic polymer or 3. a combination of fibers made from thermoplastic elastomer and fibers mage from thermoplastic non-elastomer.

Examples of a composite or laminate (integral bonding structure) of the net structure composed of an methylene/ α -olefin interpolymer fibers and thermoplastic non-elastic polymer fibers include a sandwich structure of an ethylene/ α -olefin interpolymer layer/non-elastomer layer/ethylene/ α -olefin interpolymer elastomer layer, a double structure of an ethylene/ α-olefin interpolymer layer/non-elastomer layer and a composite structure of matrix an ethylene/ α -olefin interpolymer containing a non-elastomer layer therein.

The net structure provided herein can be a laminate or a composite of various net structures made of loops having different sizes, different deniers, different compositions, different densities and so on as appropriately selected, so as to meet the desired property.

When present, the amount of the other polymer in the continuous fibers for use herein is less than 90%, 80%, 70%, 60%, 50%, 40%, 30%, 20%, 10%, 5% of the total weight of the polymer.

## Thermoplastic elastomer

Examples of the thermoplastic elastomers include polyester elastomers, polyurethane elastomers and polyamide elastomers. The polyester elastomer is exemplified by polyester-ether block copolymers containing a thermoplastic polyester as a hard segment and a polyalkylenediol as a soft segment and polyester-ester block copolymers containing a thermoplastic polyester as a hard segment and a fatty polyester as a soft segment. Specific examples of the polyester-ether block copolymer include tertiary block copolymers containing at least one dicarboxylic acid selected from aromatic dicarboxylic acids such as terephthalic acid, isophthalic acid, naphthalene 2,6-dicarboxylic acid, naphthalene 2,7-dicarboxylic acid and diphenyl 4,4'-dicarboxylic acid, alicyclic dicarboxylic acids such as 1,4-cyclohexanedicarboxylic acid, aliphatic dicarboxylic acids such as succinic acid, adipic acid, sebatic acid and dimer acid, and ester-forming derivatives thereof; at least one diol component selected from aliphatic diols such as 1,4-butanediol, ethylene glycol, trimethylene glycol, tetramethylene glycol, pentamethylene glycol and hexamethylene glycol, alicyclic diols such as 1,1-cyclohexanedimethanol and 1,4-cyclohexanedimethanol and ester-forming derivatives thereof; and at least one member selected from polyalkylene diols having an average molecular weight of 300-5000, such as polyethylene glycol, polypropylene glycol, polytetramethylene glycol and ethylene oxide-propylene oxide copolymer. Examples of the polyester-ester block copolymer include tertiary block copolymers containing at least one member each from the aforesaid dicarboxylic acids, the aforesaid diols and polyester diols having an average molecular weight of 300-3000 (e.g. polylactone). In consideration of heat-bonding, resistance to hydrolysis, stretchability and heat resistance, tertiary block copolymers comprise terephthalic acid and/or naphthalene 2,6-dicarboxylic acid as a dicarboxylic acid; 1,4-butanediol as a diol component; and polytetramethylene glycol as a polyalkylene glycol or polylactone as a polyester diol. In some embodiments, a polyester elastomer containing polysiloxane for a soft segment may be used. The aforementioned polyester elastomers may be used alone or in combination. Also, a blend or a copolymer of a polyester elastomer and a non-elastomer component may be used in the continuous fibers for the random looped, in some embodiments, the three dimensional looped structures provided herein.

Examples of the polyamide elastomer include block copolymers containing nylon 6, nylon 66, nylon 610, nylon 612, nylon 11, nylon 12 or copolymer nylon thereof as a skeleton for a hard segment and at least one polyalkylenediol having an average molecular weight of 300-5000, such as polyethylene glycol, polypropylene glycol, polytetramethylene glycol or ethylene oxide-propylene oxide copolymer as a soft segment, which may be used alone or in combination. Also, a blend or a copolymer of a polyamide elastomer and a non-elastomer component may be used in the continuous fibe.

A typical example of the polyurethane elastomer is a polyurethane elastomer prepared by chain-extending a prepolymer having isocyanate groups at both ends, which has been obtained by reacting (A) polyether and/or polyester

having a number average molecular weight of 1000-6000 and having a hydroxyl group at the terminal and (B) polyisocyanate containing an organic diisocyanate as a main component, with (C) polyamine containing diamine as a main component, in or without a conventional solvent (e.g. dimethylformamide, dimethylacetamide). Examples of the polyester and polyether (A) include polyester copolymerized with polybutylene adipate and polyalkylenediols such as polyethylene glycol, polypropylene glycol, polytetramethylene glycol and ethylene oxide-propylene oxide copolymer having an average molecular weight of 1000-6000, preferably 1300-5000; some examples of polyisocyanate (B) include conventionally-known polyisocyanate and isocyanate mainly composed of diphenylmethane 4,4'-diisocyanate and added with a small amount of known triisocyanate etc. on demand; and examples of polyamine (C) include known diamines such as ethylene diamine and 1,2-propylene diamine, added with a small amount of triamine or tetramine on demand. These polyurethane elastomers may be used alone or in combination.

In certain embodiments, the elastomers are polyester elastomer, polyamide elastomer and polyurethane elastomer which are obtained by block copolymerization of a polyether glycol, polyester glycol or polycarbonate glycol having a molecular weight of 300-5000 as a soft segment. By the use of a thermoplastic elastomer, reproduction by remelting becomes possible, thus facilitating recycled use.

In certain embodiments, the melting point of the thermoplastic elastomer for use herein is not less than 170°C and not more than 350°, in other embodiments, not less than 140°C and not more than 300°, in which range heat-resisting durability can be satisfactorily maintained.

When present, the amount of the thermoplatic elastomer in the continuous fibers for use herein is less than 90%, 80%, 70%, 60%, 50%, 40%, 30%, 20%, 10%, 5% of the total weight of the polymer.

**Thermoplastic non-elastic polymer**

In certain embodiments, a thermoplastic non-elastic polymer optionally used with the ethylene/α-olefin interpolymer as a starting material for the continuous fiber is exemplified by polyester, polyamide, polyurethane and so on.

The polyester resin is exemplified by polyethylene terephthalate (PET), polyethylene naphthalate (PEN), polycyclohexylenedimethylene terephthalate (PCHDT), polycyclohexylenedimethylene naphthalate (PCHDN), polybutylene terephthalate (PBT), polybutylene naphthalate (PBN), copolymers thereof and so on.

The polyamide resin is exemplified by polycaprolactam (NY6), polyhexamethylene adipamide (NY66), polyhexamethylene sebacamide (NY6-10), copolymers thereof and so on.

The melting point of the thermoplastic non-elastomer to be used in certain embodiments, is in a range from 150°C to 350°C, in other embodiments, from 200°C to 300°C, in other embodiments, from 240°C to 300°C.

When present, the amount of the thermoplatic non-elastic polymer in the continuous fibers for use herein is less than 70%, 60%, 50%, 40%, 30%, 20%, 10%, 5% of the total weight of the polymer.

**Additives**

Optionally, the net structures provided herein can contain at least one additive for the purposes of improving and/or controlling the processibility, appearance, physical, chemical, and/or mechanical properties thereof. Any polymer additive known to a person of ordinary skill in the art may be used in the cushioning net structure s provided herein. Non-limiting examples of suitable additives include antioxidants, UV stabilizers, colorants or pigments, flame retardants, antistatic agents, and combinations thereof. The total amount of the additives can range from greater than 0 to 30%, from 0.001 % to 20%, from 0.01 % to 20%, from 0.1 % to 20%, from 1 % to 15%, or from 1 % to 10% of the total weight of the polymer. Some polymer additives have been described in Zweifel Hans et al., "Plastics Additives Handbook," Hanser Gardner Publications, Cincinnati, Ohio, 5th edition (2001).

In formulating the continuous fibers provided herein, it is desirable that each of the additives are compatible with the ethylene/α-olefin interpolymer used herein so that the additives do not phase separate from the ethylenc/α-olefin interpolymer, particularly in molten state. In general, the compatibility of an additive with the ethylene/α-olefin interpolymer increases with a decrease in the difference between their solubility parameters such as Hildebrand solubility parameters. Some Hildebrand solubility parameters are tabulated for solvents in: Barton, A. F. M., Handbook of Solubility and Other Cohesion Parameters, 2nd Ed. CRC Press, Boca Raton, FL (1991); for monomers and representative polymers in Polymer Handbook, 3rd Ed., J. Brandrup & E. H. Immergut, Eds. John Wiley, NY, pages 519-557 (1989); and for many commercially available polymers in Barton, A. F. M., Handbook of Polymer-Liquid Interaction Parameters and Solubility Parameters, CRC Press, Boca Raton, FL (1990). The Hildebrand solubility parameter for a copolymer may be calculated using a volume fraction weighting of the individual Hildebrand solubility parameters for each monomer containing the copolymer, as described for binary copolymers in Barton A. F. M., Handbook of Solubility Parameters and Other Cohesion Parameters, CRC Press, Boca Raton, page 12 (1990). The magnitude of the Hildebrand solubility parameter for polymeric materials is also known to be weakly dependent upon the molecular weight of the polymer, as noted in Barton, pages 446-448. Therefore, there will be a preferred molecular weight range for a given ethylane/α-olefin

interpolymer, and adhesive strength may be additionally controlled by manipulating the molecular weight of the ethylene/α-olefin interpolymer or the additives. In some embodiments, the absolute difference in Hildebrand solubility parameter between the ethylene/α-olefin interpolymer and an additive such as the antioxidant falls within the range of greater than 0 to 10 $MPa^{1/2}$, 0.1 to 5 $MPa^{1/2}$, 0.5 to 4.0 $MPa^{1/2}$, or 1 to 3.0 $MPa^{1/2}$.

The antioxidant or a stabilizer for use in the continuous fibers provided herein includes any antioxidant known to a person of ordinary skill in the art. Non-limiting examples of suitable antioxidants include amine-based antioxidants such as alkyl diphenylamines, phenyl-α- naphthylamine, alkyl or aralkyl substituted phenyl-α-naphthylamine, alkylated p-phenylene diamines, tetramethyl-diaminodiphenylamine and the like; and hindered phenol compounds such as 2,6-di-t-butyl-4-methylphenol; 1,3,5-trimethyl-2,4,6-tris(3',5',di-t-butyl-4'-hydroxybenzyl)benzene; tetrakis[(methylene(3,5-di-t-butyl-4-hydroxybydrocinnamate)]methane (*e.g.*, IRGANOX™ 1010, from Ciba Geigy, New York); octadecyl-3,5-di-t-butyl-4-hydroxycinnamate (*e.g.*, IRGANOX™ 1076, commercially available from Ciba Geigy), Cyanox®1790, tris(2,4-ditert-butylphenyl)phosphite (Irgafos 168), PEPQ (trade name of Sandoz Chemical) and combinations thereof. Where used, the amount of the antioxidant in the continuous fiber can be from greater than 0 to 10 wt%, from 0.1 to 5 wt%, or from 0.5 to 2 wt% of the total weight of the interpolymer.

In certain embodiments, the cushioning net structures disclosed herein contain an UV stabilizer that may prevent or reduce the degradation of the net structure by UV radiations. Any UV stabilizer known to a person of ordinary skill in the art may be used herein. Non-limiting examples of suitable UV stabilizers include benzophenones, benzotriazoles, Aryl esters, Oxanilides, Acrylic esters, Formamidine carbon black, hindered amines, nickel quenchers, hindered amines, phenolic antioxidants, metallic salts, zinc compounds and combinations thereof. Where used, the amount of the UV stabilizer in the composition can be from greater than 0 to 10 wt%, from 0.1 to 5 wt%, or from 0.5 to 2 wt% of the total weight of the interpolymer.

In further embodiments, the continuous fibers for use herein optionally contain a colorant or pigment that can change the look of the net structure to human eyes. Any colorant or pigment known to a person of ordinary skill in the art may be added to the fibers provided herein. Non-limiting examples of suitable colorants or pigments include inorganic pigments such as metal oxides such as iron oxide, zinc oxide, and titanium dioxide, mixed metal oxides, carbon black, organic pigments such as anthraquinones, anthanthrones, azo and monoazo compounds, arylamides, benzimidazolones, BONA lakes, diketopyrrolo-pyrroles, dioxazines, disazo compounds, diarylide compounds, flavanthrones, indanthrones, isoindolinones, isoindolines, metal complexes, monoazo salts, naphthols, b-naphthols, naphthol AS, naphthol lakes, perylenes, perinones, phthalocyanines, pyranthrones, quinacridones, and quinophthalones, and combinations thereof. Further examples of suitable colorants or pigments include inorganic pigments such as titanium dioxide and carbon black, phthalocyanine pigments, and other organic pigments such as IRGAZIN®, CROMOPHTAL®, MONASTRAL®, CINQUASIA®, IRGALITE®, ORASOL®, all of which are available from Ciba Specialty Chemicals, Tarrytown, NY. Where used, the amount of the colorant or pigment in the fiber can be from greater than 0 to 10 wt%, from 0.1 to 5 wt%, or from 0.5 to 2 wt% of the total weight of the interpolymer. Where used, the amount of the colorant or pigment in the cushioning net structure can be from greater than 0 to 10 wt%, from 0.1 to 5 wt%, or from 0.25 to 2 wt% of the total weight of the cushioning net structure. Some colorants have been described in Zweifel Hans et al., "Plastics Additives Handbook," Hanser Gardner Publications, Cincinnati, Ohio, 5th edition, Chapter 15, pages 813-882 (2001).

## General Methods for Preparing a Cushioning Net Structure

The cushioning net structures provided herein can be prepared by any method known in the art, exemplary of such as methods are described in U.S. Patent Nos. 5,639,543 and 6,378,150.

As shown in Figure 8, an exemplary cushioning net structure provided herein has a three-dimensional random loop structure 1 afforded by a multitude of loops 3 formed by allowing continuous fibers 2 of 100 denier or above, to wind to permit respective loops to come in contact with one another in a molten state and to be heat-bonded at most of the contact points 4. Even when a great stress to cause significant deformation is given, this structure absorbs the stress with the entire net structure composed of three-dimensional random loops melt-integrated, by deforming itself; and once the stress is lifted, rubber resilience of the elastomer manifests itself to allow recovery to the original shape of the structure. When a net structure composed of continuous fibers made from a known non-elastic polymer is used as a cushioning material, plastic deformation is developed and the recovery cannot be achieved, thus resulting in poor heat-resisting durability. When the fibers are not melt-bonded at contact points, the shape cannot be retained and the structure does not integrally change its shape, with the result that a fatigue phenomenon occurs due to the concentration of stress, thus unbeneficially degrading durability and deformation resistance. It certain embodiments, melt-bonding is the state where all contact points are melt-bonded.

An exemplary method for producing a cushioning net structure is described in Figure 9. The method includes the steps of (a) heating a molten ethylene/α-olefin interpolymer, at a temperature 10°-80° C higher than the melting point of the interpolymer in a typical melt-extruder (b) discharging the molten interpolymer to the downward direction from a nozzle (5) with plural orifices to form loops by allowing the fibers to fall naturally. The interpolymer may be used in

combination with a thermoplastic elastomer, thermoplastic non-elastic polymer or a combination thereof, as occasion demands. The distance between the nozzle surface and take-off conveyors (7) installed on a cooling unit for solidifying the fibers, melt viscosity of the interpolymer, diameter of orifice and the amount to be discharged are the elements which decide loop diameter and fineness of the fibers. Loops (3) are formed by holding and allowing the delivered molten fibers (2) to reside between a pair of take-off conveyors set on a cooling unit (6) (the distance therebetween being adjustable), bringing the loops thus formed into contact with one another by adjusting the distance between the orifices to this end such that the loops in contact are heat-bonded as they form a three-dimensional random loop structure. Then, the continuous fibers, wherein contact points have been heat-bonded as the loops form a three-dimensional random loop structure, are continuously taken into a cooling unit for solidification to give a net structure. Thereafter, the structure is cut into a desired length and shape and processed into a laminate as necessary for use as a cushioning material. The method is characterized in that an interpolymer is melted and heated at a temperature 10° -80° C higher than the melting point of the interpolymer and delivered to the downward direction in a molten state from a nozzle having plural orifices. When the interpolymer is discharged at a temperature less than 10° C higher than the melting point, the fiber delivered becomes cool and less fluidic to result in insufficient heat-bonding of the contact points of fibers.

Properties, such as, the loop diameter and fineness of the fibers constituting the cushioning net structure provided herein depend on the distance between the nozzle surface and the take-off conveyor installed on a cooling unit for solidifying the interpolymer, melt viscosity of the interpolymer, diameter of orifice and the amount of the interpolymer to be delivered therefrom. For example, a decreased amount of the interpolymer to be delivered and a lower melt viscosity upon delivery result in smaller fineness of the fibers and smaller average loop diameter of the random loop. On the contrary, a shortened distance between the nozzle surface and the take-off conveyor installed on the cooling unit for solidifying the interpolymer results in a slightly greater fineness of the fiber and a greater average loop diameter of the random loop. These conditions in combination afford the desirable fineness of the continuous fibers of from 100 denier to 100000 denier and an average diameter of the random loop of not more than 100 mm, 10-50 or 2-25 mm. By adjusting the distance to the aforementioned conveyor, the thickness of the structure can be controlled while the heat-bonded net structure is in a molten state and a structure having a desirable thickness and flat surface formed by the conveyors can be obtained. Too great a conveyor speed results in failure to heat-bond the contact points, since cooling proceeds before the heat-bonding. On the other hand, too slow a speed can cause higher density resulting from excessively long dwelling of the molten material. In some embodiments the distance to the conveyor and the conveyor speed should be selected such that the desired apparent density of 0.005-0.1 g/cm$^3$ or 0.01-0.05 g/cm$^3$ can be achieved.

## Uses of the Net Structure

The net structure provided herein is used in various cushioning applications known in the art, including, but not limited to wadding for a surface layer, a middle layer cushioning material, for use in vehicle seats, seacraft seats, beds, sofas, chairs, and furniture.

When the net structure provided herein is used as a cushioning material, the polymer to be used, fineness, loop diameter and bulk density should be selected depending on the purpose of use and where it is to be used. For example, when the structure is used for a wadding for a surface layer, low density, small fineness and small loop diameter are desirable so as to impart a soft touch, adequate sinking and expansion with tension; when used as a middle layer cushioning material, medium density, great fineness and somewhat great loop diameter are desirable to decrease resonance vibration, which in turn improve shape retention with the help of adequate hardness and linear change in hysteresis under compression and keep durability. In addition, the structure of the present invention can be used for vehicle seats, seacraft seats, beds, chairs, furniture and so on upon forming the structure into a suitable shape with the use of a mold etc. to the degree the three-dimensional structure is not impaired, and covering same with an outerwrap.

It is also possible to use the structure together with other cushioning materials, such as hardened cushioning material or non-woven fabric made of an assembly of short fibers, to achieve the desired property to meet the desired use. Additionally, flame proof finish, insecticidal-antimicrobial finish, resistance to heat and water, oil-repellency, color, fragrance and so on can be imparted during an optional stage from preparation of polymer to processing thereof into a molded article.

The following examples are presented to exemplify embodiments of the invention but are not intended to limit the invention to the specific embodiments set forth. Unless indicated to the contrary, all parts and percentages are by weight. All numerical values are approximate. When numerical ranges are given, it should be understood that embodiments outside the stated ranges may still fall within the scope of the invention. Specific details described in each example should not be construed as necessary features of the invention.

## EXAMPLES

### Testing Methods

In the examples that follow, the following analytical techniques are employed:

### GPC Method for Samples 1-4 and A-C

An automated liquid-handling robot equipped with a heated needle set to 160°C is used to add enough 1,2,4-trichlorobenzene stabilized with 300 ppm Ionol to each dried polymer sample to give a final concentration of 30 mg/mL. A small glass stir rod is placed into each tube and the samples are heated to 160°C for 2 hours on a heated, orbital-shaker rotating at 250 rpm. The concentrated polymer solution is then diluted to 1 mg/ml using the automated liquid-handling robot and the heated needle set to 160°C.

A Symyx® Rapid GPC system is used to determine the molecular weight data for each sample. A Gilson 350™ pump set at 2.0 ml/min flow rate is used to pump helium-purged 1,2-dicchorobenzene stabilized with 300 ppm Ionol as the mobile phase through three Plgel 10 micrometer (μm) Mixed B 300mm x 7.5mm columns placed in series and heated to 160°C. A Polymer Labs ELS 1000 Detector™ is used with the Evaporator set to 250°C, the Nebulizer set to 165°C, and the nitrogen flow rate set to 1.8 SLM at a pressure of 60-80 psi (400-600 kPa) $N_2$. The polymer samples are heated to 160°C and each sample injected into a 250 μl loop using the liquid-handling robot and a heated needle. Serial analysis of the polymer samples using two switched loops and overlapping injections are used. The sample data is collected and analyzed using Symyx Epoch™ software. Peaks are manually integrated and the molecular weight information reported uncorrected against a polystyrene standard calibration curve.

### Standard CRYSTAF Method

Branching distributions are determined by crystallization analysis fractionation (CRYSTAF) using a CRYSTAF 200 unit commercially available from PolymerChar®, Valencia, Spain. The samples are dissolved in 1,2,4 trichlorobenzene at 160°C (0.66 mg/mL) for 1 hr and stabilized at 95°C for 45 minutes. The sampling temperatures range from 95 to 30°C at a cooling rate of 0.2°C/min. An infrared detector is used to measure the polymer solution concentrations. The cumulative soluble concentration is measured as the polymer crystallizes while the temperature is decreased. The analytical derivative of the cumulative profile reflects the short chain branching distribution of the polymer.

The CRYSTAF peak temperature and area are identified by the peak analysis module included in the CRYSTAF Software (Version 2001.b, PolymerChar, Valencia, Spain). The CRYSTAF peak finding routine identifies a peak temperature as a maximum in the dW/dT curve and the area between the largest positive inflections on either side of the identified peak in the derivative curve. To calculate the CRYSTAF curve, the preferred processing parameters are with a temperature limit of 70°C and with smoothing parameters above the temperature limit of 0.1, and below the temperature limit of 0.3.

### DSC Standard Method (Excluding Samples 1-4 and A-C)

Differential Scanning Calorimetry results are determined using a TAI model Q1000 DSC equipped with an RCS cooling accessory and an autosampler. A nitrogen purge gas flow of 50 ml/min is used. The sample is pressed into a thin film and melted in the press at about 175°C and then air-cooled to room temperature (25°C). 3-10 mg of material is then cut into a 6 mm diameter disk, accurately weighed, placed in a light aluminum pan (ca 50 mg), and then crimped shut. The thermal behavior of the sample is investigated with the following temperature profile. The sample is rapidly heated to 180°C and held isothermal for 3 minutes in order to remove any previous thermal history. The sample is then cooled to -40°C at 10°C/min cooling rate and held at -40°C for 3 minutes. The sample is then heated to 150 °C at 10°C/min. heating rate. The cooling and second heating curves are recorded.

The DSC melting peak is measured as the maximum in heat flow rate (W/g) with respect to the linear baseline drawn between -30°C and end of melting. The heat of fusion is measured as the area under the melting curve between -30°C and the end of melting using a linear baseline.

### GPC Method (Excluding Samples 1-4 and A-C)

The gel permeation chromatographic system consists of either a Polymer Laboratories Model PL-210 or a Polymer Laboratories Model PL-220 instrument. The column and carousel compartments are operated at 140 °C. Three Polymer Laboratories 10-micron Mixed-B columns are used. The solvent is 1,2,4 trichlorobenzene. The samples are prepared at a concentration of 0.1 grams of polymer in 50 milliliters of solvent containing 200 ppm of butylated hydroxytoluene (BHT). Samples are prepared by agitating lightly for 2 hours at 160°C. The injection volume used is 100 microliters and the flow rate is 1.0 ml/minute.

Calibration of the GPC column set is performed with 21 narrow molecular weight distribution polystyrene standards with molecular weights ranging from 580 to 8,400,000, arranged in 6 "cocktail" mixtures with at least a decade of separation between individual molecular weights. The standards are purchased from Polymer Laboratories (Shropshire, UK). The polystyrene standards are prepared at 0.025 grams in 50 milliliters of solvent for molecular weights equal to or greater than 1,000,000, and 0.05 grams in 50 milliliters of solvent for molecular weights less than 1,000,000. The polystyrene standards are dissolved at 80°C with gentle agitation for 30 minutes. The narrow standards mixtures are run first and in order of decreasing highest molecular weight component to minimize degradation. The polystyrene standard peak molecular weights are converted to polyethylene molecular weights using the following equation (as described in Williams and Ward, J. Polym. Sci., Polym. Let., 6, 621 (1968)): $M_{polyethyene} = 0.431(M_{polystyrene})$.

Polyethylene equivalent molecular weight calculations are performed using Viscotek TriSEC software Version 3.0.

**Compression Set**

Compression set is measured according to ASTM D 395. The sample is prepared by stacking 25.4 mm diameter round discs of 3.2 mm, 2.0 mm, and 0.25 mm thickness until a total thickness of 12.7 mm is reached. The discs are cut from 12.7 cm x 12.7 cm compression molded plaques molded with a hot press under the following conditions: zero pressure for 3 min at 190°C, followed by 86 MPa for 2 min at 190°C, followed by cooling inside the press with cold running water at 86 MPa.

**Density**

Samples for density measurement are prepared according to ASTM D 1928. Measurements are made within one hour of sample pressing using ASTM D792, Method B.

**Flexural/Secant Modulus/ Storage Modulus**

Samples are compression molded using ASTM D 1928. Flexural and 2 percent secant moduli are measured according to ASTM D-790. Storage modulus is measured according to ASTM D 5026-01 or equivalent technique.

**Optical properties**

Films of 0.4 mm thickness are compression molded using a hot press (Carver Model #4095-4PR1001R). The pellets are placed between polytetrafluoroethylene sheets, heated at 190 °C at 55 psi (380 kPa) for 3 min, followed by 1.3 MPa for 3 min, and then 2.6 MPa for 3 min. The film is then cooled in the press with running cold water at 1.3 MPa for 1 min. The compression molded films are used for optical measurements, tensile behavior, recovery, and stress relaxation.

Clarity is measured using BYK Gardner Haze-gard as specified in ASTM D 1746.

45° gloss is measured using BYK Gardner Glossmeter Microgloss 45° as specified in ASTM D-2457

Internal haze is measured using BYK Gardner Haze-gard based on ASTM D 1003 Procedure A. Mineral oil is applied to the film surface to remove surface scratches.

**Mechanical Properties - Tensile, Hysteresis, and Tear**

Stress-strain behavior in uniaxial tension is measured using ASTM D 1708 microtensile specimens. Samples are stretched with an Instron at 500 % $min^{-1}$ at 21°C. Tensile strength and elongation at break are reported from an average of 5 specimens.

100% and 300% Hysteresis is determined from cyclic loading to 100% and 300% strains using ASTM D 1708 microtensile specimens with an Instron™ instrument. The sample is loaded and unloaded at 267 % $min^{-1}$ for 3 cycles at 21°C. Cyclic experiments at 300% and 80°C are conducted using an environmental chamber. In the 80 °C experiment, the sample is allowed to equilibrate for 45 minutes at the test temperature before testing. In the 21 °C, 300% strain cyclic experiment, the retractive stress at 150% strain from the first unloading cycle is recorded. Percent recovery for all experiments are calculated from the first unloading cycle using the strain at which the load returned to the base line. The percent recovery is defined as:

$$\%Recovery = \frac{\varepsilon_f - \varepsilon_s}{\varepsilon_f} \times 100$$

where $\varepsilon_f$ is the strain taken for cyclic loading and $\varepsilon_s$ is the strain where the load returns to the baseline during the 1st unloading cycle.

Stress relaxation is measured at 50 percent strain and 37 °C for 12 hours using an Instron™ instrument equipped with an environmental chamber. The gauge geometry was 76 mm x 25 mm x 0.4 mm. After equilibrating at 37°C for 45 min in the environmental chamber, the sample was stretched to 50% strain at 333% $min^{-1}$. Stress was recorded as a function of time for 12 hours. The percent stress relaxation after 12 hours was calculated using the formula:

$$\%\ Stress\ Relaxation = \frac{L_0 - L_{12}}{L_0} \times 100$$

where $L_0$ is the load at 50% strain at 0 time and $L_{12}$ is the load at 50 percent strain after 12 hours.

Tensile notched tear experiments are carried out on samples having a density of 0.88 g/cc or less using an Instron™ instrument. The geometry consists of a gauge section of 76 mm x 13 mm x 0.4 mm with a 2 mm notch cut into the sample at half the specimen length. The sample is stretched at 508 mm $min^{-1}$ at 21 °C until it breaks. The tear energy is calculated as the area under the stress-elongation curve up to strain at maximum load. An average of at least 3 specimens are reported.

**TMA**

Thermal Mechanical Analysis (Penetration Temperature) is conducted on 30mm diameter x 3.3 mm thick, compression molded discs, formed at 180°C and 10 MPa molding pressure for 5 minutes and then air quenched. The instrument used is a TMA 7, brand available from Perkin-Elmer. In the test, a probe with 1.5 mm radius tip (P/NN519-0416) is applied to the surface of the sample disc with 1N force. The temperature is raised at 5°C/min from 25°C. The probe penetration distance is measured as a function of temperature. The experiment ends when the probe has penetrated 1 mm into the sample.

**DMA**

Dynamic Mechanical Analysis (DMA) is measured on compression molded disks formed in a hot press at 180°C at 10 MPa pressure for 5 minutes and then water cooled in the press at 90°C / min. Testing is conducted using an ARES controlled strain rheometer (TA instruments) equipped with dual cantilever fixtures for torsion testing.

A 1.5mm plaque is pressed and cut in a bar of dimensions 32x12mm. The sample is clamped at both ends between fixtures separated by 10mm (grip separation ΔL) and subjected to successive temperature steps from -100°C to 200°C (5°C per step). At each temperature the torsion modulus G' is measured at an angular frequency of 10 rad/s, the strain amplitude being maintained between 0.1 percent and 4 percent to ensure that the torque is sufficient and that the measurement remains in the linear regime.

An initial static force of 10 g is maintained (auto-tension mode) to prevent slack in the sample when thermal expansion occurs. As a consequence, the grip separation ΔL increases with the temperature, particularly above the melting or softening point of the polymer sample. The test stops at the maximum temperature or when the gap between the fixtures reaches 65 mm.

**Melt Index**

Melt index, or $I_2$, is measured in accordance with ASTM D 1238, Condition 190°C/2.16 kg. Melt index, or $I_{10}$ is also measured in accordance with ASTM D 1238, Condition 190°C/10 kg.

**ATREF**

Analytical temperature rising elution fractionation (ATREF) analysis is conducted according to the method described in U.S. Patent No. 4,798,081 and Wilde, L.; Ryle, T.R.; Knobeloch, D.C.; Peat, I.R.; Determination of Branching

Distributions in Polyethylene and Ethylene Copolymers, J. Polym. Sci., 20, 441-455 (1982), which are incorporated by reference herein in their entirety. The composition to be analyzed is dissolved in trichlorobenzene and allowed to crystallize in a column containing an inert support (stainless steel shot) by slowly reducing the temperature to 20°C at a cooling rate of 0.1°C/min. The column is equipped with an infrared detector. An ATREF chromatogram curve is then generated by eluting the crystallized polymer sample from the column by slowly increasing the temperature of the eluting solvent (trichlorobenzene) from 20 to 120°C at a rate of 1.5°C/min.

### $^{13}C$ NMR Analysis

The samples are prepared by adding approximately 3g of a 50/50 mixture of tetrachloroethane-$d^2$/orthodichlorobenzene to 0.4 g sample in a 10 mm NMR tube. The samples are dissolved and homogenized by heating the tube and its contents to 150°C. The data are collected using a JEOL Eclipse™ 400MHz spectrometer or a Varian Unity Plus™ 400MHz spectrometer, corresponding to a $^{13}C$ resonance frequency of 100.5 MHz. The data are acquired using 4000 transients per data file with a 6 second pulse repetition delay. To achieve minimum signal-to-noise for quantitative analysis, multiple data files are added together. The spectral width is 25,000 Hz with a minimum file size of 32K data points. The samples are analyzed at 130 °C in a 10 mm broad band probe. The comonomer incorporation is determined using Randall's triad method (Randall, J.C.; JMS-Rev. Macromol. Chem. Phys., C29, 201-317 (1989), which is incorporated by reference herein in its entirety.

### Polymer Fractionation by TREF

Large-scale TREF fractionation is carried by dissolving 15-20 g of polymer in 2 liters of 1,2,4-trichlorobenzene (TCB)by stirring for 4 hours at 160°C. The polymer solution is forced by 15 psig (100 kPa) nitrogen onto a 3 inch by 4 foot (7.6 cm x 12 cm) steel column packed with a 60:40 (v:v) mix of 30-40 mesh (600-425 μm) spherical, technical quality glass beads (available from Potters Industries, HC 30 Box 20, Brownwood, TX, 76801) and stainless steel, 0.028" (0.7mm) diameter cut wire shot (available from Pellets, Inc. 63 Industrial Drive, North Tonawanda, NY, 14120). The column is immersed in a thermally controlled oil jacket, set initially to 160 °C. The column is first cooled ballistically to 125°C, then slow cooled to 20 °C at 0.04 °C per minute and held for one hour. Fresh TCB is introduced at about 65 ml/min while the temperature is increased at 0.167 °C per minute.

Approximately 2000 ml portions of eluant from the preparative TREF column are collected in a 16 station, heated fraction collector. The polymer is concentrated in each fraction using a rotary evaporator until about 50 to 100 ml of the polymer solution remains. The concentrated solutions are allowed to stand overnight before adding excess methanol, filtering, and rinsing (approx. 300-500 ml of methanol including the final rinse). The filtration step is performed on a 3 position vacuum assisted filtering station using 5.0 μm polytetrafluoroethylene coated filter paper (available from Osmonics Inc., Cat# Z50WP04750). The filtrated fractions are dried overnight in a vacuum oven at 60 °C and weighed on an analytical balance before further testing.

### Melt Strength

Melt Strength (MS) is measured by using a capillary rheometer fitted with a 2.1 mm diameter, 20:1 die with an entrance angle of approximately 45 degrees. After equilibrating the samples at 190°C for 10 minutes, the piston is run at a speed of 1 inch/minute (2.54 cm/minute). The standard test temperature is 190°C. The sample is drawn uniaxially to a set of accelerating nips located 100 mm below the die with an acceleration of 2.4 mm/$sec^2$. The required tensile force is recorded as a function of the take-up speed of the nip rolls. The maximum tensile force attained during the test is defined as the melt strength. In the case of polymer melt exhibiting draw resonance, the tensile force before the onset of draw resonance was taken as melt strength. The melt strength is recorded in centiNewtons ("cN").

### Catalysts

The term "overnight", if used, refers to a time of approximately 16-18 hours, the term "room temperature", refers to a temperature of 20-25 °C, and the term "mixed alkanes" refers to a commercially obtained mixture of $C_{6-9}$ aliphatic hydrocarbons available under the trade designation Isopar E®, from ExxonMobil Chemical Company. In the event the name of a compound herein does not conform to the structural representation thereof, the structural representation shall control. The synthesis of all metal complexes and the preparation of all screening experiments were carried out in a dry nitrogen atmosphere using dry box techniques. All solvents used were HPLC grade and were dried before their use.

**MMAO** refers to modified methylalumoxane, a triisobutylaluminum modified methylalumoxane available commercially from Akzo-Noble Corporation.

The preparation of catalyst (B1) is conducted as follows.

a) Preparation of (1-methylethyl)(2-hydroxy-3,5-di(t-butyl)phenyl)methylimine

3,5-Di-t-butylsalicylaldehyde (3.00 g) is added to 10 mL of isopropylamine. The solution rapidly turns bright yellow. After stirring at ambient temperature for 3 hours, volatiles are removed under vacuum to yield a bright yellow, crystalline solid (97 percent yield).

b) Preparation of 1,2-bis-(3,5-di-t-butylphenylene)(1-(N-(1-methylethyl)immino)methyl)(2-oxoyl) zirconium dibenzyl

A solution of (1-methylethyl)(2-hydroxy-3,5-di(t-butyl)phenyl)imine (605 mg, 2.2 mmol) in 5 mL toluene is slowly added to a solution of $Zr(CH_2Ph)_4$ (500 mg, 1.1 mmol) in 50 mL toluene. The resulting dark yellow solution is stirred for 30 min. Solvent is removed under reduced pressure to yield the desired product as a reddish-brown solid.
The preparation of catalyst (B2) is conducted as follows.

a) Preparation of (1-(2-methylcyclohexyl)ethyl)(2-oxoyl-3,5-di(t-butyl)phenyl)imine

2-Methylcyclohexylamine (8.44 mL, 64.0 mmol) is dissolved in methanol (90 mL), and di-t-butylsalicaldehyde (10.00 g, 42.67 mmol) is added. The reaction mixture is stirred for three hours and then cooled to -25°C for 12 hrs. The resulting yellow solid precipitate is collected by filtration and washed with cold methanol (2 x 15 mL), and then dried under reduced pressure. The yield is 11.17 g of a yellow solid. $^1H$ NMR is consistent with the desired product as a mixture of isomers.

b) Preparation of bis-(1-(2-methylcyclohexyl)ethyl)(2-oxoyl-3,5-di(t-butyl)phenyl) immino)zirconium dibenzyl

A solution of (1-(2-methylcyclohexyl)ethyl)(2-oxoyl-3,5-di(t-butyl)phenyl)imine (7.63 g, 23.2 mmol) in 200 mL toluene is slowly added to a solution of $Zr(CH_2Ph)_4$ (5.28 g, 11.6 mmol) in 600 mL toluene. The resulting dark yellow solution is stirred for 1 hour at 25°C. The solution is diluted further with 680 mL toluene to give a solution having a concentration of 0.00783 M.

**Cocatalyst 1** A mixture of methyldi($C_{14-18}$alkyl)ammonium salts of tetrakis(pentafluorophenyl)borate (here-inafter armeenium borate), prepared by reaction of a long chain trialkylamine (Armeen™ M2HT, available from Akzo-Nobel, Inc.), HCl and $Li[B(C_6F_5)_4]$, substantially as disclosed in USP 5,919,9883, Ex. 2.

**Cocatalyst 2** Mixed $C_{14-18}$ alkyldimethylammonium salt of bis(tris(pentafluorophenyl)-alumane)-2-undecylimidazolide, prepared according to USP 6,395,671, Ex. 16.

**Shuttling Agents** The shuttling agents employed include diethylzinc (DEZ, SA1), di(i-butyl)zinc (SA2), di(n-hexyl)zinc (SA3), triethylaluminum (TEA, SA4), trioctylaluminum (SA5), triethylgallium (SA6), i-butylaluminum bis(dimethyl(t-butyl)siloxane) (SA7), i-butylaluminum bis(di(trimethylsilyl)amide) (SA8), n-octylaluminum di(pyridine-2-methoxide) (SA9), bis(n-octadecyl)i-butylaluminum (SA10), i-butylaluminum bis(di(n-pentyl)amide) (SA11), n-octylaluminum bis(2,6-di-t-butylphenoxide) (SA12), n-octylaluminum di(ethyl(1-naphthyl)amide) (SA13), ethylaluminum bis(t-butyldimethylsiloxide) (SA14), ethylaluminum di(bis(trimethylsilyl)amide) (SA15), ethylaluminum bis(2,3,6,7-dibenzo-1-azacycloheptaneamide) (SA16), n-octylaluminum bis(2,3,6,7-dibenzo-1-azacycloheptaneamide) (SA17), n-octylaluminum bis (dimethyl(t-butyl)siloxide(SA18), ethylzinc (2,6-diphenylphenoxide) (SA19), and ethylzinc (t-butoxide) (SA20).

Examples 1-4, Comparative A-C

General High Throughput Parallel Polymerization Conditions

Polymerizations are conducted using a high throughput, parallel polymerization reactor (PPR) available from Symyx technologies, Inc. and operated substantially according to USP's 6,248,540, 6,030,917, 6,362,309, 6,306,658, and 6,316,663. Ethylene copolymerizations are conducted at 130°C and 200 psi (1.4 MPa) with ethylene on demand using 1.2 equivalents of cocatalyst 1 based on total catalyst used (1.1 equivalents when MMAO is present). A series of polymerizations are conducted in a parallel pressure reactor (PPR) contained of 48 individual reactor cells in a 6 x 8 array that are fitted with a preweighed glass tube. The working volume in each reactor cell is 6000 μL. Each cell is temperature and pressure controlled with stirring provided by individual stirring paddles. The monomer gas and quench gas are plumbed directly into the PPR unit and controlled by automatic valves. Liquid reagents are robotically added to each reactor cell by syringes and the reservoir solvent is mixed alkanes. The order of addition is mixed alkanes solvent (4 ml), ethylene, 1-octene comonomer (1 ml), cocatalyst 1 or cocatalyst 1/MMAO mixture, shuttling agent, and catalyst or catalyst mixture. When a mixture of cocatalyst 1 and MMAO or a mixture of two catalysts is used, the reagents are premixed in a small vial immediately prior to addition to the reactor. When a reagent is omitted in an experiment, the above order of addition is otherwise maintained. Polymerizations are conducted for approximately 1-2 minutes, until

predetermined ethylene consumptions are reached. After quenching with CO, the reactors are cooled and the glass tubes are unloaded. The tubes are transferred to a centrifuge/vacuum drying unit, and dried for 12 hours at 60 °C. The tubes containing dried polymer are weighed and the difference between this weight and the tare weight gives the net yield of polymer. Results are contained in Table 1. In Table 1 and elsewhere in the application, comparative compounds are indicated by an asterisk (*).

Examples 1-4 demonstrate the synthesis of linear block copolymers by the present invention as evidenced by the formation of a very narrow MWD, essentially monomodal copolymer when DEZ is present and a bimodal, broad molecular weight distribution product (a mixture of separately produced polymers) in the absence of DEZ. Due to the fact that Catalyst (A1) is known to incorporate more octene than Catalyst (B1), the different blocks or segments of the resulting copolymers of the invention are distinguishable based on branching or density.

**Table 1**

| Ex. | Cat. (A1) (μmol) | Cat (B1) (μmol) | Cocat (μmol) | MMAO (μmol) | shuttling agent (μmol) | Yield (g) | Mn | Mw/Mn | hexyls[1] |
|---|---|---|---|---|---|---|---|---|---|
| A* | 0.06 | - | 0.066 | 0.3 | - | 0.1363 | 300502 | 3.32 | - |
| B* | - | 0.1 | 0.110 | 0.5 | - | 0.1581 | 36957 | 1.22 | 2.5 |
| C* | 0.06 | 0.1 | 0.176 | 0.8 | - | 0.2038 | 45526 | 5.30[2] | 5.5 |
| 1 | 0.06 | 0.1 | 0.192 | - | DEZ (8.0) | 0.1974 | 28715 | 1.19 | 4.8 |
| 2 | 0.06 | 0.1 | 0.192 | - | DEZ (80.0) | 0.1468 | 2161 | 1.12 | 14.4 |
| 3 | 0.06 | 0.1 | 0.192 | - | TEA (8.0) | 0.208 | 22675 | 1.71 | 4.6 |
| 4 | 0.06 | 0.1 | 0.192 | - | TEA (80.0) | 0.1879 | 3338 | 1.54 | 9.4 |

[1] $C_6$ or higher chain content per 1000 carbons
[2] Bimodal molecular weight distribution

It may be seen the polymers produced according to the invention have a relatively narrow polydispersity (Mw/Mn) and larger block-copolymer content (trimer, tetramer, or larger) than polymers prepared in the absence of the shuttling agent.

Further characterizing data for the polymers of Table 1 are determined by reference to the figures. More specifically DSC and ATREF results show the following:

The DSC curve for the polymer of example 1 shows a 115.7°C melting point (Tm) with a heat of fusion of 158.1 J/g. The corresponding CRYSTAF curve shows the tallest peak at 34.5°C with a peak area of 52.9 percent. The difference between the DSC Tm and the Tcrystaf is 81.2°C.

The DSC curve for the polymer of example 2 shows a peak with a 109.7°C melting point (Tm) with a heat of fusion of 214.0 J/g. The corresponding CRYSTAF curve shows the tallest peak at 46.2°C with a peak area of 57.0 percent. The difference between the DSC Tm and the Tcrystaf is 63.5°C.

The DSC curve for the polymer of example 3 shows a peak with a 120.7°C melting point (Tm) with a heat of fusion of 160.1 J/g. The corresponding CRYSTAF curve shows the tallest peak at 66.1°C with a peak area of 71.8 percent. The difference between the DSC Tm and the Tcrystaf is 54.6°C.

The DSC curve for the polymer of example 4 shows a peak with a 104.5°C melting point (Tm) with a heat of fusion of 170.7 J/g. The corresponding CRYSTAF curve shows the tallest peak at 30 °C with a peak area of 18.2 percent. The difference between the DSC Tm and the Tcrystaf is 74.5°C.

The DSC curve for comparative A shows a 90.0°C melting point (Tm) with a heat of fusion of 86.7 J/g. The corresponding CRYSTAF curve shows the tallest peak at 48.5°C with a peak area of 29.4 percent. Both of these values are consistent with a resin that is low in density. The difference between the DSC Tm and the Tcrystaf is 41.8°C.

The DSC curve for comparative B shows a 129.8°C melting point (Tm) with a heat of fusion of 237.0 J/g. The corresponding CRYSTAF curve shows the tallest peak at 82.4°C with a peak area of 83.7 percent. Both of these values are consistent with a resin that is high in density. The difference between the DSC Tm and the Tcrystaf is 47.4°C.

The DSC curve for comparative C shows a 125.3°C melting point (Tm) with a heat of fusion of 143.0 J/g. The corresponding CRYSTAF curve shows the tallest peak at 81.8 °C with a peak area of 34.7 percent as well as a lower crystalline peak at 52.4 °C. The separation between the two peaks is consistent with the presence of a high crystalline and a low crystalline polymer. The difference between the DSC Tm and the Tcrystaf is 43.5°C.

Examples 5-19, Comparatives D-F, Continuous Solution Polymerization, Catalyst A1/B2 + DEZ

Continuous solution polymerizations are carried out in a computer controlled autoclave reactor equipped with an internal stirrer. Purified mixed alkanes solvent (Isopar™ E available from ExxonMobil Chemical Company), ethylene at 2.70 lbs/hour (1.22 kg/hour), 1-octene, and hydrogen (where used) are supplied to a 3.8 L reactor equipped with a jacket for temperature control and an internal thermocouple. The solvent feed to the reactor is measured by a mass-flow controller. A variable speed diaphragm pump controls the solvent flow rate and pressure to the reactor. At the discharge of the pump, a side stream is taken to provide flush flows for the catalyst and cocatalyst 1 injection lines and the reactor agitator. These flows are measured by Micro-Motion mass flow meters and controlled by control valves or by the manual adjustment of needle valves. The remaining solvent is combined with 1-octene, ethylene, and hydrogen (where used) and fed to the reactor. A mass flow controller is used to deliver hydrogen to the reactor as needed. The temperature of the solvent/monomer solution is controlled by use of a heat exchanger before entering the reactor. This stream enters the bottom of the reactor. The catalyst component solutions are metered using pumps and mass flow meters and are combined with the catalyst flush solvent and introduced into the bottom of the reactor. The reactor is run liquid-full at 500 psig (3.45 MPa) with vigorous stirring. Product is removed through exit lines at the top of the reactor. All exit lines from the reactor are steam traced and insulated. Polymerization is stopped by the addition of a small amount of water into the exit line along with any stabilizers or other additives and passing the mixture through a static mixer. The product stream is then heated by passing through a heat exchanger before devolatilization. The polymer product is recovered by extrusion using a devolatilizing extruder and water cooled pelletizer. Process details and results are contained in Table 2. Selected polymer properties are provided in Table 3.

**Table 2 Process details for preparation of exemplary polymers**

| Ex. | $C_8H_{16}$ kg/hr | Solv. kg/hr | $H_2$ sccm[1] | T °C | Cat A1[2] ppm | Cat A1 Flow kg/hr | Cat B2[3] ppm | B2 Flow kg/hr | DEZ Conc % | DEZ Flow kg/hr | Cocat Conc. ppm | Cocat Flow kg/hr | $[C_2H_4]/[DEZ]$[4] | Poly Rate[5] kg/hr | Conv %[6] | Solids % | Eff.[7] |
|---|---|---|---|---|---|---|---|---|---|---|---|---|---|---|---|---|---|
| D* | 1.63 | 12.7 | 29.90 | 120 | 142.2 | 0.14 | - | -- | 0.19 | 0.32 | 820 | 0.17 | 536 | 1.81 | 88.8 | 11.2 | 95.2 |
| E* | " | 9.5 | 5.00 | " | -- | -- | 109 | 0.10 | 0.19 | " | 1743 | 0.40 | 485 | 1.47 | 89.9 | 11.3 | 126.8 |
| F* | " | 11.3 | 251.6 | " | 71.7 | 0.06 | 30.8 | 0.06 | -- | -- | " | 0.11 | - | 1.55 | 88.5 | 10.3 | 257.7 |
| 5 | " | " | - | " | " | 0.14 | 30.8 | 0.13 | 0.17 | 0.43 | " | 0.26 | 419 | 1.64 | 89.6 | 11.1 | 118.3 |
| 6 | " | " | 4.92 | " | " | 0.10 | 30.4 | 0.08 | 0.17 | 0.32 | " | 0.18 | 570 | 1.65 | 89.3 | 11.1 | 172.7 |
| 7 | " | " | 21.70 | " | " | 0.07 | 30.8 | 0.06 | 0.17 | 0.25 | " | 0.13 | 718 | 1.60 | 89.2 | 10.6 | 244.1 |
| 8 | " | " | 36.90 | " | " | 0.06 | " | " | " | 0.10 | " | 0.12 | 1778 | 1.62 | 90.0 | 10.8 | 261.1 |
| 9 | " | " | 78.43 | " | " | " | " | " | " | 0.04 | " | " | 4596 | 1.63 | 90.2 | 10.8 | 267.9 |
| 10 | " | " | 0.00 | 123 | 71.1 | 0.12 | 30.3 | 0.14 | 0.34 | 0.19 | 1743 | 0.08 | 415 | 1.67 | 90.31 | 11.1 | 131.1 |
| 11 | " | " | " | 120 | 71.1 | 0.16 | " | 0.17 | 0.80 | 0.15 | 1743 | 0.10 | 249 | 1.68 | 89.56 | 11.1 | 100.6 |
| 12 | " | " | " | 121 1 | 71.1 | 0.15 | " | 0.07 | " | 0.09 | 1743 | 0.07 | 396 | 1.70 | 90.02 | 11.3 | 137.0 |
| 13 | " | " | " | 122 | 71.1 | 0.12 | " | 0.06 | " | 0.05 | 1743 | 0.05 | 653 | 1.69 | 89.64 | 11.2 | 161.9 |
| 14 | " | " | " | 120 | 71.1 | 0.05 | " | 0.29 | " | 0.10 | 1743 | 0.10 | 395 | 1.41 | 89.42 | 9.3 | 114.1 |
| 15 | 2.45 | " | " | " | 71.1 | 0.14 | " | 0.17 | " | 0.14 | 1743 | 0.09 | 282 | 1.80 | 89.33 | 11.3 | 121.3 |
| 16 | " | " | " | 122 | 71.1 | 0.10 | " | 0.13 | " | 0.07 | 1743 | 0.07 | 485 | 1.78 | 90.11 | 11.2 | 159.7 |
| 17 | " | " | " | 121 | 71.1 | 0.10 | " | 0.14 | " | 0.08 | 1743 | " | 506 | 1.75 | 89.08 | 11.0 | 155.6 |
| 18 | 0.69 | " | " | 121 | 71.1 | " | " | 0.22 | " | 0.11 | 1743 | 0.10 | 331 | 1.25 | 89.93 | 8.8 | 90.2 |
| 19 | 0.32 | " | " | 122 | 71.1 | 0.06 | " | " | " | 0.09 | 1743 | 0.08 | 367 | 1.16 | 90.74 | 8.4 | 106.0 |

* Comparative, not an example of the invention

[1] standard $cm^3$/min

[2]. [N-(2,6-di(1-methylethyl)phenyl)amido)(2-isopropylphenyl)(α-naphthalen-2-diyl(6-pyridin-2-diyl)methane)]hafnium dimethyl

[3]. bis-(1-(2-methylcyclohexyl)ethyl)(2-oxoyl-3,5-di(t-butyl)phenyl)immino) zirconium dibenzyl

[4]. molar ratio in reactor

[5]. polymer production rate

[6]. percent ethylene conversion in reactor

[7] efficiency, kg polymer/g M where g M = g Hf + g Zr

Table 3 Properties of exemplary polymers

| Ex. | Density ($g/cm^3$) | $I_2$ | $I_{10}$ | $I_{10}/I_2$ | Mw (g/mol) | Mn (g/mol) | Mw/Mn | Heat of Fusion (J/g) | $T_m$ (°C) | $T_c$ (°C) | $T_{CRYSTAF}$ (°C) | Tm-$T_{CRYSTAF}$ (°C) | CRYSTAF Peak Area (percent) |
|---|---|---|---|---|---|---|---|---|---|---|---|---|---|
| D* | 0.8627 | 1.5 | 10.0 | 6.5 | 110,000 | 55,800 | 2.0 | 32 | 37 | 45 | 30 | 7 | 99 |
| E* | 0.9378 | 7.0 | 39.0 | 5.6 | 65,000 | 33,300 | 2.0 | 183 | 124 | 113 | 79 | 45 | 95 |
| F* | 0.8895 | 0.9 | 12.5 | 13.4 | 137,300 | 9,980 | 13.8 | 90 | 125 | 111 | 78 | 47 | 20 |
| 5 | 0.8786 | 1.5 | 9.8 | 6.7 | 104,600 | 53,200 | 2.0 | 55 | 120 | 101 | 48 | 72 | 60 |
| 6 | 0.8785 | 1.1 | 7.5 | 6.5 | 109600 | 53300 | 2.1 | 55 | 115 | 94 | 44 | 71 | 63 |
| 7 | 0.8825 | 1.0 | 7.2 | 7.1 | 118,500 | 53,100 | 2.2 | 69 | 121 | 103 | 49 | 72 | 29 |
| 8 | 0.8828 | 0.9 | 6.8 | 7.7 | 129,000 | 40,100 | 3.2 | 68 | 124 | 106 | 80 | 43 | 13 |
| 9 | 0.8836 | 1.1 | 9.7 | 9.1 | 129600 | 28700 | 4.5 | 74 | 125 | 109 | 81 | 44 | 16 |
| 10 | 0.8784 | 1.2 | 7.5 | 6.5 | 113,100 | 58,200 | 1.9 | 54 | 116 | 92 | 41 | 75 | 52 |
| 11 | 0.8818 | 9.1 | 59.2 | 6.5 | 66,200 | 36,500 | 1.8 | 63 | 114 | 93 | 40 | 74 | 25 |
| 12 | 0.8700 | 2.1 | 13.2 | 6.4 | 101,500 | 55,100 | 1.8 | 40 | 113 | 80 | 30 | 83 | 91 |
| 13 | 0.8718 | 0.7 | 4.4 | 6.5 | 132,100 | 63,600 | 2.1 | 42 | 114 | 80 | 30 | 81 | 8 |
| 14 | 0.9116 | 2.6 | 15.6 | 6.0 | 81,900 | 43,600 | 1.9 | 123 | 121 | 106 | 73 | 48 | 92 |
| 15 | 0.8719 | 6.0 | 41.6 | 6.9 | 79,900 | 40,100 | 2.0 | 33 | 114 | 91 | 32 | 82 | 10 |
| 16 | 0.8758 | 0.5 | 3.4 | 7.1 | 148,500 | 74,900 | 2.0 | 43 | 117 | 96 | 48 | 69 | 65 |
| 17 | 0.8757 | 1.7 | 11.3 | 6.8 | 107,500 | 54,000 | 2.0 | 43 | 116 | 96 | 43 | 73 | 57 |
| 18 | 0.9192 | 4.1 | 24.9 | 6.1 | 72,000 | 37,900 | 1.9 | 136 | 120 | 106 | 70 | 50 | 94 |
| 19 | 0.9344 | 3.4 | 20.3 | 6.0 | 76,800 | 39,400 | 1.9 | 169 | 125 | 112 | 80 | 45 | 88 |

The resulting polymers are tested by DSC and ATREF as with previous examples. Results are as follows:

The DSC curve for the polymer of example 5 shows a peak with a 119.6 °C melting point (Tm) with a heat of fusion of 60.0 J/g. The corresponding CRYSTAF curve shows the tallest peak at 47.6°C with a peak area of 59.5 percent. The delta between the DSC Tm and the Tcrystaf is 72.0°C.

The DSC curve for the polymer of example 6 shows a peak with a 115.2 °C melting point (Tm) with a heat of fusion of 60.4 J/g. The corresponding CRYSTAF curve shows the tallest peak at 44.2°C with a peak area of 62.7 percent. The delta between the DSC Tm and the Tcrystaf is 71.0°C.

The DSC curve for the polymer of example 7 shows a peak with a 121.3 °C melting point with a heat of fusion of 69.1 J/g. The corresponding CRYSTAF curve shows the tallest peak at 49.2°C with a peak area of 29.4 percent. The delta between the DSC Tm and the Tcrystaf is 72.1 °C.

The DSC curve for the polymer of example 8 shows a peak with a 123.5 °C melting point (Tm) with a heat of fusion of 67.9 J/g. The corresponding CRYSTAF curve shows the tallest peak at 80.1 °C with a peak area of 12.7 percent. The delta between the DSC Tm and the Tcrystaf is 43.4°C.

The DSC curve for the polymer of example 9 shows a peak with a 124.6 °C melting point (Tm) with a heat of fusion of 73.5 J/g. The corresponding CRYSTAF curve shows the tallest peak at 80.8°C with a peak area of 16.0 percent. The delta between the DSC Tm and the Tcrystaf is 43.8°C.

The DSC curve for the polymer of example 10 shows a peak with a 115.6 °C melting point (Tm) with a heat of fusion of 60.7 J/g. The corresponding CRYSTAF curve shows the tallest peak at 40.9°C with a peak area of 52.4 percent. The delta between the DSC Tm and the Tcrystaf is 74.7°C.

The DSC curve for the polymer of example 11 shows a peak with a 113.6 °C melting point (Tm) with a heat of fusion of 70.4 J/g. The corresponding CRYSTAF curve shows the tallest peak at 39.6°C with a peak area of 25.2 percent. The delta between the DSC Tm and the Tcrystaf is 74.1 °C.

The DSC curve for the polymer of example 12 shows a peak with a 113.2 °C melting point (Tm) with a heat of fusion of 48.9 J/g. The corresponding CRYSTAF curve shows no peak equal to or above 30 °C. (Tcrystaf for purposes of further calculation is therefore set at 30°C). The delta between the DSC Tm and the Tcrystaf is 83.2°C.

The DSC curve for the polymer of example 13 shows a peak with a 114.4 °C melting point (Tm) with a heat of fusion of 49.4 J/g. The corresponding CRYSTAF curve shows the tallest peak at 33.8 °C with a peak area of 7.7 percent. The delta between the DSC Tm and the Tcrystaf is 84.4°C.

The DSC for the polymer of example 14 shows a peak with a 120.8 °C melting point (Tm) with a heat of fusion of 127.9 J/g. The corresponding CRYSTAF curve shows the tallest peak at 72.9 °C with a peak area of 92.2 percent. The delta between the DSC Tm and the Tcrystaf is 47.9°C.

The DSC curve for the polymer of example 15 shows a peak with a 114.3 °C melting point (Tm) with a heat of fusion of 36.2 J/g. The corresponding CRYSTAF curve shows the tallest peak at 32.3 °C with a peak area of 9.8 percent. The delta between the DSC Tm and the Tcrystaf is 82.0°C.

The DSC curve for the polymer of example 16 shows a peak with a 116.6 °C melting point (Tm) with a heat of fusion of 44.9 J/g. The corresponding CRYSTAF curve shows the tallest peak at 48.0 °C with a peak area of 65.0 percent. The delta between the DSC Tm and the Tcrystaf is 68.6°C.

The DSC curve for the polymer of example 17 shows a peak with a 116.0 °C melting point (Tm) with a heat of fusion of 47.0 J/g. The corresponding CRYSTAF curve shows the tallest peak at 43.1 °C with a peak area of 56.8 percent. The delta between the DSC Tm and the Tcrystaf is 72.9°C.

The DSC curve for the polymer of example 18 shows a peak with a 120.5 °C melting point (Tm) with a heat of fusion of 141.8 J/g. The corresponding CRYSTAF curve shows the tallest peak at 70.0 °C with a peak area of 94.0 percent. The delta between the DSC Tm and the Tcrystaf is 50.5 °C.

The DSC curve for the polymer of example 19 shows a peak with a 124.8 °C melting point (Tm) with a heat of fusion of 174.8 J/g. The corresponding CRYSTAF curve shows the tallest peak at 79.9 °C with a peak area of 87.9 percent. The delta between the DSC Tm and the Tcrystaf is 45.0 °C.

The DSC curve for the polymer of comparative D shows a peak with a 37.3°C melting point (Tm) with a heat of fusion of 31.6 J/g. The corresponding CRYSTAF curve shows no peak equal to and above 30°C. Both of these values are consistent with a resin that is low in density. The delta between the DSC Tm and the Tcrystaf is 7.3°C.

The DSC curve for the polymer of comparative E shows a peak with a 124.0 °C melting point (Tm) with a heat of fusion of 179.3 J/g. The corresponding CRYSTAF curve shows the tallest peak at 79.3°C with a peak area of 94.6 percent. Both of these values are consistent with a resin that is high in density. The delta between the DSC Tm and the Tcrystaf is 44.6°C.

The DSC curve for the polymer of comparative F shows a peak with a 124.8 °C melting point (Tm) with a heat of fusion of 90.4 J/g. The corresponding CRYSTAF curve shows the tallest peak at 77.6°C with a peak area of 19.5 percent. The separation between the two peaks is consistent with the presence of both a high crystalline and a low crystalline polymer. The delta between the DSC Tm and the Tcrystaf is 47.2°C.

**Physical Property Testing**

Polymer samples are evaluated for physical properties such as high temperature resistance properties, as evidenced by TMA temperature testing, pellet blocking strength, high temperature recovery, high temperature compression set and storage modulus ratio, G'(25°C)/G'(100°C). Several commercially available polymers are included in the tests: Comparative G* is a substantially linear ethylene/1-octene copolymer (AFFINITY®, available from The Dow Chemical Company), Comparative H* is an elastomeric, substantially linear ethylene/ 1-octene copolymer (AFFINITY®EG8100, available from The Dow Chemical Company), Comparative I is a substantially linear ethylene/1-octene copolymer (AFFINITY®PL1840, available from The Dow Chemical Company), Comparative J is a hydrogenated styrene/butadiene/ styrene triblock copolymer (KRATON™ G1652, available from KRATON Polymers), Comparative K is a thermoplastic vulcanizate (TPV, a polyolefin blend containing dispersed therein a crosslinked elastomer). Results are presented in Table 4.

Table 4 High Temperature Mechanical Properties

| Ex. | TMA-1mm penetration (°C) | Pellet Blocking Strength lb/ft$^2$ (kPa) | G'(25°C)/ G'(100°C) | 300 % Strain Recovery (80°C) (percent) | Compression Set (70°C) (percent) |
|---|---|---|---|---|---|
| D* | 51 | - | 9 | Failed | - |
| E* | 130 | - | 18 | - | - |
| F* | 70 | 141 (6.8) | 9 | Failed | 100 |
| 5 | 104 | 0 (0) | 6 | 81 | 49 |
| 6 | 110 | - | 5 | - | 52 |
| 7 | 113 | - | 4 | 84 | 43 |
| 8 | 111 | - | 4 | Failed | 41 |
| 9 | 97 | - | 4 | - | 66 |
| 10 | 108 | - | 5 | 81 | 55 |
| 11 | 100 | - | 8 | - | 68 |
| 12 | 88 | - | 8 | - | 79 |
| 13 | 95 | - | 6 | 84 | 71 |
| 14 | 125 | - | 7 | - | - |
| 15 | 96 | - | 5 | - | 58 |
| 16 | 113 | - | 4 | - | 42 |
| 17 | 108 | 0 (0) | 4 | 82 | 47 |
| 18 | 125 | - | 10 | - | - |
| 19 | 133 | - | 9 | - | - |
| G* | 75 | 463 (22.2) | 89 | Failed | 100 |
| H* | 70 | 213 (10.2) | 29 | Failed | 100 |
| I* | 111 | - | 11 | - | - |
| J* | 107 | - | 5 | Failed | 100 |
| K* | 152 | - | 3 | - | 40 |

In Table 4, Comparative F (which is a physical blend of the two polymers resulting from simultaneous polymerizations using catalyst A1 and B1) has a 1 mm penetration temperature of about 70°C, while Examples 5-9 have a 1 mm penetration temperature of 100°C or greater. Further, examples 10-19 all have a 1 mm penetration temperature of greater than 85°C, with most having 1 mm TMA temperature of greater than 90°C or even greater than 100°C. This shows that the novel polymers have better dimensional stability at higher temperatures compared to a physical blend. Comparative J (a commercial SEBS) has a good 1 mm TMA temperature of about 107°C, but it has very poor (high

temperature 70°C) compression set of about 100 percent and it also failed to recover (sample broke) during a high temperature (80°C) 300 percent strain recovery. Thus the exemplified polymers have a unique combination of properties unavailable even in some commercially available, high performance thermoplastic elastomers.

Similarly, Table 4 shows a low (good) storage modulus ratio, G'(25°C)/G'(100°C), for the inventive polymers of 6 or less, whereas a physical blend (Comparative F) has a storage modulus ratio of 9 and a random ethylene/octene copolymer (Comparative G) of similar density has a storage modulus ratio an order of magnitude greater (89). It is desirable that the storage modulus ratio of a polymer be as close to 1 as possible. Such polymers will be relatively unaffected by temperature, and fabricated articles made from such polymers can be usefully employed over a broad temperature range. This feature of low storage modulus ratio and temperature independence is particularly useful in elastomer applications such as in pressure sensitive adhesive formulations.

The data in Table 4 also demonstrate that the polymers of the invention possess improved pellet blocking strength. In particular, Example 5 has a pellet blocking strength of 0 MPa, meaning it is free flowing under the conditions tested, compared to Comparatives F and G which show considerable blocking. Blocking strength is important since bulk shipment of polymers having large blocking strengths can result in product clumping or sticking together upon storage or shipping, resulting in poor handling properties.

High temperature (70°C) compression set for the inventive polymers is generally good, meaning generally less than about 80 percent, preferably less than about 70 percent and especially less than about 60 percent. In contrast, Comparatives F, G, H and J all have a 70°C compression set of 100 percent (the maximum possible value, indicating no recovery). Good high temperature compression set (low numerical values) is especially needed for applications such as gaskets, window profiles, o-rings, and the like.

Table 5 Ambient Temperature Mechanical Properties

| Ex. | Flex Modulus (MPa) | Tensile Modulus (MPa) | Tensile Strength (MPa)[1] | Elongation at Break[1] (%) | Tensile Strength (MPa) | Elongation at Break (%) | Abrasion: Volume Loss ($mm^3$) | Tensile Notched Tear Strength (mJ) | 100 % Strain Recovery 21°C (percent) | 300 % Strain Recovery 21°C (percent) | Retractive Stress at 150 % Strain (kPa) | Compression Set 21°C (Percent) | Stress Relaxation at 50 % Strain[2] |
|---|---|---|---|---|---|---|---|---|---|---|---|---|---|
| D* | 12 | 5 | - | - | 10 | 1074 | - | - | 91 | 83 | 760 | - | - |
| E* | 895 | 589 | | - | 31 | 1029 | - | - | - | - | - | - | - |
| F* | 57 | 46 | - | - | 12 | 824 | 93 | 339 | 78 | 65 | 400 | 42 | - |
| 5 | 30 | 24 | 14 | 951 | 16 | 1116 | 48 | - | 87 | 74 | 790 | 14 | 33 |
| 6 | 33 | 29 | - | - | 14 | 938 | - | - | - | 75 | 861 | 13 | - |
| 7 | 44 | 37 | 15 | 846 | 14 | 854 | 39 | - | 82 | 73 | 810 | 20 | - |
| 8 | 41 | 35 | 13 | 785 | 14 | 810 | 45 | 461 | 82 | 74 | 760 | 22 | - |
| 9 | 43 | 38 | - | - | 12 | 823 | - | - | - | - | - | 25 | - |
| 10 | 23 | 23 | - | - | 14 | 902 | - | - | 86 | 75 | 860 | 12 | - |
| 11 | 30 | 26 | - | - | 16 | 1090 | - | 976 | 89 | 66 | 510 | 14 | 30 |
| 12 | 20 | 17 | 12 | 961 | 13 | 931 | - | 1247 | 91 | 75 | 700 | 17 | - |
| 13 | 16 | 14 | - | - | 13 | 814 | - | 691 | 91 | - | - | 21 | - |
| 14 | 212 | 160 | - | - | 29 | 857 | - | - | - | - | - | - | - |
| 15 | 18 | 14 | 12 | 1127 | 10 | 1573 | - | 2074 | 89 | 83 | 770 | 14 | - |
| 16 | 23 | 20 | - | - | 12 | 968 | - | - | 88 | 83 | 1040 | 13 | - |

(continued)

| Ex. | Flex Modulus (MPa) | Tensile Modulus (MPa) | Tensile Strength (MPa)[1] | Elongation at Break[1] (%) | Tensile Strength (MPa) | Elongation at Break (%) | Abrasion: Volume Loss ($mm^3$) | Tensile Notched Tear Strength (mJ) | 100 % Strain Recovery 21°C (percent) | 300 % Strain Recovery 21°C (percent) | Retractive Stress at 150 % Strain (kPa) | Compression Set 21°C (Percent) | Stress Relaxation at 50 % Strain[2] |
|---|---|---|---|---|---|---|---|---|---|---|---|---|---|
| 17 | 20 | 18 | - | - | 13 | 1252 | - | 1274 | 13 | 83 | 920 | 4 | - |
| 18 | 323 | 239 | - | - | 30 | 808 | - | - | - | - | - | - | - |
| 19 | 706 | 483 | - | - | 36 | 871 | - | - | - | - | - | - | - |
| G* | 15 | 15 | - | - | 17 | 1000 | - | 746 | 86 | 53 | 110 | 27 | 50 |
| H* | 16 | 15 | - | - | 15 | 829 | - | 569 | 87 | 60 | 380 | 23 | - |
| I* | 210 | 147 | - | - | 29 | 697 | - | - | - | - | - | - | - |
| J* | - | - | - | - | 32 | 609 | - | - | 93 | 96 | 1900 | 25 | - |
| K* - | | - | - | - | - | - | - | - | - | - | - | 30 | - |

[1]. Tested at 51 cm/minute
[2]. measured at 38°C for 12 hours

Table 5 shows results for mechanical properties for the new polymers as well as for various comparison polymers at ambient temperatures. It may be seen that the inventive polymers have very good abrasion resistance when tested according to ISO 4649, generally showing a volume loss of less than about 90 $mm^3$, preferably less than about 80 $mm^3$, and especially less than about 50 $mm^3$. In this test, higher numbers indicate higher volume loss and consequently lower abrasion resistance.

Tear strength as measured by tensile notched tear strength of the inventive polymers is generally 1000 mJ or higher, as shown in Table 5. Tear strength for the inventive polymers can be as high as 3000 mJ, or even as high as 5000 mJ. Comparative polymers generally have tear strengths no higher than 750 mJ.

Table 5 also shows that the polymers of the invention have better retractive stress at 150 percent strain (demonstrated by higher retractive stress values) than some of the comparative samples. Comparative Examples F, G and H have retractive stress value at 150 percent strain of 400 kPa or less, while the inventive polymers have retractive stress values at 150 percent strain of 500 kPa (Ex. 11) to as high as about 1100 kPa (Ex. 17). Polymers having higher than 150 percent retractive stress values would be quite useful for elastic applications, such as elastic fibers and fabrics, especially nonwoven fabrics. Other applications include diaper, hygiene, and medical garment waistband applications, such as tabs and elastic bands.

Table 5 also shows that stress relaxation (at 50 percent strain) is also improved (less) for the inventive polymers as compared to, for example, Comparative G. Lower stress relaxation means that the polymer retains its force better in applications such as diapers and other garments where retention of elastic properties over long time periods at body temperatures is desired.

<u>Optical Testing</u>

Table 6 Polymer Optical Properties

| Ex. | Internal Haze (percent) | Clarity (percent) | 45° Gloss (percent) |
|---|---|---|---|
| F* | 84 | 22 | 49 |
| G* | 5 | 73 | 56 |
| 5 | 13 | 72 | 60 |
| 6 | 33 | 69 | 53 |
| 7 | 28 | 57 | 59 |
| 8 | 20 | 65 | 62 |
| 9 | 61 | 38 | 49 |
| 10 | 15 | 73 | 67 |
| 11 | 13 | 69 | 67 |
| 12 | 8 | 75 | 72 |
| 13 | 7 | 74 | 69 |
| 14 | 59 | 15 | 62 |
| 15 | 11 | 74 | 66 |
| 16 | 39 | 70 | 65 |
| 17 | 29 | 73 | 66 |
| 18 | 61 | 22 | 60 |
| 19 | 74 | 11 | 52 |
| G* | 5 | 73 | 56 |
| H* | 12 | 76 | 59 |
| I* | 20 | 75 | 59 |

The optical properties reported in Table 6 are based on compression molded films substantially lacking in

orientation. Optical properties of the polymers may be varied over wide ranges, due to variation in crystallite size, resulting from variation in the quantity of chain shuttling agent employed in the polymerization.

Extractions of Multi-Block Copolymers

Extraction studies of the polymers of examples 5, 7 and Comparative E are conducted. In the experiments, the polymer sample is weighed into a glass fritted extraction thimble and fitted into a Kumagawa type extractor. The extractor with sample is purged with nitrogen, and a 500mL round bottom flask is charged with 350 mL of diethyl ether. The flask is then fitted to the extractor. The ether is heated while being stirred. Time is noted when the ether begins to condense into the thimble, and the extraction is allowed to proceed under nitrogen for 24 hours. At this time, heating is stopped and the solution is allowed to cool. Any ether remaining in the extractor is returned to the flask. The ether in the flask is evaporated under vacuum at ambient temperature, and the resulting solids are purged dry with nitrogen. Any residue is transferred to a weighed bottle using successive washes of hexane. The combined hexane washes are then evaporated with another nitrogen purge, and the residue dried under vacuum overnight at 40°C. Any remaining ether in the extractor is purged dry with nitrogen.

A second clean round bottom flask charged with 350 mL of hexane is then connected to the extractor. The hexane is heated to reflux with stirring and maintained at reflux for 24 hours after hexane is first noticed condensing into the thimble. Heating is then stopped and the flask is allowed to cool. Any hexane remaining in the extractor is transferred back to the flask. The hexane is removed by evaporation under vacuum at ambient temperature, and any residue remaining in the flask is transferred to a weighed bottle using successive hexane washes. The hexane in the flask is evaporated by a nitrogen purge, and the residue is vacuum dried overnight at 40°C.

The polymer sample remaining in the thimble after the extractions is transferred from the thimble to a weighed bottle and vacuum dried overnight at 40°C. Results are contained in Table 7.

Table 7

| Sample | wt. (g) | ether soluble (g) | ether soluble (percent) | $C_8$ mole percent[1] | hexane soluble (g) | hexane soluble (percent) | $C_8$ mole percent[1] | residue $C_8$ mole percent[1] |
|---|---|---|---|---|---|---|---|---|
| Comp. F* | 1.097 | 0.063 | 5.69 | 12.2 | 0.245 | 22.35 | 13.6 | 6.5 |
| Ex. 5 | 1.006 | 0.041 | 4.08 | - | 0.040 | 3.98 | 14.2 | 11.6 |
| Ex. 7 | 1.092 | 0.017 | 1.59 | 13.3 | 0.012 | 1.10 | 11.7 | 9.9 |
| determined by $^{13}C$ NMR | | | | | | | | |

**Additional Polymer Examples 19 A-F, Continuous Solution Polymerization, Catalyst A1B2 + DEZ**

Continuous solution polymerizations are carried out in a computer controlled well-mixed reactor. Purified mixed alkanes solvent (Isopar™ E available from ExxonMobil Chemical Company.), ethylene, 1-octene, and hydrogen (where used) are combined and fed to a 27 gallon reactor. The feeds to the reactor are measured by mass-flow controllers. The temperature of the feed stream is controlled by use of a glycol cooled heat exchanger before entering the reactor. The catalyst component solutions are metered using pumps and mass flow meters. The reactor is run liquid-full at approximately 550 psig pressure. Upon exiting the reactor, water and additive are injected in the polymer solution. The water hydrolyzes the catalysts, and terminates the polymerization reactions. The post reactor solution is then heated in preparation for a two-stage devolatization. The solvent and unreacted monomers are removed during the devolatization process. The polymer melt is pumped to a die for underwater pellet cutting.

Process details and results are contained in Table 8. Selected polymer properties are provided in Table 9.

**Table 8 Polymerization Conditions for Polymers 19A-J**

| Ex. | $C_2H_4$ lb/hr | $C_8H_{16}$ lb/hr | Solv. lb/hr | $H_2$ sccm[1] | T °C | Cat A1[2] Conc. ppm | Cat A1 Flow lb/hr | Cat B2[3] Conc . ppm | Cat B2 Flow lb/hr | DEZ Conc wt% | DEZ Flow lb/hr | Cocat1 Conc . ppm | Cocat1 Flow lb/hr | Cocat 2 Conc. ppm | Cocat 2 Flow lb/hr | [Zn][4] in polymer ppm | Poly Rate[5] lb/hr | Conv [6] wt% | Polymer wt% | Eff.[7] |
|---|---|---|---|---|---|---|---|---|---|---|---|---|---|---|---|---|---|---|---|---|
| 19A | 55.29 | 32.03 | 323.03 | 101 | 120 | 600 | 0.25 | 200 | 0.42 | 3.0 | 0.70 | 4500 | 0.65 | 525 | 0.33 | 248 | 83.94 | 88.0 | 17.28 | 297 |
| 19B | 53.95 | 28.96 | 325.3 | 577 | 120 | 600 | 0.25 | 200 | 0.55 | 3.0 | 0.24 | 4500 | 0.63 | 525 | 0.11 | 90 | 80.72 | 88.1 | 17.2 | 295 |
| 19C | 55.53 | 30.97 | 324.37 | 550 | 120 | 600 | 0.216 | 200 | 0.609 | 3.0 | 0.69 | 4500 | 0.61 | 525 | 0.33 | 246 | 84.13 | 88.9 | 17.16 | 293 |
| 19D | 54.83 | 30.58 | 326.33 | 60 | 120 | 600 | 0.22 | 200 | 0.63 | 3.0 | 1.39 | 4500 | 0.66 | 525 | 0.66 | 491 | 82.56 | 88.1 | 17.07 | 280 |
| 19E | 54.95 | 31.73 | 326.75 | 251 | 120 | 600 | 0.21 | 200 | 0.61 | 3.0 | 1.04 | 4500 | 0.64 | 525 | 0.49 | 368 | 84.11 | 88.4 | 17.43 | 288 |
| 19F | 50.43 | 34.80 | 330.33 | 124 | 120 | 600 | 0.20 | 200 | 0.60 | 3.0 | 0.74 | 4500 | 0.52 | 525 | 0.35 | 257 | 85.31 | 87.5 | 17.09 | 319 |
| 19G | 50.25 | 33.08 | 325.61 | 188 | 120 | 600 | 0.19 | 200 | 0.59 | 3.0 | 0.54 | 4500 | 0.51 | 525 | 0.16 | 194 | 83.72 | 87.5 | 17.34 | 333 |
| 19H | 50.15 | 34.87 | 318.17 | 58 | 120 | 600 | 0.21 | 200 | 0.66 | 3.0 | 0.70 | 4500 | 0.52 | 525 | 0.70 | 259 | 83.21 | 88.0 | 17.46 | 312 |
| 191 | 55.02 | 34.02 | 323.59 | 53 | 120 | 600 | 0.44 | 200 | 0.74 | 3.0 | 1.72 | 4500 | 0.70 | 525 | 1.65 | 600 | 86.63 | 88.0 | 17.6 | 275 |
| 19J | 7.46 | 9.04 | 50.6 | 47 | 120 | 150 | 0.22 | 76.7 | 0.36 | 0.5 | 0.19 | - | - | - | - | - | - | - | - | - |

[1] standard $cm^3$/min
[2]. [N-(2,6-di(1-methylethyl)phenyl)amido)(2-isopropylphenyl)(α-naphthalen-2-diyl(6-pyridin-2-diyl)methane)]hafnium dimethyl
[3]. bis-(1-(2-methylcyclohexyl)ethyl)(2-oxoyl-3,5-di(t-butyl)phenyl)immino) zirconium dimethyl
[4]. ppm in final product calculated by mass balance
[5]. polymer production rate
[6]. weight percent ethylene conversion in reactor
[7] efficiency, kg polymer/g M where gM=gHf+gZ

**Table 9 Polymer Physical Properties**

| Polymer Ex. No. | Density (g/cc) | I2 | I10 | I10/I2 | Mw (g/mol) | Mn (g/mol) | Mw/Mn | Heat of Fusion (J/g) | Tm (°C) | Tc (°C) | TCRYSTAF (°C) | Tm-TCRYSTAF (°C) | CRYSTAF Peak Area (wt%) |
|---|---|---|---|---|---|---|---|---|---|---|---|---|---|
| 19G | 0.8649 | 0.9 | 6.4 | 7.1 | 135000 | 64800 | 2.1 | 26 | 120 | 92 | 30 | 90 | 90 |
| 19H | 0.8654 | 1.0 | 7.0 | 7.1 | 131600 | 66900 | 2.0 | 26 | 118 | 88 | - | - | - |

**Table 9A Average Block Index For exemplary polymers[1]**

| Example | $Zn/C_2$[2] | Average BI |
|---|---|---|
| Polymer F | 0 | 0 |
| Polymer 8 | 0.56 | 0.59 |
| Polymer 19a | 1.3 | 0.62 |
| Polymer 5 | 2.4 | 0.52 |
| Polymer 19b | 0.56 | 0.54 |
| Polymer 19h | 3.15 | 0.59 |

1. Additional information regarding the calculation of the block indices for various polymers is disclosed in U.S. Patent Application Serial No. (insert when known), entitled "Ethylene/α-Olefin Block Interpolymers", filed on March 15, 2006, in the name of Colin L.P. Shan, Lonnie Hazlitt, et. al. and assigned to Dow Global Technologies Inc., the disclose of which is incorporated by reference herein in its entirety.
2. $Zn/C_2$ *1000 = (Zn feed flow*Zn concentration/ 1000000/Mw of Zn)/(Total Ethylene feed flow*(1-fractional ethylene conversion rate)/Mw of Ethylene)*1000. Please note that "Zn" in "$Zn/C_2$*1000" refers to the amount of zinc in diethyl zinc ("DEZ") used in the polymerization process, and "C2" refers to the amount of ethylene used in the polymerization process.

**Article Fabrication and Testing**

**Articles with low hysteresis and low stress relaxation**

Compressed molded films from an exemplary interpolymer (19A having 0.878 g/cc density and 0.9 melt index) were prepared for elastic hysteresis testing and stress relaxation measurement. A polyethylene elastomer, ENGAGE® 8100 resin(1MI, 0.875 g/cc) made by Dow Chemical Company was used as a comparative example.

The stress relaxation measurement was conducted as described elsewhere herein.
Figure 10 illustrates that the interpolymer exhibit lower stress relaxation than the ENGAGE® polyethylene elastomer. The low hysteresis behavior and low stress relaxation are advantageous in cushioning applications.

One cycle hysteresis data on these three polymers at 10 inch/min at 4 inch gage length are shown in Figure 11. The interpolymer exhibitS lower loading force and higher unloading (lower hysteresis) than the ENGAGE® polyethylene elastomer.

**Exemplary three dimentional net structure**

The evaluation of the net structures provided herein can be carried out by methods known in the art, such as those described in U.S. Patent No. 5,639,543, which is incorporated herein by reference. Certain of the methods are described herein:

**1. Melting point (Tm) and endothermic peak at a temperature below melting point**

The endothermic peak (melting peak) temperature can be determined from a heat absorption and emission curve determined with a differential scanning calorimeter TA50, DSC50 (manufactured by Shimadzu Seisakusho, Japan) at a temperature elevating rate of 20°C/min.

**2. Tanδ**

A rise temperature of alpha diffusion corresponding to the transition temperature from rubber elastic region to melting region of Tanδ (ratio M"/M' obtained by dividing imaginary number resilience M" with real number M') as measured

with Vibron DDVII manufactured by Orientech Corp., at 110 Hz and a temperature elevating rate of 1°C/min.

### 3. Apparent density

A sample material is cut into a square piece of 15 cm x 15 cm in size. The volume of this piece is calculated from the thickness measured at four points. The division of the weight by the volume gives the apparent density (an average of four measurements is taken).

### 4. Heat-bonding

A sample is visually observed to check heat-bonding by pulling bonded loops apart with hand to see if they become apart. Those that do not come apart are considered to be heat-bonded.

### 5. Fineness

A sample material is cut into a square piece, of 20 cm x 20 cm in size. The length of the fiber as calculated by multiplying the specific gravity of the fiber, which is based on the density gradient tubes collected from 10 sites from the sample and measured at 40°C, by a sectional area of the fiber, which is calculated from a 30-magnitude enlarged picture thereof, is converted into the weight of 9000 m thereof (an average of ten measurements is taken).

### 6. Average diameter of random loop

A sample material is cut into a square piece of 20 cm x 20 cm in size. An average diameter of inscribed circle and circumscribed circle drawn by turning an irregularly-shaped random loop, which is formed in the longitudinal direction, for 360° is calculated (an average of twenty measurements is taken).

### 7. Heat-resisting durability (permanent set after compression at 70°C)

A sample material is cut into a square piece of 15 cm x15 cm in size. This piece is 50% compressed to the thickness direction, followed by standing under heat dry at 70°C for 22 hours and cooling to remove compression strain. The permanent set after compression at 70°C is determined by the following equation:

$$\text{Permanent set after compression at } 70^{o}\text{C } (\%) = \text{A-B/A} \times 100$$

wherein B is the thickness after standing for a day and A is its original thickness before the compression (an average of three measurements is taken).

### 8. Permanent set after repeated compression

A sample material is cut into a square piece of 15 cm x15 cm in size. This piece is repeatedly compressed to 50% thickness with Servo-Pulser (manufactured by Shimadzu Seisakusho, Japan) at a cycle of 1 Hz in a room at 2570°C under a relative humidity of 65%. After repeatedly compressing 20,000 times, the permanent set after repeated compression is determined by the following equation:

$$\text{Permanent set after repeated compression } (\%) = \text{A-B/A} \times 100$$

wherein B is the thickness after standing for a day and A is its original thickness before the compression (an average of three measurements is taken).

### 9. Repulsion to 50% compression

A sample material is cut into a square piece of 20 cm x 20 cm in size. The piece is compressed to 65% with a disc of .phi. 150 mm using Tensilon (manufactured by Orientech Corp.) and repulsion to 50% compression is determined from a stress-strain curve obtained (an average of three measurements is taken).

### 10. Apparent density under 100 g/cm$^2$ load

A sample material is cut into a square piece of 20 cm x 20 cm in size. The piece is compressed to 40 kg with a 25 cm x 25 cm compression plate using Tensilon (manufactured by Orientech Corp.) and the thickness thereof is measured. The apparent volume is determined therefrom and divided by the weight of the cut-out piece (an average of four measurements is taken).

### 11. Making random looped structures

The ethylene/α-olefin interpolymer is melted at a temperature 40°C higher than the melting point of the interpolymer and delivered from a nozzle having orifices of 0.5 mm which are arrayed at an orifice pitch of 5 mm on a 50 cm wide, 5 cm long nozzle effective area at a single orifice delivery amount (throughput) of from 0.5 to 1.5 g/min multidot hole. Cooling water is placed 50 cm below the nozzle surface and a pair of 60 cm wide take-off conveyors of endless stainless nets are disposed in parallel relation to each other at a 5 cm distance in such a manner that part thereof protrude from the water surface. The delivered interpolymer is received by the conveyors and allowed to be heat-bonded at the contact points as being held in between the conveyors and transported into the cooling water heated to 70°C at a speed of 1 m/min for solidification and simultaneous pseudo-crystallization treatment, after which the obtained structure is cut into a desired size to give a net structure. The properties of the flat-surfaced net structure thus obtained are tested by the methods known in the art and described herein. The net structure offers an adequate sinking and had good heat-resisting durability, which is suitable for use as a cushioning material.

While the invention has been described with respect to a limited number of embodiments, the specific features of one embodiment should not be attributed to other embodiments of the invention. No single embodiment is representative of all aspects of the invention. In some embodiments, the compositions or methods may include numerous compounds or steps not mentioned herein. In other embodiments, the compositions or methods do not include, or are substantially free of, any compounds or steps not enumerated herein. Variations and modifications from the described embodiments exist. Finally, any number disclosed herein should be construed to mean approximate, regardless of whether the word "about" or "approximately" is used in describing the number. The appended claims intend to cover all those modifications and variations as falling within the scope of the invention.

## Claims

1. A cushioning net structure comprising a plurality of random loops, each of the random loop melt-bonded to at least one additional loop, wherein:

    the random loops comprise a continuous fiber, and wherein the fiber comprises an ethylene/α-olefin interpolymer that is a block interpolymer comprising at least 50 mole percent ethylene, and that:

    (a) has a $M_w/M_n$ from 1.7 to 3.5, at least one melting point, $T_m$, in degrees Celsius, and a density, d, in grams/cubic centimeter, wherein the numerical values of $T_m$ and d correspond to the relationship:

$$T_m > -2002.9 + 4538.5(d) - 2422.2(d)^2$$

    (b) has a $M_w/M_n$ from 1.7 to 3.5, and is **characterized by** a heat of fusion, ΔH in J/g, and a delta quantity, ΔT, in degrees Celsius defined as the temperature difference between the tallest DSC peak and the tallest CRYSTAF peak, wherein the numerical values of ΔT and ΔH have the following relationships:

$$\Delta T > -0.1299(\Delta H) + 62.81 \text{ for } \Delta H \text{ greater than zero and up to 130 J/g,}$$

$$\Delta T \geq 48°C \text{ for } \Delta H \text{ greater than 130 J/g,}$$

    wherein the CRYSTAF peak is determined using at least 5 percent of the cumulative polymer, and if less

than 5 percent of the polymer has an identifiable CRYSTAF peak, then the CRYSTAF temperature is 30°C; or (c) is **characterized by** an elastic recovery, Re, in percent at 300 percent strain and 1 cycle measured with a compression-molded film of the ethylene/α-olefin interpolymer, and has a density, d, in grams/cubic centimeter, wherein the numerical values of Re and d satisfy the following relationship when the ethylene/α-olefin interpolymer is substantially free of a cross-linked phase:

$$Re > 1481 - 1629(d);$$

or

(d) has a comonomer content of the TREF fraction which elutes between 40°C and 130°C greater than or equal to the quantity (-0.2013)T + 21.07, where T is the numerical value of the peak elution temperature of the TREF fraction, measured in °C; or

(e) is **characterized by** a storage modulus at 25°C, G'(25°C), and a storage modulus at 100°C, G'(100°C), wherein the ratio of G'(25°C) to G'(100°C) is from 1:1 to 10:1.

**2.** The cushioning net structure of claim 1, wherein the ethylene/α-olefin interpolymer has a $M_w/M_n$ from 1.7 to 3.5, at least one melting point, $T_m$, in degrees Celsius, and a density, d, in grams/cubic centimeter, wherein the numerical values of $T_m$ and d correspond to the relationship:

$$T_m \geq 858.91 - 1825.3(d) + 1112.8(d)^2.$$

**3.** The cushioning net structure of claims 1 or 2, wherein the ethylene/α-olefin interpolymer has a $M_w/M_n$ from 1.7 to 3.5 and is **characterized by** a heat of fusion, ΔH in J/g, and a delta quantity, ΔT, in degrees Celsius defined as the temperature difference between the tallest DSC peak and the tallest CRYSTAL peak, wherein the numerical values of ΔT and ΔH have the following relationships:

$$\Delta T > -0.1299(\Delta H) + 62.81 \text{ for } \Delta H \text{ greater than zero and up to 130 J/g,}$$

$$\Delta T \geq 48°C \text{ for } \Delta H \text{ greater than 130 J/g,}$$

wherein the CRYSTAF peak is determined using at least 5 percent of the cumulative polymer, and if less than 5 percent of the polymer has an identifiable CRYSTAF peak, then the CRYSTAF temperature is 30°C.

**4.** The cushioning net structure of any of claims 1-3, wherein the ethylene/α-olefin interpolymer is **characterized by** an elastic recovery, Re, in percent at 300 percent strain and 1 cycle measured with a compression-molded film of the ethylene/α-olefin interpolymer, and has a density, d, in grams/cubic centimeter, wherein the numerical values of Re and d satisfy the following relationship when the ethylene/α-olefin interpolymer is substantially free of a cross-linked phase:

$$Re > 1481 - 1629(d).$$

**5.** The cushioning net structure of any of claims 1-4, wherein the numerical values of Re and d satisfy the following relationship:

$$Re > 1491\text{-}1629(d).$$

6. The cushioning net structure of any of claims 1-5, wherein the numerical values of Re and d satisfy the following relationship:

$$Re > 1501 - 1629(d).$$

7. The cushioning net structure of any of claims 1-6, wherein the numerical values of Re and d satisfy the following relationship:

$$Re > 1511 - 1629(d).$$

8. A cushioning net structure comprising a plurality of random loops, each of the random loop melt-bonded to at least one additional loop, wherein:

the random loops comprise a continuous fiber, and wherein the fiber comprises an ethylene/$\alpha$-olefin interpolymer that is a block interpolymer comprising at least 50 mole percent ethylene, and that has:

(a) at least one molecular fraction which elutes between 40°C and 130°C when fractionated using TREF, **characterized in that** the fraction has a block index of at least 0.5 and up to 1 and a molecular weight distribution, $M_w/M_n$, greater than about 1.3 or
(b) an average block index from 0.1 up to 1.0 and a molecular weight distribution, $M_w/M_n$, greater than 1.3.

9. The cushioning net structure of any of claims 1-7, wherein the ethylene/$\alpha$-olefin interpolymer has a comonomer content of the TREF fraction which elutes between 40°C and 130°C greater than or equal to the quantity (-0.2013) T +21.07, where T is the numerical value of the peak elution temperature of the TREF, measured in °C.

10. The cushioning net structure of any of claims 1-8, wherein the ethylene/$\alpha$-olefin interpolymer is **characterized by** a storage modulus at 25°C, G'(25°C), and a storage at 100°C, G'(100°C), wherein the ratio of G'(25°C) to G'(100°C) is from 1:1 to 10:1.

11. The cushioning net structure of any of claims 1-10, wherein the $\alpha$-olefin is propylene, 1-butene, 1- pentene, 1-hexene, 1-octene, or a combination thereof.

12. The cushioning net structure of any of claims 1-11, wherein the structure has a residual strain permanent set at 70°C of not more than 35%.

13. The cushioning net structure of any of claims 1-12, wherein the structure has an apparent density in a range of 0.005 g/cm$^3$ to 0.30 g/cm$^3$.

14. The cushioning net structure of any of claims 1-13, wherein the structure has an apparent density in a range of 0.005 g/cm$^3$ to 0.20 g/cm$^3$.

15. The cushioning net structure of any of claims 1-14, wherein the fiber further comprises at least one other polymer.

16. The cushioning net structure of any of claims 1-15, wherein the other polymer is a thermoplastic elastomer, a non-elastic polymer or a combination thereof.

17. A cushioning material comprising the cushioning net structure of any of claims 1-16.

18. A method for producing a cushioning net structure comprising the steps of:

a. melting a starting material comprising an ethylene/$\alpha$-olefin interpolymer,
b. discharging the molten interpolymer to a downward direction from a nozzel with plural orifices to obtain loops of continuous fibers in a molten state,
c. allowing respective loops to come into contact with one another and to be heat-bonded whereby to form a

random loop structure as the loops are held between take-off units, and
d. cooling the structure,

wherein the interpolymer is a block interpolymer comprising at least 50 mole percent ethylene and

(a) has a $M_w/M_n$ from 1.7 to 3.5, at least one melting point, $T_m$, in degrees Celsius, and a density, d, in grams/cubic centimeter, wherein the numerical values of $T_m$ and d correspond to the relationship:

$$T_m > -2002.9 + 4538.5(d) - 2422.2(d)^2;$$

or
(b) has a $M_w/M_n$ from 1.7 to 3.5, and is **characterized by** a heat of fusion, ΔH in J/g, and a delta quantity, ΔT, in degrees Celsius defined as the temperature difference between the tallest DSC peak and the tallest CRYSTAL peak, wherein the numerical values of ΔT and ΔH have the following relationships:

$$\Delta T > -0.1299(\Delta H) + 62.81 \text{ for } \Delta H \text{ greater than zero and up to } 130 \text{ J/g},$$

$$\Delta T \geq 48°C \text{ for } \Delta H \text{ greater than } 130 \text{ J/g},$$

wherein the CRYSTAL peak is determined using at least 5 percent of the cumulative polymer, and is less than 5 percent has an identifiable CRYSTAF peak, then the CRYSTAL temperature is 30°C; or
(c) is **characterized by** an elastic recovery, Re, in percent at 300 percent strain and 1 cycle measured with a compression-molded film of the ethylene/α-olefin interpolymer, and has a density, d, in grams/cubic centimeter, wherein the numerical values of Re and d satisfy the following relationship when the ethylene/α-olefin interpolymer is substantially free fo a cross-linked phase:

$$Re > 1481 - 1629(d);$$

or
(d) has a comonomer content of the TREF fraction which elutes between 40°C and 130°C greater than or equal to the quantity (-0.2013)T + 21.07 where T is the numerical value of the TREF peak elution temperature, measured in °C; or
(e) is **characterized by** a storage modulus at 25°C, G'(25°C) and a storage modulus at 100°C, G'(100°C), wherein the ratio of G'(25°C) to G'(100°C) is from 1:1 to 10:1.

**19.** A method for producing a cushioning net structure comprising the steps of:

a. melting a starting material comprising an ethylene/α-olefin interpolymer,
b. discharging the molten interpolymer to a downward direction from a nozzle with plural orifices to obtain loops of continuous fibers in a molten state,
c. allowing respective loops to come into contact with one anoter and to be heat-bonded whereby to form a random loop structure as the loops are held between take-off units, and
d. optionally colling the structure,

wherein the interpolymer is a block interpolymer comprising at least 50 mole percent ethylene, and has:

(a) at least one molecular fraction which elutes between 40°C and 130°C when fractionated using TREF, **characterized in that** the fraction has a block index of at least 0.5 and up to 1 and a molecular weight distribution, $M_w/M_n$, greater than 1.3 or
(b) an average block index from 0.1 up to 1.0 and a molecular weight distribution, $M_w/M_n$, greater than 1.3.

**Patentansprüche**

1. Polsternetzstruktur mit einer Vielzahl von zufälligen Schlingen, wobei jede der zufälligen Schlingen mit mindestens einer weiteren Schlinge schmelzverbunden ist, wobei:

   die zufälligen Schlingen eine Endlosfaser umfassen, und wobei die Faser ein Ethylen/α-Olefin-Interpolymer umfasst, bei dem es sich um ein Blockinterpolymer mit mindestens 50 mol-% Ethylen handelt, und das:

   (a) ein $M_w/M_n$ von 1,7 bis 3,5, mindestens einen Schmelzpunkt, $T_m$, in Grad Celsius, und eine Dichte, d, in Gramm/Kubikzentimeter hat, wobei die Zahlenwerte von $T_m$ und d der folgenden Beziehung entsprechen:

$$T_m > -2002{,}9 + 4538{,}5(d) - 2422{,}2(d)^2$$

   (b) ein $M_w/M_n$ von 1,7 bis 3,5 hat und **gekennzeichnet ist durch** eine Schmelzwärme, ΔH in J/g, und ein Delta Menge, ΔT, in Grad Celsius, definiert als Temperaturunterschied zwischen dem höchsten DSK-Peak und dem höchsten CRYSTAF-Peak, wobei die Zahlenwerte von ΔT und ΔH die folgenden Beziehungen haben:

$$\Delta T > -0{,}1299(\Delta H) + 62{,}81 \text{ für } \Delta H \text{ größer als null und bis zu } 130 \text{ J/g},$$

$$\Delta T \geq 48°C \text{ für } \Delta H \text{ größer als } 130 \text{ J/g},$$

   wobei der CRYSTAF-Peak unter Verwendung von mindestens 5 Prozent des kumulativen Polymers ermittelt wird, und wenn weniger als 5 Prozent des Polymers einen nachweisbaren CRYSTAF-Peak haben, dann beträgt die CRYSTAF-Temperatur 30°C; oder
   (c) **gekennzeichnet ist durch** eine elastische Rückstellung, Re, in Prozent bei 300 Prozent Dehnung und 1 Zyklus, gemessen an einer formgepressten Folie aus dem Ethylen/α-Olefin-Interpolymer, und eine Dichte, d, in Gramm/Kubikzentimeter hat, wobei die Zahlenwerte von Re und d der folgenden Beziehung genügen, wenn das Ethylen/α-Olefin-Interpolymer im Wesentlichen frei ist von einer vernetzten Phase:

$$Re > 1481 - 1629(d);$$

   oder
   (d) einen Comonomergehalt der TREF-Fraktion, die zwischen 40°C und 130°C eluiert, von größer oder gleich der Menge (-0,2013)T + 21,07 hat, wobei T der Zahlenwert der in °C gemessenen maximalen Elutionstemperatur der TREF-Fraktion ist; oder
   (e) **gekennzeichnet ist durch** einen Speichermodul bei 25°C, G'(25°C), und einen Speichermodul bei 100°C, G'(100°C), wobei das Verhältnis von G'(25°C) zu G'(100°C) von 1:1 bis 10:1 beträgt.

2. Polsternetzstruktur nach Anspruch 1, wobei das Ethylen/α-Olefin-Interpolymer ein $M_w/M_n$ von 1,7 bis 3,5, mindestens einen Schmelzpunkt, $T_m$, in Grad Celsius, und eine Dichte, d, in Gramm/Kubikzentimeter hat, wobei die Zahlenwerte von $T_m$ und d der folgenden Beziehung entsprechen:

$$T_m \geq 858{,}91 - 1825{,}3(d) + 1112{,}8(d)^2.$$

3. Polsternetzstruktur nach Anspruch 1 oder 2, wobei das Ethylen/$\alpha$-Olefin-Interpolymer ein $M_w/M_n$ von 1,7 bis 3,5 hat und **gekennzeichnet ist durch** eine Schmelzwärme, $\Delta H$ in J/g, und ein Delta Menge, $\Delta T$, in Grad Celsius, definiert als Temperaturunterschied zwischen dem höchsten DSK-Peak und dem höchsten CRYSTAF-Peak, wobei die Zahlenwerte von $\Delta T$ und $\Delta H$ die folgenden Beziehungen haben:

$$\Delta T > -0{,}1299(\Delta H) + 62{,}81 \text{ für } \Delta H \text{ größer als null und bis zu 130 J/g,}$$

$$\Delta T \geq 48°C \text{ für } \Delta H \text{ größer als 130 J/g,}$$

wobei der CRYSTAF-Peak unter Verwendung von mindestens 5 Prozent des kumulativen Polymers ermittelt wird, und wenn weniger als 5 Prozent des Polymers einen nachweisbaren CRYSTAF-Peak haben, dann beträgt die CRYSTAF-Temperatur 30°C.

4. Polsternetzstruktur nach einem der Ansprüche 1-3, wobei das Ethylen/$\alpha$-Olefin-Interpolymer **gekennzeichnet ist durch** eine elastische Rückstellung, Re, in Prozent bei 300 Prozent Dehnung und 1 Zyklus, gemessen an einer formgepressten Folie aus dem Ethylen/$\alpha$,-Olefin-Interpolymer, und eine Dichte, d, in Gramm/Kubikzentimeter hat, wobei die Zahlenwerte von Re und d der folgenden Beziehung genügen, wenn das Ethylen/$\alpha$-Olefin-Interpolymer im Wesentlichen frei ist von einer vernetzten Phase:

$$Re > 1481 - 1629(d).$$

5. Polsternetzstruktur nach einem der Ansprüche 1-4, wobei die Zahlenwerte von Re und d der folgenden Beziehung genügen:

$$Re > 1491 - 1629(d).$$

6. Polsternetzstruktur nach einem der Ansprüche 1-5, wobei die Zahlenwerte von Re und d der folgenden Beziehung genügen:

$$Re > 1501 - 1629(d).$$

7. Polsternetzstruktur nach einem der Ansprüche 1-6, wobei die Zahlenwerte von Re und d der folgenden Beziehung genügen:

$$Re > 1511 - 1629(d).$$

8. Polsternetzstruktur mit einer Vielzahl von zufälligen Schlingen, wobei jede der zufälligen Schlingen mit mindestens einer weiteren Schlinge schmelzverbunden ist, wobei:

die zufälligen Schlingen eine Endlosfaser umfassen, und wobei die Faser ein Ethylen/$\alpha$-Olefin-Interpolymer umfasst, bei dem es sich um ein Blockinterpolymer mit mindestens 50 mol-% Ethylen handelt, und das:

(a) mindestens eine Molekülfraktion besitzt, die bei Fraktionierung mittels TREF zwischen 40°C und 130°C eluiert, **dadurch gekennzeichnet, dass** die Fraktion einen Blockindex von mindestens 0,5 und bis 1 und eine Molekulargewichtsverteilung, $M_w/M_n$, größer als etwa 1,3 hat, oder
(b) einen durchschnittlichen Blockindex von 0,1 bis 1,0 und eine Molekulargewichtsverteilung, $M_w/M_n$, größer als 1,3 hat.

**9.** Polsternetzstruktur nach einem der Ansprüche 1-7, wobei das Ethylen/α-Olefin-Interpolymer einen Comonomergehalt der TREF-Fraktion, die zwischen 40°C und 130°C eluiert, von größer oder gleich der Menge (-0,2018)T + 21,07 hat, wobei T der Zahlenwert der in °C gemessenen maximalen Elutionstemperatur von TREF ist.

**10.** Polsternetzstruktur nach einem der Ansprüche 1-8, wobei das Ethylen/α-Olefin-Interpolymer **gekennzeichnet ist durch** einen Speichermodul bei 25°C, G'(25°C), und einen Speichermodul bei 100°C, G'(100°C), wobei das Verhältnis von G'(25°C) zu G'(100°C) von 1:1 bis 10:1 beträgt.

**11.** Polsternetzstruktur nach einem der Ansprüche 1-10, wobei das α-Olefin Propylen, 1-Buten, 1-Penten, 1-Hexen, 1-Octen oder eine Kombination davon ist.

**12.** Polsternetzstruktur nach einem der Ansprüche 1-11, wobei die Struktur eine bleibende Restdehnung bei 70°C von nicht mehr als 35% besitzt.

**13.** Polsternetzstruktur nach einem der Ansprüche 1-12, wobei die Struktur eine scheinbare Dichte im Bereich von 0,005 $g/cm^3$ bis 0,30 $g/cm^3$ besitzt.

**14.** Polsternetzstruktur nach einem der Ansprüche 1-13, wobei die Struktur eine scheinbare Dichte im Bereich von 0,005 $g/cm^3$ bis 0,20 $g/cm^3$ besitzt.

**15.** Polsternetzstruktur nach einem der Ansprüche 1-14, wobei die Faser ferner mindestens ein weiteres Polymer umfasst.

**16.** Polsternetzstruktur nach einem der Ansprüche 1-15, wobei das weitere Polymer ein thermoplastisches Elastomer, ein nichtelastisches Polymer oder eine Kombination davon ist.

**17.** Polstermaterial mit der Polsternetzstruktur nach einem der Ansprüche 1-16.

**18.** Verfahren zur Herstellung einer Polsternetzstruktur mit den folgenden Schritten:

a. Schmelzen eines Ausgangsmaterials, das ein Ethylen/α-Olefin-Interpolymer umfasst,
b. Ausleiten des geschmolzenen Interpolymers in Richtung nach unten aus einer Düse mit einer Vielzahl von Öffnungen, um Schlingen aus Endlosfasern in einem geschmolzenen Zustand zu erhalten,
c. die jeweiligen Schlingen miteinander in Kontakt kommen lassen und heißverkleben lassen, wodurch eine zufällige Schlingenstruktur entsteht, wenn die Schlingen zwischen Abnahmeeinheiten gehalten werden, und
d. Abkühlen der Struktur,

wobei das Interpolymer ein Blockinterpolymer mit mindestens 50 mol-% Ethylen ist, und

(a) ein $M_w/M_n$ von 1,7 bis 3,5, mindestens einen Schmelzpunkt, $T_m$, in Grad Celsius, und eine Dichte, d, in Gramm/Kubikzentimeter hat, wobei die Zahlenwerte von $T_m$ und d der folgenden Beziehung entsprechen:

$$T_m > -2002,9 + 4538,5(d) - 2422,2(d)^2;$$

oder
(b) ein $M_w/M_n$ von 1,7 bis 3,5 hat und **gekennzeichnet ist durch** eine Schmelzwärme, ΔH in J/g, und ein Delta Menge, ΔT, in Grad Celsius, definiert als Temperaturunterschied zwischen dem höchsten DSK-Peak und dem höchsten CRYSTAF-Peak, wobei die Zahlenwerte von ΔT und ΔH die folgenden Beziehungen haben:

$$\Delta T > -0{,}1299(\Delta H) + 62{,}81 \text{ für } \Delta H \text{ größer als null und bis zu 130 J/g,}$$

$$\Delta T \geq 48°C \text{ für } \Delta H \text{ größer als 130 J/g,}$$

wobei der CRYSTAF-Peak unter Verwendung von mindestens 5 Prozent des kumulativen Polymers ermittelt wird, und wenn weniger als 5 Prozent einen nachweisbaren CRYSTAF-Peak haben, dann beträgt die CRYSTAF-Temperatur 30°C; oder
(c) **gekennzeichnet ist durch** eine elastische Rückstellung, Re, in Prozent bei 300 Prozent Dehnung und 1 Zyklus, gemessen an einer formgepressten Folie aus dem Ethylen/α-Olefin-Interpolymer, und eine Dichte, d, in Gramm/Kubikzentimeter hat, wobei die Zahlenwerte von Re und d der folgenden Beziehung genügen, wenn das Ethylen/α-Olefin-Interpolymer im Wesentlichen frei ist von einer vernetzten Phase:

$$Re > 1481 - 1629(d);$$

oder
(d) einen Comonomergehalt der TREF-Fraktion, die zwischen 40°C und 130°C eluiert, von größer oder gleich der Menge (-0,2013)T + 21,07 hat, wobei T der Zahlenwert der in °C gemessenen maximalen Elutionstemperatur der TREF-Fraktion ist; oder
(e) **gekennzeichnet ist durch** einen Speichermodul bei 25°C, G'(25°C), und einen Speichermodul bei 100°C, G'(100°C), wobei das Verhältnis von G'(25°C) zu G'(100°C) von 1:1 bis 10:1 beträgt.

**19.** Verfahren zur Herstellung einer Polsternetzstruktur mit den folgenden Schritten:

a. Schmelzen eines Ausgangsmaterials, das ein Ethylen/α-Olefin-Interpolymer umfasst,
b. Ausleiten des geschmolzenen Interpolymers in Richtung nach unten aus einer Düse mit einer Vielzahl von Öffnungen, um Schlingen aus Endlosfasern in einem geschmolzenen Zustand zu erhalten,
c. die jeweiligen Schlingen miteinander in Kontakt kommen lassen und heißverkleben lassen, wodurch eine zufällige Schlingenstruktur entsteht, wenn die Schlingen zwischen Abnahmeeinheiten gehalten werden, und
d. optional Abkühlen der Struktur,

wobei das Interpolymer ein Blockinterpolymer mit mindestens 50 mol-% Ethylen ist, und

(a) mindestens eine Molekülfraktion besitzt, die bei Fraktionierung mittels TREF zwischen 40°C und 130°C eluiert, **dadurch gekennzeichnet, dass** die Fraktion einen Blockindex von mindestens 0,5 und bis 1 und eine Molekulargewichtsverteilung, $M_w/M_n$, größer als 1,3 hat, oder
(b) einen durchschnittlichen Blockindex von 0,1 bis 1,0 und eine Molekulargewichtsverteilung, $M_w/M_n$, größer als 1,3 hat.

## Revendications

**1.** Structure de filet amortisseur, qui comprend de multiples boucles aléatoires dont chacune est attachée par fusion à au moins une autre boucle et dans laquelle les boucles aléatoires comprennent une fibre continue, lesquelles fibres comprennent un interpolymère d'éthylène et d'alpha-oléfine qui est un interpolymère à blocs comprenant au moins 50 % en moles de motifs d'éthylène et qui :

a) présente un indice $M_w/M_n$ valant de 1,7 à 3,5, et au moins un point de fusion $T_m$ et une masse volumique d dont les valeurs numériques, exprimées respectivement en degrés Celsius et en grammes par centimètre-cube, vérifient l'inégalité suivante :

$$T_m > -2002,9 + 4538,5(d) - 2422,2(d)^2 \;;$$

b) ou présente un indice $M_w/M_n$ valant de 1,7 à 3,5, et se **caractérise par** une chaleur de fusion ΔH, exprimée en J/g, et une quantité ΔT, exprimée en degrés Celsius et définie comme étant la différence de température entre le plus grand pic observé en analyse AED et le plus grand pic observé en analyse CRYSTAF, dont les valeurs numériques vérifient les inégalités suivantes :

$$\text{pour } 0 < \Delta H \leq 130 \text{ J/g}, \Delta T > -0,1299(\Delta H) + 62,81$$

$$\text{et pour } \Delta H > 130 \text{ J/g}, \Delta T \geq 48 \text{ °C},$$

étant entendu que le pic CRYSTAF est déterminé pour au moins 5 % de polymère en pourcentage cumulé, et qu'on prend la valeur de 30 °C pour la température du pic CRYSTAF si une fraction de moins de 5 % du polymère donne un pic CRYSTAF identifiable ;

c) ou se **caractérise par** une recouvrance élastique Re pour une déformation de 300 % et 1 cycle, exprimée en pourcentage et mesurée sur un film de l'interpolymère d'éthylène et d'alpha-oléfine obtenu par moulage par compression, et présente une masse volumique d, exprimée en grammes par centimètre-cube, dont les valeurs numériques vérifient l'inégalité suivante quand l'interpolymère d'éthylène et d'alpha-oléfine ne contient pratiquement pas de phase réticulée :

$$Re > 1481 - 1629(d) \;;$$

d) ou présente, dans une fraction éluée entre 40 et 130 °C en fractionnement TREF, une teneur en comonomère qui est supérieure ou égale à la valeur de l'expression -0,2013(T) + 21,07 où T représente la valeur numérique, en °C, de la température du pic d'élution de cette fraction en analyse ATREF ;

e) ou se **caractérise par** un module de conservation à 25 °C $G'_{25}$ et un module de conservation à 100 °C $G'_{100}$ qui ont des valeurs telles que le rapport de $G'_{25}$ à $G'_{100}$ vaut de 1/1 à 10/1,

**2.** Structure de filet amortisseur, conforme à la revendication 1, dans laquelle l'interpolymère d'éthylène et d'alpha-oléfine présente un indice $M_w/M_n$ valant de 1,7 à 3,5, et au moins un point de fusion $T_m$ et une masse volumique d dont les valeurs numériques, exprimées respectivement en degrés Celsius et en grammes par centimètre-cube, vérifient l'inégalité suivante :

$$T_m \geq 858,91 - 1825,3(d) + 1112,8(d)^2.$$

**3.** Structure de filet amortisseur, conforme à la revendication 1 ou 2, dans laquelle l'interpolymère d'éthylène et d'alpha-oléfine présente un indice $M_w/M_n$ valant de 1,7 à 3,5, et se **caractérise par** une chaleur de fusion ΔH, exprimée en J/g, et une quantité ΔT, exprimée en degrés Celsius et définie comme étant la différence de température entre le plus grand pic observé en analyse AED et le plus grand pic observé en analyse CRYSTAF, dont les valeurs numériques vérifient les inégalités suivantes :

pour $0 < \Delta H \leq 130$ J/g, $\Delta T > -0,1299(\Delta H) + 62,81$
et pour $\Delta H > 130$ J/g, $\Delta T \geq 48$ °C,

étant entendu que le pic CRYSTAF est déterminé pour au moins 5 % de polymère en pourcentage cumulé, et qu'on prend la valeur de 30 °C pour la température du pic CRYSTAF si une fraction de moins de 5 % du polymère donne un pic CRYSTAF identifiable

**4.** Structure de filet amortisseur, conforme à l'une des revendications 1 à 3, dans laquelle l'interpolymère d'éthylène et d'alpha-oléfine se **caractérise par** une recouvrance élastique Re pour une déformation de 300 % et 1 cycle, exprimée en pourcentage et mesurée sur un film de l'interpolymère d'éthylène et d'alpha-oléfine obtenu par moulage

par compression, et présente une masse volumique d, exprimée en grammes par centimètre-cube, dont les valeurs numériques vérifient l'inégalité suivante quand l'interpolymère d'éthylène et d'alpha-oléfine ne contient pratiquement pas de phase réticulée :

$$Re > 1481 - 1629(d).$$

**5.** Structure de filet amortisseur, conforme à l'une des revendications 1 à 4, dans laquelle les valeurs numériques de Re et d vérifient l'inégalité suivante :

$$Re > 1491 - 1629(d).$$

**6.** Structure de filet amortisseur, conforme à l'une des revendications 1 à 5, dans laquelle les valeurs numériques de Re et d vérifient l'inégalité suivante :

$$Re > 1501 - 1629(d).$$

**7.** Structure de filet amortisseur, conforme à l'une des revendications 1 à 6, dans laquelle les valeurs numériques de Re et d vérifient l'inégalité suivante :

$$Re > 1511 - 1629(d).$$

**8.** Structure de filet amortisseur, qui comprend de multiples boucles aléatoires dont chacune est attachée par fusion à au moins une autre boucle et dans laquelle les boucles aléatoires comprennent des fibres continues, lesquelles fibres comprennent un interpolymère d'éthylène et d'alpha-oléfine qui est un interpolymère à blocs comprenant au moins 50 % en moles de motifs d'éthylène et qui :

a) comporte au moins une fraction moléculaire qui est éluée entre 40 et 130 °C en fractionnement TREF et qui est **caractérisée en ce qu'**elle présente un indice de bloc d'au moins 0,5 et d'au plus 1 et un indice $M_w/M_n$ de distribution des masses moléculaires supérieur à environ 1,3 ;
b) ou présente un indice de bloc moyen de 0,1 à 1,0 et un indice $M_w/M_n$ de distribution des masses moléculaires supérieur à 1,3.

**9.** Structure de filet amortisseur, conforme à l'une des revendications 1 à 7, dans laquelle l'interpolymère d'éthylène et d'alpha-oléfine présente, dans la fraction éluée entre 40 et 130 °C en fractionnement TREF, une teneur en comonomère qui est supérieure ou égale à la valeur de l'expression -0,2013(T) + 21,07 où T représente la valeur numérique, en °C, de la température du pic d'élution de cette fraction en analyse ATREF.

**10.** Structure de filet amortisseur, conforme à l'une des revendications 1 à 8, dans laquelle l'interpolymère d'éthylène et d'alpha-oléfine se **caractérise par** un module de conservation à 25 °C $G'_{25}$ et un module de conservation à 100 °C $G'_{100}$ qui ont des valeurs telles que le rapport de $G'_{25}$ à $G'_{100}$ vaut de 1/1 à 10/1.

**11.** Structure de filet amortisseur, conforme à l'une des revendications 1 à 10, dans laquelle l'alpha-oléfine de l'interpolymère d'éthylène et d'alpha-oléfine est du propylène, du but-1-ène, du pent-1-éne, de l'hex-1-ène ou de l'oct-1-ène, ou une combinaison de ces alpha-oléfines.

**12.** Structure de filet amortisseur, conforme à l'une des revendications 1 à 11, laquelle structure présente une déformation permanente sous contrainte résiduelle à 70 °C d'au plus 35 %.

**13.** Structure de filet amortisseur, conforme à l'une des revendications 1 à 12, laquelle structure présente une masse volumique apparente de 0,005 à 0,30 $g/cm^3$.

**14.** Structure de filet amortisseur, conforme à l'une des revendications 1 à 13, laquelle structure présente une masse volumique apparente de 0,005 à 0,20 g/cm$^3$.

**15.** Structure de filet amortisseur, conforme à l'une des revendications 1 à 14, dans laquelle les fibres comportent en outre au moins un autre polymère.

**16.** Structure de filet amortisseur, conforme à l'une des revendications 1 à 15, dans laquelle l'autre polymère est un polymère thermoplastique, un polymère non-élastique ou une combinaison de tels polymères.

**17.** Matériau amortisseur comprenant une structure de filet amortisseur, conforme à l'une des revendications 1 à 16.

**18.** Procédé de fabrication d'une structure de filet amortisseur, qui comprend les étapes suivantes :

i) faire fondre un matériau de départ comprenant un interpolymère d'éthylène et d'alpha-oléfine,
ii) décharger cet interpolymère fondu, vers le bas, par une buse comportant plusieurs orifices, de manière à obtenir des boucles de fibres continues à l'état fondu,
iii) laisser les boucles individuelles entrer en contact les unes avec les autres et s'attacher à chaud les unes aux autres, de sorte que, pendant que les boucles sont maintenues entre les unités d'enlevage, elles forment une structure de boucles aléatoires,
iv) et refroidir cette structure,

et dans lequel l'interpolymère est un interpolymère à blocs comprenant au moins 50 % en moles de motifs d'éthylène, qui :

a) présente un indice $M_w/M_n$ valant de 1,7 à 3,5, et au moins un point de fusion $T_m$ et une masse volumique d dont les valeurs numériques, exprimées respectivement en degrés Celsius et en grammes par centimètre-cube, vérifient l'inégalité suivante :

$$T_m > -2002{,}9 + 4538{,}5(d) - 2422{,}2(d)^2 ;$$

b) ou présente un indice $M_w/M_n$ valant de 1,7 à 3,5, et se **caractérise par** une chaleur de fusion $\Delta H$, exprimée en J/g, et une quantité $\Delta T$, exprimée en degrés Celsius et définie comme étant la différence de température entre le plus grand pic observé en analyse AED et le plus grand pic observé en analyse CRYSTAF, dont les valeurs numériques vérifient les inégalités suivantes :

pour $0 < \Delta H \leq 130$ J/g, $\Delta T > -0{,}1299(\Delta H) + 62{,}81$
et pour $\Delta H > 130$ J/g, $AT \geq 48$ °C,

étant entendu que le pic CRYSTAF est déterminé pour au moins 5 % de polymère en pourcentage cumulé, et qu'on prend la valeur de 30 °C pour la température du pic CRYSTAF si une fraction de moins de 5 % du polymère donne un pic CRYSTAF identifiable ;
c) ou se **caractérise par** une recouvrance élastique Re pour une déformation de 300 % et 1 cycle, exprimée en pourcentage et mesurée sur un film de l'interpolymère d'éthylène et d'alpha-oléfine obtenu par moulage par compression, et présente une masse volumique d, exprimée en grammes par centimètre-cube, dont les valeurs numériques vérifient l'inégalité suivante quand l'interpolymère d'éthylène et d'alpha-oléfine ne contient pratiquement pas de phase réticulée :

$$Re > 1481 - 1629(d) ;$$

d) ou présente, dans une fraction éluée entre 40 et 130 °C en fractionnement TREF, une teneur en comonomère qui est supérieure ou égale à la valeur de l'expression -0,2013(T) + 21,07 où T représente la valeur numérique, en °C, de la température du pic d'élution de cette fraction en analyse ATREF ;
e) ou se **caractérise par** un module de conservation à 25 °C $G'_{25}$ et un module de conservation à 100 °C $G'_{100}$ qui ont des valeurs telles que le rapport de $G'_{25}$ à $G'_{100}$ vaut de 1/1 à 10/1.

**19.** Procédé de fabrication d'une structure de filet amortisseur, qui comprend les étapes suivantes :

i) faire fondre un matériau de départ comprenant un interpolymère d'éthylène et d'alpha-oléfine,
ii) décharger cet interpolymère fondu, vers le bas, par une buse comportant plusieurs orifices, de manière à obtenir des boucles de fibres continues à l'état fondu,
iii) laisser les boucles individuelles entrer en contact les unes avec les autres et s'attacher à chaud les unes aux autres, de sorte que, pendant que les boucles sont maintenues entre les unités d'enlevage, elles forment une structure de boucles aléatoires,
iv) et refroidir cette structure,

et dans lequel l'interpolymère est un interpolymère à blocs comprenant au moins 50 % en moles de motifs d'éthylène, qui :

a) comporte au moins une fraction moléculaire qui est éluée entre 40 et 130 °C en fractionnement TREF et qui est **caractérisée en ce qu'**elle présente un indice de bloc d'au moins 0,5 et d'au plus 1 et un indice $M_w/M_n$ de distribution des masses moléculaires supérieur à 1,3 ;
b) ou présente un indice de bloc moyen de 0,1 à 1,0 et un indice $M_w/M_n$ de distribution des masses moléculaires supérieur à 1,3.

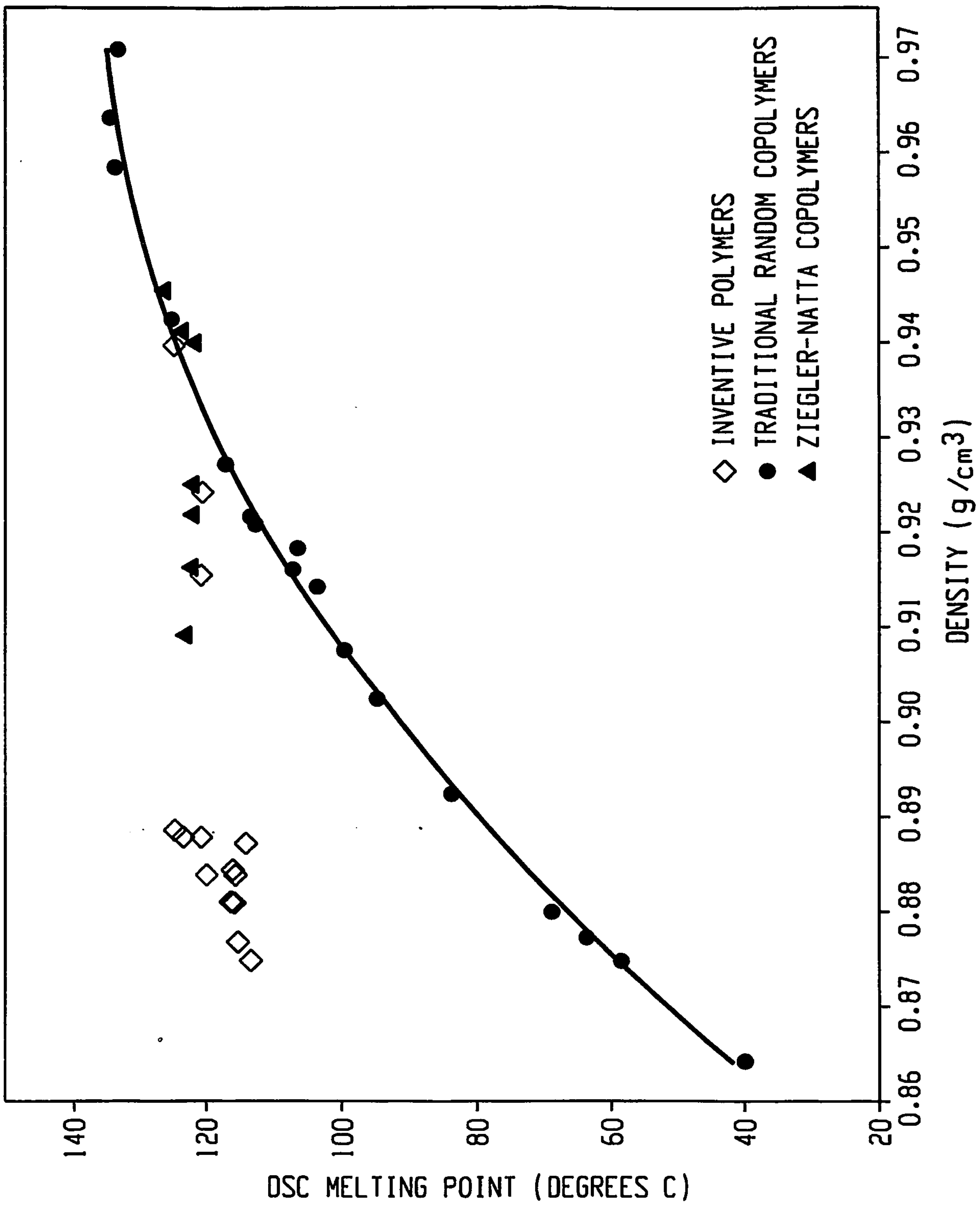

INVENTIVE POLYMERS
TRADITIONAL RANDOM COPOLYMERS
ZIEGLER-NATTA COPOLYMERS
DSC MELTING POINT (DEGREES C)
140
120
100
80
60
40
20
DENSITY (g/cm3)
0.86
0.87
0.88
0.89
0.90
0.91
0.92
0.93
0.94
0.95
0.96
0.97


Fig. 1

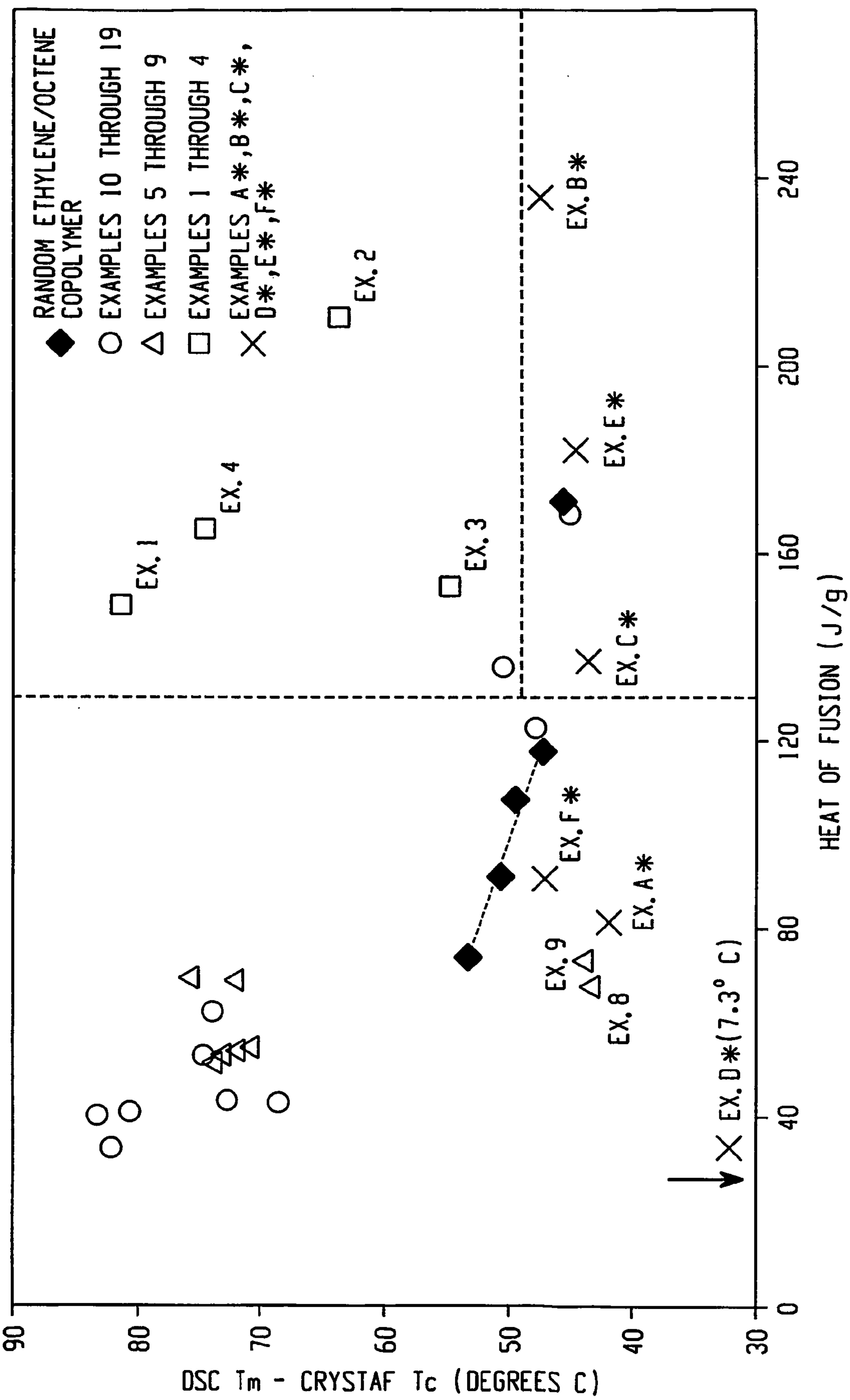
RANDOM ETHYLENE/OCTENE COPOLYMER
EXAMPLES 10 THROUGH 19
EXAMPLES 5 THROUGH 9
EXAMPLES 1 THROUGH 4
EXAMPLES A*,B*,C*, D*,E*,F*
EX. 1
EX. 2
EX. 3
EX. 4
EX. 8
EX. 9
EX. A*
EX. B*
EX. C*
EX. D*(7.3° C)
EX. E*
EX. F*
90
80
70
60
50
40
30
0
40
80
120
160
200
240
DSC Tm - CRYSTAF Tc (DEGREES C)
HEAT OF FUSION (J/g)

Fig. 2

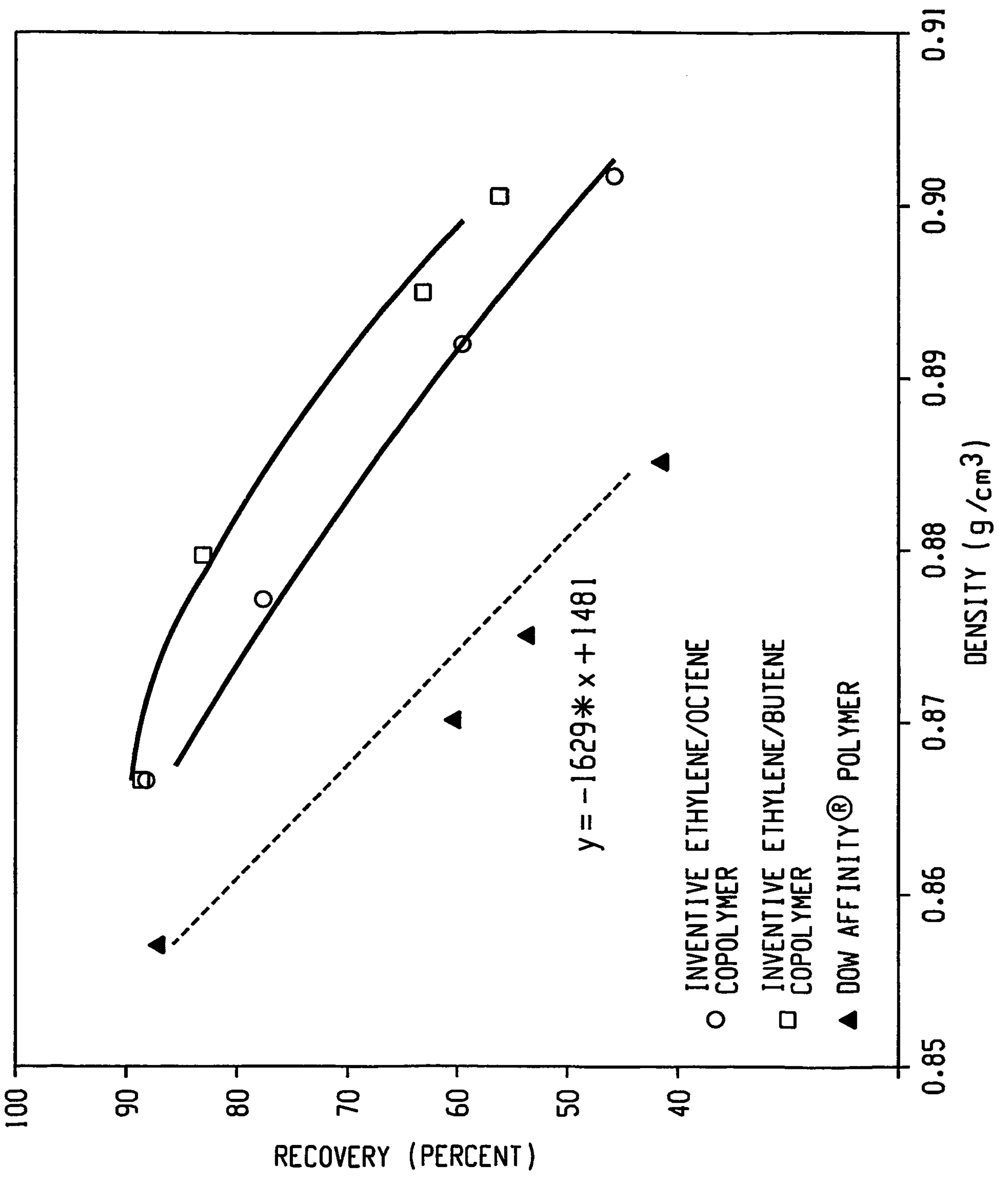
RECOVERY (PERCENT)
100
90
80
70
60
50
40
DENSITY (g/cm3)
0.85
0.86
0.87
0.88
0.89
0.90
0.91
y = -1629 * x + 1481
INVENTIVE ETHYLENE/OCTENE COPOLYMER
INVENTIVE ETHYLENE/BUTENE COPOLYMER
DOW AFFINITY® POLYMER

Fig. 3

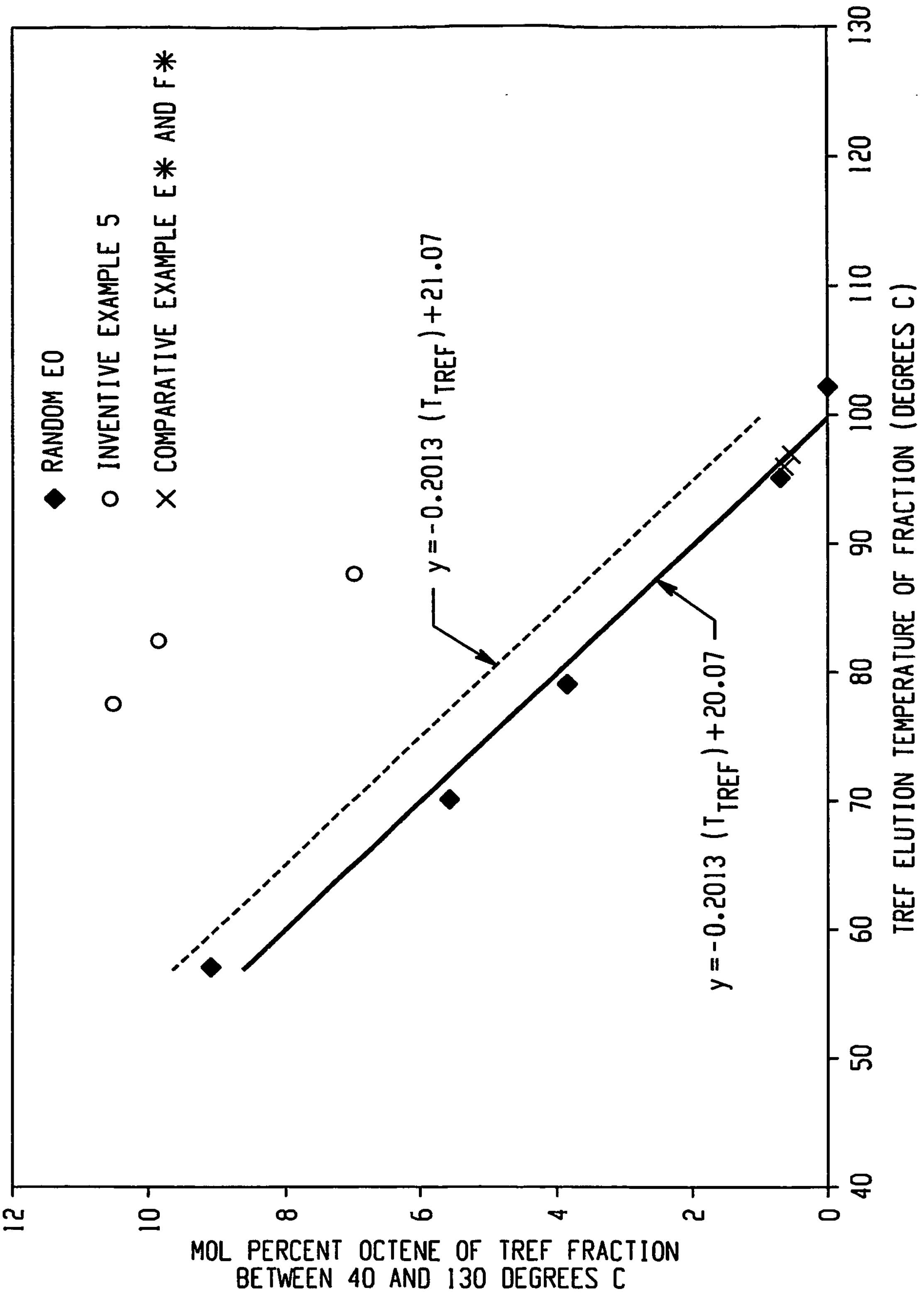
RANDOM EO
INVENTIVE EXAMPLE 5
COMPARATIVE EXAMPLE E* AND F*
y = -0.2013 ($T_{TREF}$) + 21.07
y = -0.2013 ($T_{TREF}$) + 20.07
MOL PERCENT OCTENE OF TREF FRACTION BETWEEN 40 AND 130 DEGREES C
TREF ELUTION TEMPERATURE OF FRACTION (DEGREES C)
0
2
4
6
8
10
12
40
50
60
70
80
90
100
110
120
130

Fig. 4

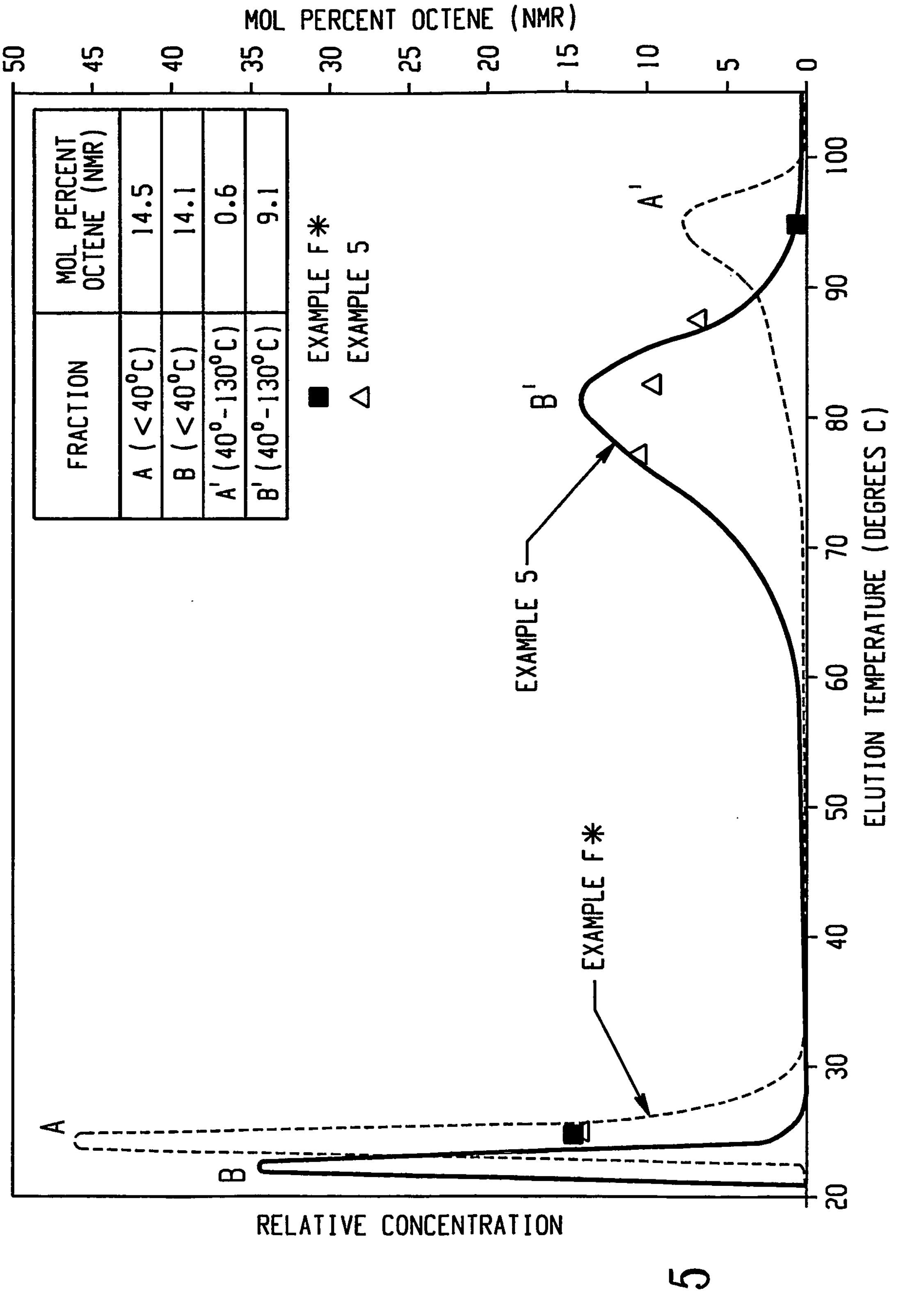

MOL PERCENT OCTENE (NMR)
50
45
40
35
30
25
20
15
10
5
0
FRACTION
MOL PERCENT OCTENE (NMR)
A (<40°C)
14.5
B (<40°C)
14.1
A' (40°-130°C)
0.6
B' (40°-130°C)
9.1
■ EXAMPLE F*
△ EXAMPLE 5
A
B
EXAMPLE F*
EXAMPLE 5
B'
A'
RELATIVE CONCENTRATION
20
30
40
50
60
70
80
90
100
ELUTION TEMPERATURE (DEGREES C)


Fig. 5

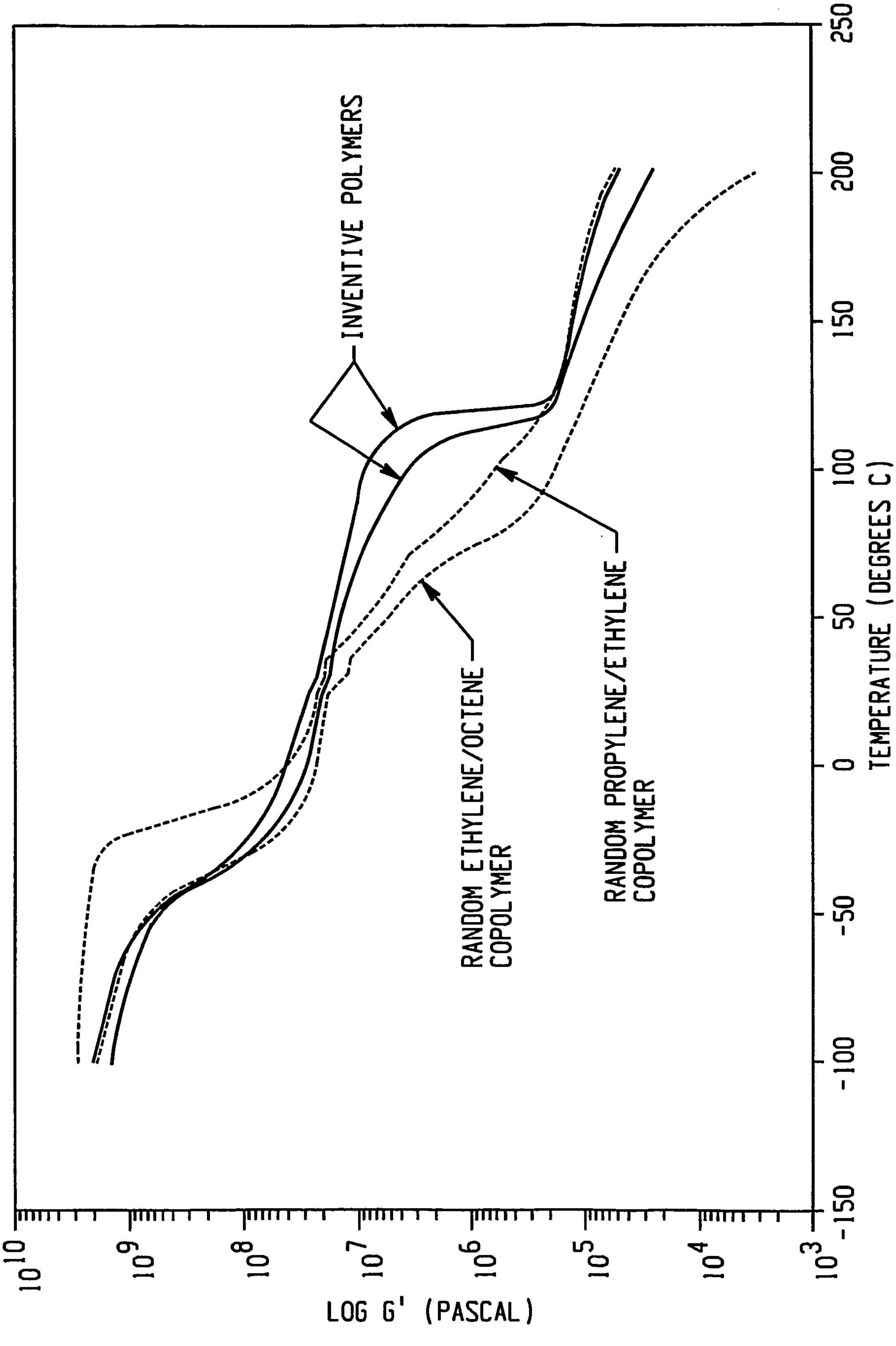
INVENTIVE POLYMERS
RANDOM ETHYLENE/OCTENE COPOLYMER
RANDOM PROPYLENE/ETHYLENE COPOLYMER
LOG G' (PASCAL)
$10^{10}$
$10^{9}$
$10^{8}$
$10^{7}$
$10^{6}$
$10^{5}$
$10^{4}$
$10^{3}$
TEMPERATURE (DEGREES C)
-150
-100
-50
0
50
100
150
200
250

Fig. 6

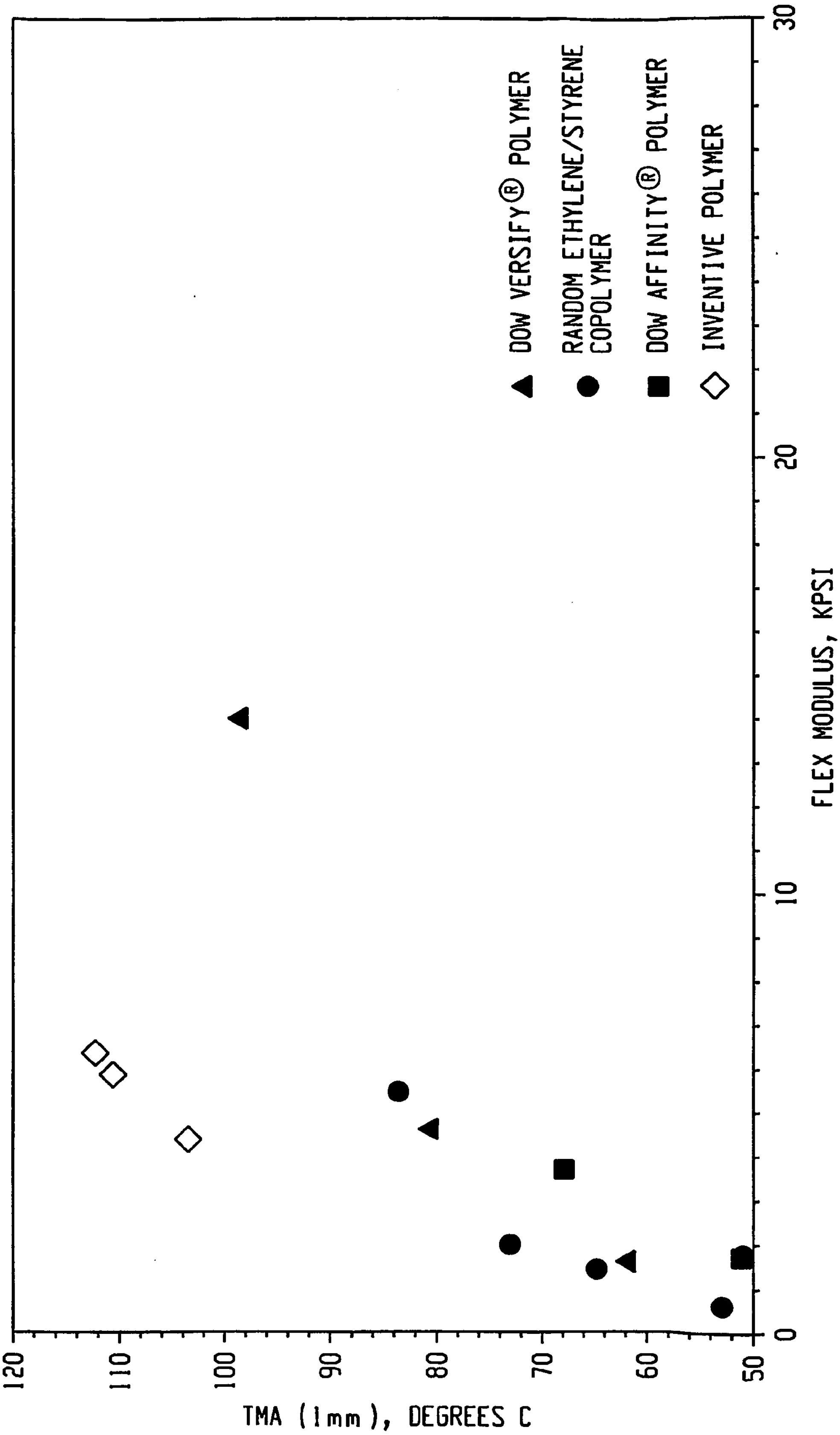
DOW VERSIFY® POLYMER
RANDOM ETHYLENE/STYRENE COPOLYMER
DOW AFFINITY® POLYMER
INVENTIVE POLYMER
TMA (1mm), DEGREES C
120
110
100
90
80
70
60
50
FLEX MODULUS, KPSI
0
10
20
30

Fig. 7

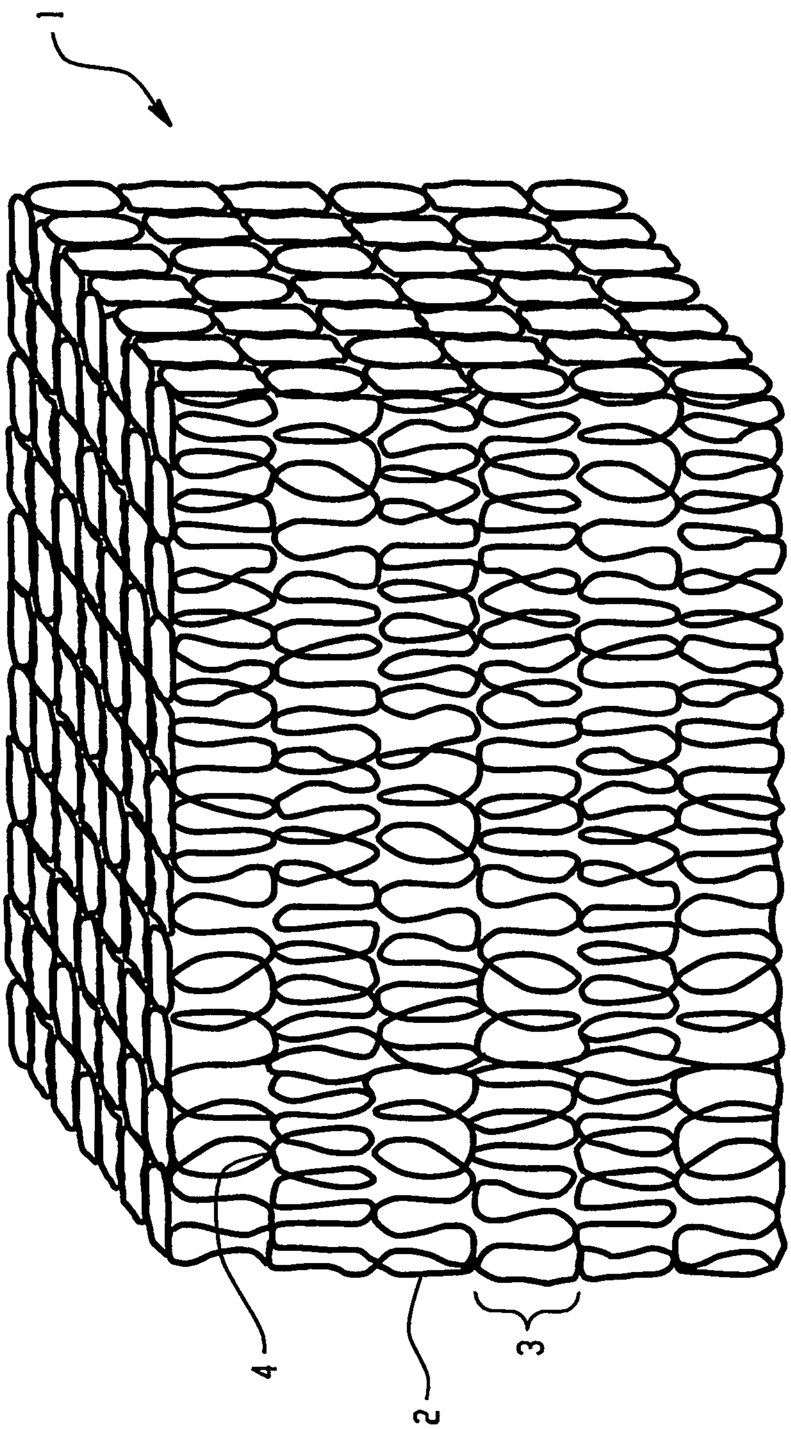


Fig. 8

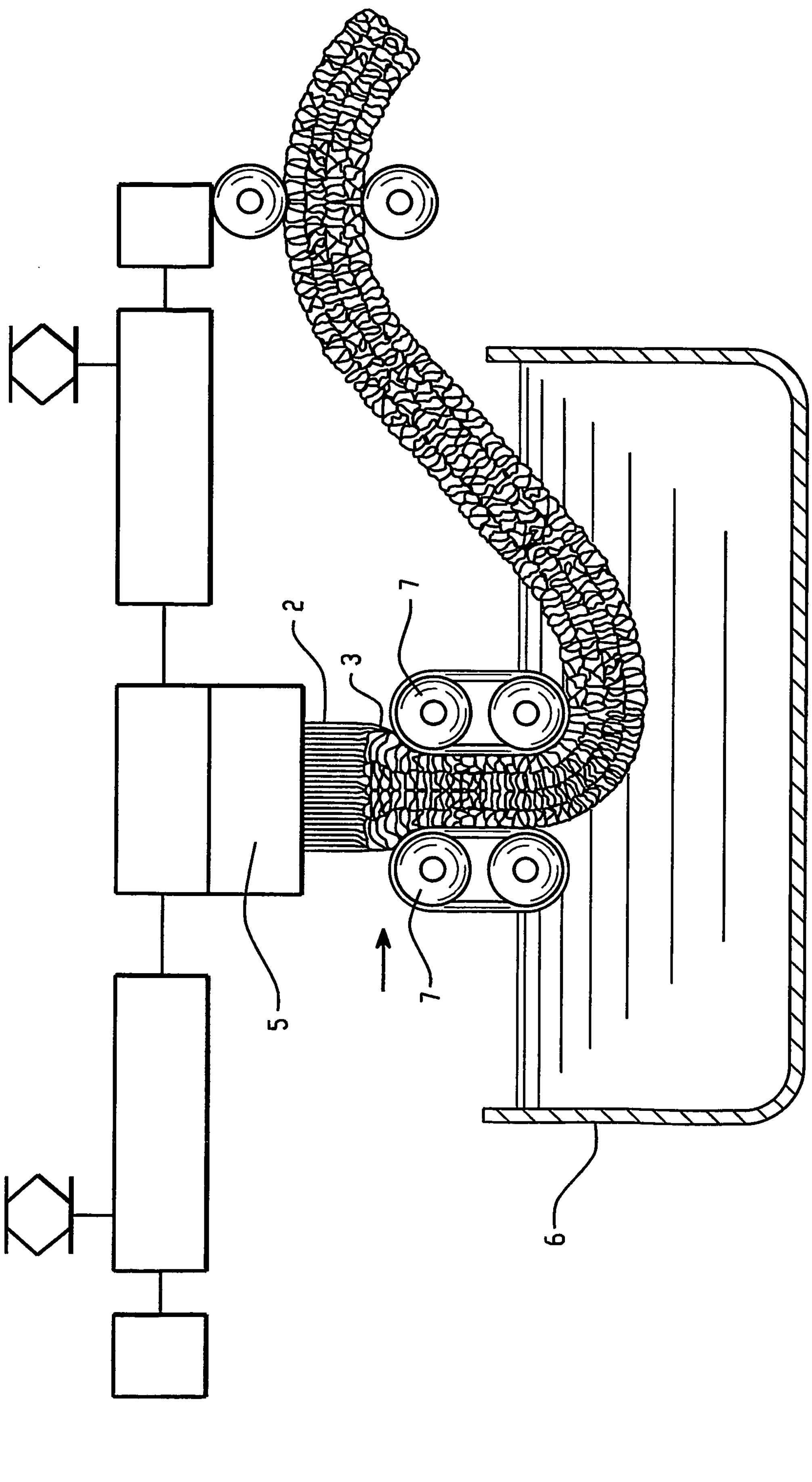


Fig. 9

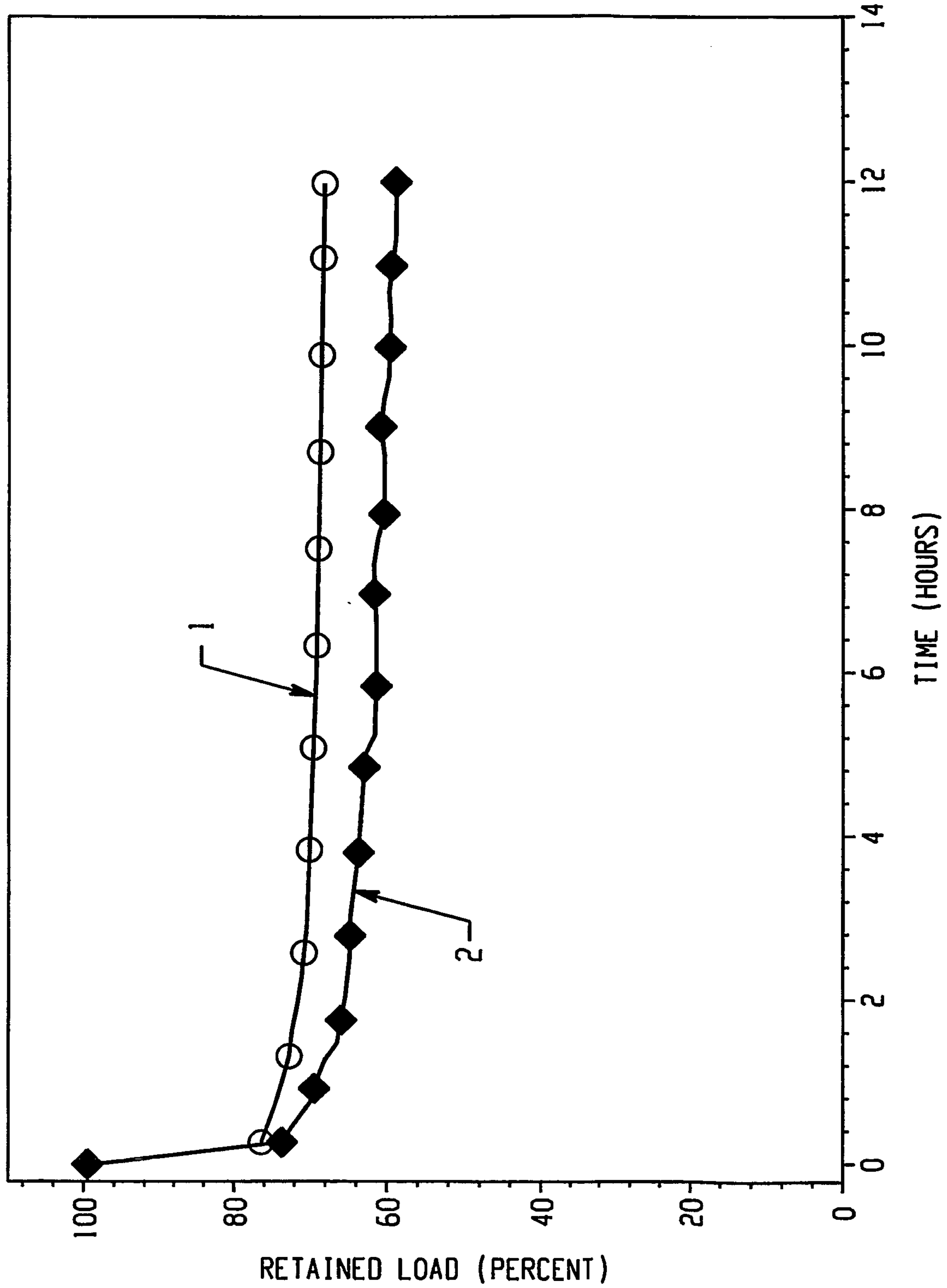
RETAINED LOAD (PERCENT)
TIME (HOURS)
1
2
0
20
40
60
80
100
0
2
4
6
8
10
12
14

Fig. 10

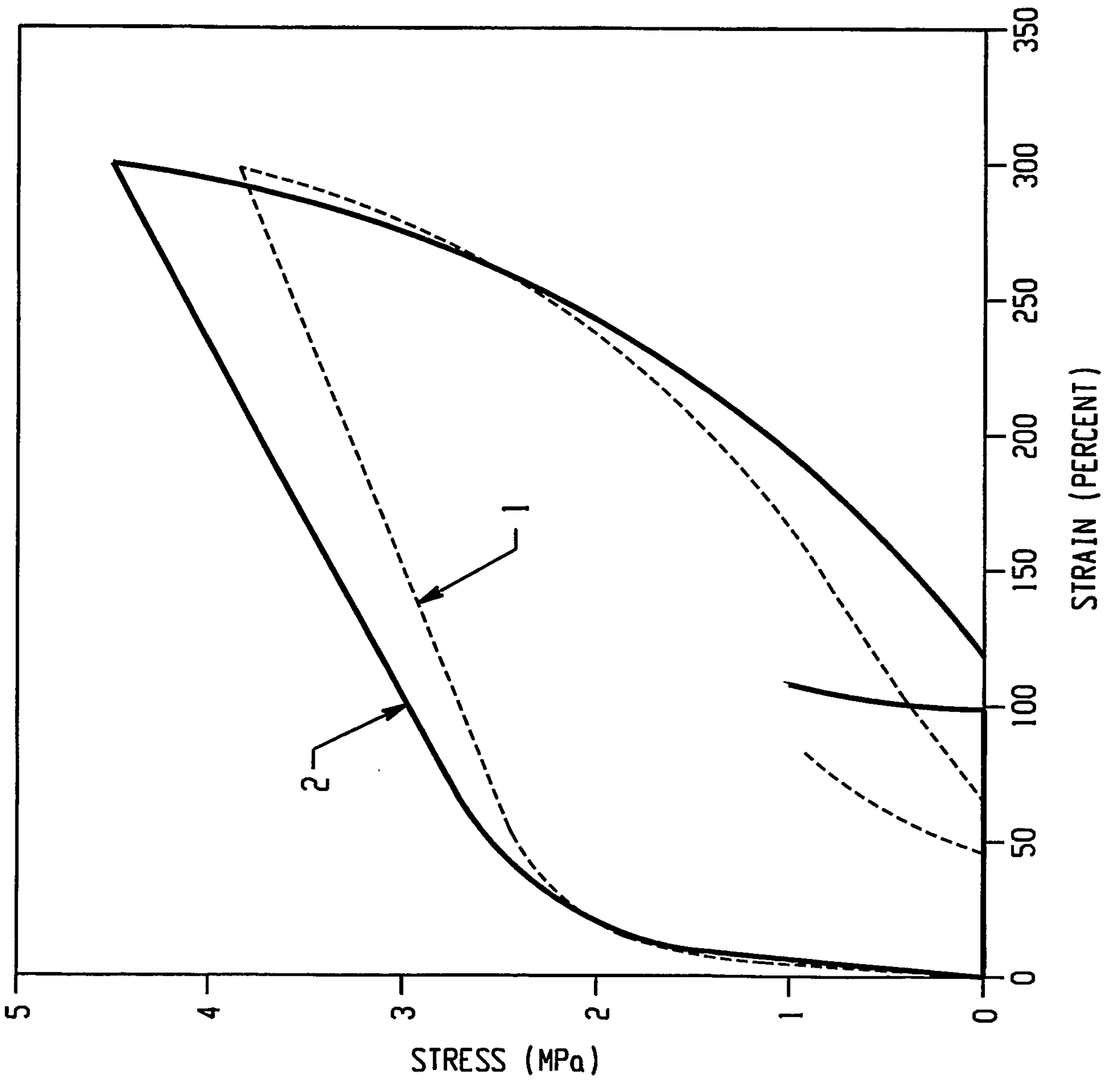
STRESS (MPa)
STRAIN (PERCENT)
0
1
2
3
4
5
0
50
100
150
200
250
300
350
1
2

Fig. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20060376835 A, Colin L.P. Shan, Lonnie Hazlitt
- US 55390604 P
- US 66293705 P
- US 66293905 P
- US 605662938 A
- US 2005008916 W
- US 2005008915 W
- US 2005008917 W
- WO 0340195 A
- US 0204017 A
- US SN10429024 A
- WO 0424740 A
- US 20040010103 A
- US P6268444 B
- US 2003004286 A
- US 4762890 A
- US 4927888 A
- US 4950541 A
- US 71891705 P
- US 5639543 A
- US 6378150 B
- US 4798081 A
- US P59199883 B
- US P6395671 B
- US PS6248540 A
- US 6030917 A
- US 6362309 B
- US 6306658 B
- US 6316663 B


### Non-patent literature cited in the description


- **Markovich, Ronald P. ; Hazlitt, Lonnie G. ; Smith, Linley.** Development of gel-permeation chromatography-Fourier transform infrared spectroscopy for characterization of ethylene-based polyolefin copolymers. *Polymeric Materials Science and Engineering,* 1991, vol. 63, 98-100
- **Deslauriers, P.J. ; Rohlfing, D.C. ; Shieh, E.T.** Quantifying short chain branching microstructures in ethylene-1-olefin copolymers using size exclusion chromatography and Fourier transform infrared spectroscopy (SEC-FTIR). *Polymer,* 2002, vol. 43, 59-170
- **Zweifel Hans et al.** Plastics Additives Handbook. Hanser Gardner Publications, 2001
- **Barton, A. F. M.** Handbook of Solubility and Other Cohesion Parameters. CRC Press, 1991
- Polymer Handbook. John Wiley, 1989, 519-557
- **Barton, A. F. M.** Handbook of Polymer-Liquid Interaction Parameters and Solubility Parameters. CRC Press, 1990
- **Barton A. F. M.** Handbook of Solubility Parameters and Other Cohesion Parameters. CRC Press, 1990, 12
- **Zweifel Hans et al.** Plastics Additives Handbook. Hanser Gardner Publications, 2001, 813-882
- **Williams ; Ward.** *J. Polym. Sci., Polym. Let.,* 1968, vol. 6, 621
- **Wilde, L. ; Ryle, T.R. ; Knobeloch, D.C. ; Peat, I.R.** Determination of Branching Distributions in Polyethylene and Ethylene Copolymers. *J. Polym. Sci.,* 1992, vol. 20, 441-455
- **Randall, J.C.** *JMS-Rev. Macromol. Chem. Phys.,* 1989, vol. C29, 201-317